(19) Europäisches Patentamt
European Patent Office
Office européen des brevets

(11) **EP 2 903 287 A1**

(12) **EUROPEAN PATENT APPLICATION**
published in accordance with Art. 153(4) EPC

(43) Date of publication:
**05.08.2015 Bulletin 2015/32**

(21) Application number: **13841131.9**

(22) Date of filing: **20.09.2013**

(51) Int Cl.:
**H04N 19/70** (2014.01)       **H04N 19/30** (2014.01)

(86) International application number:
**PCT/JP2013/075444**

(87) International publication number:
**WO 2014/050731 (03.04.2014 Gazette 2014/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.09.2012 JP 2012218302**

(71) Applicant: **Sony Corporation
Tokyo 108-0075 (JP)**

(72) Inventor: **SATO Kazushi
Tokyo 108-0075 (JP)**

(74) Representative: **Malden, Nicholas
D Young & Co LLP
120 Holborn
London EC1N 2DY (GB)**

(54) **IMAGE PROCESSING DEVICE AND METHOD**

(57)    The present disclosure relates to an image processing apparatus and an image processing method capable of reducing decrease in coding efficiency.

Provided are a receiving unit that receives coded data created by coding an image containing multiple layers, and information on skip of an orthogonal transform process and shared by the multiple layers, and a decoding unit that decodes the coded data received by the receiving unit based on the information on skip of the orthogonal transform process received by the receiving unit. The present disclosure is applicable to an image processing apparatus, for example.

*FIG. 8*

**Description**

TECHNICAL FIELD

The present disclosure relates to an image processing apparatus and an image processing method, and more particularly to an image processing apparatus and an image processing method capable of reducing decrease in coding efficiency.

BACKGROUND ART

An apparatus which handles image information in digital form has been increasingly widespread in recent years, as a type which compresses and codes an image by adopting a coding system that compresses the image based on discrete cosine transform or other orthogonal transform and motion compensation by utilizing redundancy peculiar to image information, for the purpose of highly efficient information transmission and accumulation. This type of coding system includes MPEG (Moving Picture Experts Group), for example.

Particularly, MPEG2 (ISO/IEC 13818-2) is defined as a general-purpose image coding system, and regarded as a standard covering both interlace scan images and non-interlace scan images, and standard resolution images and high precision images. For example, MPEG2 is widely used at present for a wide variety of applications for both professional use and consumer use. By using MPEG2 compression system, a code amount (bit rate) of 4 through 8 Mbps is allocated to interlace scan images having $720 \times 480$ pixels with standard resolution, for example. In addition, by using MPEG2 compressing system, a code amount (bit rate) of 18 through 22 Mbps is allocated to interlace scan images having $1920 \times 1088$ pixels with high resolution, for example. Accordingly, high compression rate and preferable image quality are both achievable.

MPEG2 has been chiefly targeted to high image quality coding suited for broadcasting, and is not applicable to a code amount (bit rate) lower than MPEG1, i.e., a coding system having a higher compression rate. With wide spread of portable terminals, it is expected that the demands for this type of coding system will increase in the future. For meeting this expectation, MPEG4 coding system was also standardized. As an image coding system, this standard was approved as an international standard in December, 1998, as ISO/IEC 14496-2.

Moreover, in recent years, standardization of a standard called H.26L (ITU-T (International Telecommunication Union Telecommunication Standardization Sector) Q6/16 VCEG (Video Coding Expert Group)) has been promoted for the initial purpose of image coding for television conferences. When compared with conventional coding systems such as MPEG2 and MPEG4, H.26L requires a larger volume of calculations for coding and decoding. However, it is known that H.26L realizes higher coding efficiency. Moreover, standardization for realizing higher coding efficiency, as Joint Model of Enhanced-Compression Video Coding, has been achieved at present based on H.26L, while incorporating functions not supported by H.26L as well, as a part of activities of MPEG4.

According to the standardization schedule, an international standard was established in March, 2003 in the name of H.264 and MPEG-4 Part10 (Advanced Video Coding, hereinafter referred to as AVC).

Furthermore, as an extension of H. 264/AVC, standardization of coding tools necessary for business purposes such as RGB, 4 : 2 : 2, and 4 : 4 : 4, and standardization of FRExt (Fidelity Range Extension) including $8 \times 8$DCT defined in MPEG-2, and quantizing matrix as well were completed in February, 2005. Accordingly, a coding system capable of expressing even film noise contained in motion pictures in a preferable manner has been realized by using H.264/AVC, and is currently used for a wide variety of applications such as Blu-Ray Disc (registered trademark).

In recent years, however, there are increasing demands for still higher compression rate coding, such as compression of images having the number of pixels four times larger than the number of pixels of high-vision images, i.e., about $4000 \times 2000$ pixels, and distribution of high-vision images in the environment of a limited transmission capacity such as the Internet. Accordingly, examination for realizing further improvement of coding efficiency has been continued in VCEG as a subordinate of ITU-T.

At present, for the purpose of further improvement of coding efficiency for realizing higher efficiency than that of AVC, standardization of a coding system called HEVC (High Efficiency Video Coding) has been promoted by JCTVC (Joint Collaboration Team - Video Coding) as a joint standardization group of ITU-T and ISO/IEC. For HEVC standard, Committee draft as initial draft specifications was issued in February, 2012 (for example, see Non-Patent Document 1).

HEVC standard described in Non-Patent Document 1 adopts a method called "Intra Transform Skipping" (for example, see Non-Patent Document 2).

More specifically, a flag (fag) is initially transmitted to a PPS (Picture Parameter Set: picture parameter set) to indicate whether or not Transform Skip (transform skip, called orthogonal transform skip as well) is applicable to the sequence.

When the value is 1, TransformSkip is applicable to $4 \times 4$ orthogonal transform blocks (TUs).

A flag indicating on/off of TransformSkip is transmitted to each of the blocks.

No change is made for processing such as entropy coding, quantization, and loop filter for the blocks to which TransformSkip is applied.

This orthogonal transform skip (TransformSkip) particularly offers an effect of image quality improvement of screen content such as CG images and captions.

CITATION LIST

NON-PATENT DOCUMENT

Non-Patent Document 1: Benjamin Bross, Woo-Jin Han, Jens-Rainer Ohm, Gary J. Sullivan, Thomas Wiegand, "High efficiency video coding (HEVC) text specification draft 6", JCTVC-H1003 ver21, Joint Collaborative Team on Video Coding (JCT-VC)of ITU-T SG16 WP3 and ISO/IEC JTC1/SC29/WG117th Meeting: Geneva, CH, 21-30 November, 2011

Non-Patent Document 2: Cuiling Lan, Jizheng Xu, Gary J. Sullivan, Feng Wu, "Intra transform skipping", JCTVC-I0408, Joint Collaborative Team on Video Coding (JCT-VC)of ITU-T SG 16 WP 3 and ISO/IEC JTC 1/SC 29/WG 119th Meeting: Geneva, CH, 27 April - 7 May 2012

SUMMARY OF THE INVENTION

PROBLEMS TO BE SOLVED BY THE INVENTION

According to the conventional methods, however, no consideration is made for application of this orthogonal transform skip to scalable coding system. Accordingly, for application to scalable coding, information on orthogonal transform skip (Transform Skip) is required to be transmitted for each layer. In this case, the code amount increases with the necessity of transmission of information on the orthogonal transform skip for each layer, wherefore coding efficiency may decrease.

The present disclosure has been developed in consideration of these circumstances. It is therefore intended according to the present disclosure to provide a technology capable of reducing decrease in coding efficiency.

SOLUTIONS TO PROBLEMS

An aspect of the present disclosure is directed to an image processing apparatus including: a receiving unit that receives coded data created by coding an image that contains multiple layers, and information on skip of an orthogonal transform process and shared by the multiple layers; and a decoding unit that decodes the coded data received by the receiving unit based on the information on skip of the orthogonal transform process received by the receiving unit for each of the multiple layers.

The information on skip of the orthogonal transform process may be skip enabling information for designating whether to enable skip of the orthogonal transform process within a picture.

The information on the orthogonal transform process may be skip recognition information for designating whether to skip the orthogonal transform process.

In decoding a current block, the decoding unit may control execution of an inverse orthogonal transform process for the current block based on information on skip of the orthogonal transform process for a block contained in a layer different from the layer of the current block and corresponding to the current block.

When one block of a reference layer corresponds to multiple blocks of the current layer, the decoding unit may control execution of the inverse orthogonal transform process based on information on skip of the orthogonal transform process for the one block of the reference layer in decoding all the multiple blocks of the current layer.

When multiple blocks of a reference layer correspond to the current block, the decoding unit may obtain information on skip of the orthogonal transform process for the current block based on information on skip of the orthogonal transform process for each of the multiple blocks of the reference layer, and control execution of the inverse orthogonal transform process based on the obtained information on skip of the orthogonal transform process.

When a current layer refers to a different layer determined by the decoding unit as a layer to be referred to by the current layer, the decoding unit may control execution of an inverse orthogonal transform process for a current block based on information on skip of the orthogonal transform process for a block contained in the different layer and corresponding to the current block in decoding the current block.

The receiving unit may further receive information indicating a layer to be referred to by the current layer, and the decoding unit may determine a layer to be referred to by the current layer based on the information indicating a layer to be referred to by the current layer and received by the receiving unit.

The coded data may be scalable data created by scalable coding which exhibits spatial scalability where spatial resolutions are layered, temporal scalability where frame rates are layered, SNR scalability where signal to noise ratios are layered, bit depth scalability where bit depths are layered, chroma scalability where component formats of video signals are layered, or view scalability where views are layered.

An aspect of the present technology is directed to an image processing method of an image processing apparatus, wherein: the image processing apparatus receives coded data created by coding an image that contains multiple layers, and information on skip of an orthogonal transform process and shared by the multiple layers; and the image processing apparatus decodes the received coded data based on the received information on skip of the orthogonal transform process for each of the multiple layers.

Another aspect of the present technology is directed to an image processing apparatus including: a coding unit that codes an image containing multiple layers based on information on skip of an orthogonal transform process and shared by the multiple layers; and a transmitting unit that transmits coded data coded by the coding unit, and the information on skip of the orthogonal transform process.

The information on skip of the orthogonal transform process may be skip enabling information for designating whether to enable skip of the orthogonal transform process within a picture.

The information on the orthogonal transform process may be skip recognition information for designating whether to skip the orthogonal transform process.

In coding a current block, the coding unit may control execution of the orthogonal transform process for the current block based on information on skip of the orthogonal transform process for a block contained in a layer different from the layer of the current block and corresponding to the current block.

When one block of a reference layer corresponds to multiple blocks of the current layer, the coding unit may control execution of the orthogonal transform process based on information on skip of the orthogonal transform process for the one block of the reference layer in coding all the multiple blocks of the current layer.

When multiple blocks of a reference layer correspond to the current block, the coding unit may obtain information on skip of the orthogonal transform process for the current block based on information on skip of the orthogonal transform process for each of the multiple blocks of the reference layer, and control execution of the orthogonal transform process based on the obtained information on skip of the orthogonal transform process.

When a current layer refers to a different layer determined by the coding unit as a layer to be referred to by the current layer, the coding unit may control execution of the orthogonal transform process for a current block based on information on skip of the orthogonal transform process for a block contained in the different layer and corresponding to the current block in coding the current block.

The transmitting unit may further transmit information indicating the different layer determined by the coding unit as a layer to be referred to by the current layer.

The coding unit may code the image by scalable-coding which exhibits spatial scalability where spatial resolutions are layered, temporal scalability where frame rates are layered, SNR scalability where signal to noise ratios are layered, bit depth scalability where bit depths are layered, chroma scalability where component formats of video signals are layered, or view scalability where views are layered.

A further aspect of the present technology is directed to an image processing method of an image processing apparatus, wherein: the image processing apparatus codes an image containing multiple layers based on information on skip of an orthogonal transform process and shared by the multiple layers; and the image processing apparatus transmits coded data obtained by coding, and the information on skip of the orthogonal transform process.

According to an aspect of the present technology, coded data created by coding an image containing multiple layers, and information on skip of an orthogonal transform process and shared by the multiple layers are received. Then, the received coded data is decoded based on the received information on skip of the orthogonal transform process for each of the multiple layers.

According to another aspect of the present technology, an image containing multiple layers is coded based on information on skip of an orthogonal transform process and shared by the multiple layers. Then, coded data obtained by coding and the information on skip of the orthogonal transform process are transmitted.

EFFECTS OF THE INVENTION

According to the present technology, coding and decoding of an image is achievable. Particularly, decrease in coding efficiency is reducible.

BRIEF DESCRIPTION OF DRAWINGS

Fig. 1 is a view illustrating a configuration example of coding units.
Fig. 2 is a view illustrating an example of spatial scalable coding.

Fig. 3 is a view illustrating an example of temporal scalable coding.

Fig. 4 is a view illustrating an example of signal to noise ratio scalable coding.

Fig. 5 is a view illustrating an example of syntax of a picture parameter set.

Fig. 6 is a view illustrating an example of syntax of residual coding.

Fig. 7 is a view illustrating an example of syntax of a video parameter set.

Fig. 8 is a view illustrating an example of correlations of TUs between layers.

Fig. 9 is a view illustrating another example of correlations of TUs between layers.

Fig. 10 is a view illustrating a further example of correlations of TUs between layers.

Fig. 11 is a view illustrating another example of syntax of the video parameter set.

Fig. 12 is a view illustrating another example of syntax of the picture parameter set.

Fig. 13 is a view illustrating another example of syntax of residual coding.

Fig. 14 is a block diagram illustrating an example of a general configuration of a scalable coding device.

Fig. 15 is a block diagram illustrating an example of a general configuration of a base layer image coding unit.

Fig. 16 is a block diagram illustrating an example of a general configuration of an enhancement layer image coding unit.

Fig. 17 is a block diagram illustrating an example of general configurations of an orthogonal transform skip unit and a base layer orthogonal transform skip buffer.

Fig. 18 is a flowchart describing a flow example of a coding process.

Fig. 19 is a flowchart describing a flow example of a base layer coding process.

Fig. 20 is a flowchart describing a flow example of a base layer orthogonal transform skip control process.

Fig. 21 is a flowchart describing a flow example of an orthogonal transform process.

Fig. 22 is a flowchart describing a flow example of an enhancement layer coding process.

Fig. 23 is a flowchart describing a flow example of an enhancement layer orthogonal transform skip control process.

Fig. 24 is a block diagram illustrating an example of a general configuration of a scalable decoding device.

Fig. 25 is a block diagram illustrating an example of a general configuration of a base layer image decoding unit.

Fig. 26 is a block diagram illustrating an example of a general configuration of an enhancement layer image decoding unit.

Fig. 27 is a block diagram illustrating an example of general configurations of an inverse orthogonal transform skip unit and a base layer orthogonal transform skip buffer.

Fig. 28 is a flowchart describing a flow example of a decoding process.

Fig. 29 is a flowchart describing a flow example of a base layer decoding process.

Fig. 30 is a flowchart describing a flow example of a base layer inverse orthogonal transform skip control process.

Fig. 31 is a flowchart describing a flow example of an inverse orthogonal transform process.

Fig. 32 is a flowchart describing a flow example of an enhancement layer decoding process.

Fig. 33 is a flowchart describing a flow example of an enhancement layer inverse orthogonal transform skip control process.

Fig. 34 is a view illustrating an example of a layered image coding system.

Fig. 35 is a view illustrating an example of a multi-view image coding system.

Fig. 36 is a block diagram illustrating an example of a general configuration of a computer.

Fig. 37 is a block diagram illustrating an example of a general configuration of a television device.

Fig. 38 is a block diagram illustrating an example of a general configuration of a cellular phone.

Fig. 39 is a block diagram illustrating an example of a general configuration of a recording/reproducing device.

Fig. 40 is a block diagram illustrating an example of a general configuration of an imaging device.

Fig. 41 is a block diagram illustrating an example of utilization of scalable coding.

Fig. 42 is a block diagram illustrating another example of utilization of scalable coding.

Fig. 43 is a block diagram illustrating a further example of utilization of scalable coding.


MODES FOR CARRYING OUT THE INVENTION


Modes for carrying out the present disclosure (hereinafter referred to as embodiments) are described hereinbelow. The description will be presented in the following order.


0. Outline

1. First Embodiment (Image Coding Apparatus)

2. Second Embodiment (Image Decoding Apparatus)

3. Others

4. Third Embodiment (Computer)

5. Application Examples

6. Application Examples of Scalable Coding

<0. Outline>

[Coding System]

Discussed hereinafter is an example according to the present technology applied to image coding and decoding in HEVC (High Efficiency Video Coding) system.

[Coding Unit]

According to AVC (Advanced Video Coding) system, a layered structure constituted by macroblocks and sub-macroblocks is defined. However, the macroblocks having 16 pixels × 16 pixels for each are not the optimum blocks for a large image frame such as UHD (Ultra High Definition; 4000 pixels × 2000 pixels) corresponding to a target of a next generation coding system.

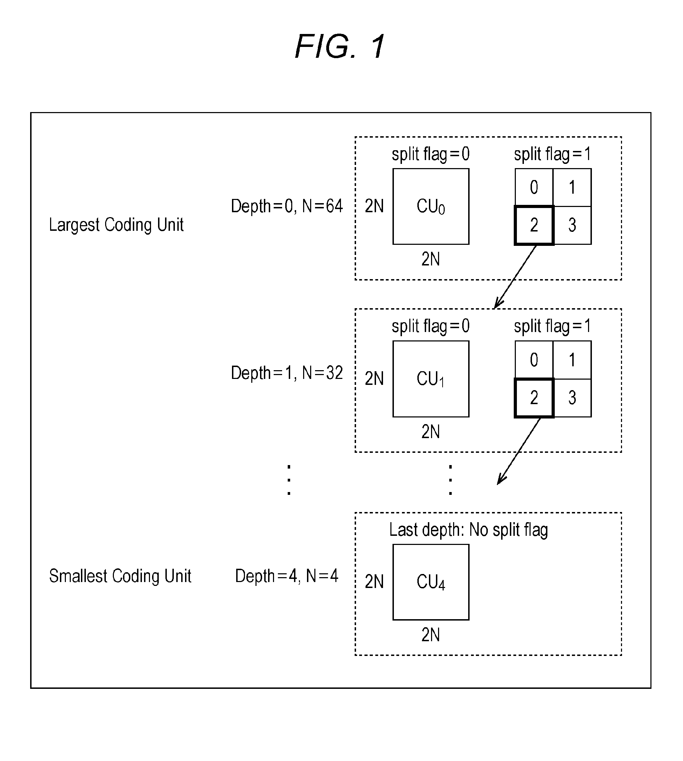

On the other hand, HEVC system defines coding units (CUs (Coding Units)) as illustrated in Fig. 1.

Each of the CUs is called Coding Tree Block (CTB) as well, and corresponds to a partial area of an image provided in units of picture and having a function similar to that of the macroblocks in AVC system. The size of the latter is fixed to 16 × 16 pixels, while the size of the former is not fixed but designated in image compression information for each sequence.

For example, in a sequence parameter set (SPS (Sequence Parameter Set)) contained in coded data corresponding to output, the largest size of CU (LCU (Largest Coding Unit)) and the smallest size of CU (SCU (Smallest Coding Unit)) are defined.

For each of LCUs, division into smaller size CUs is achievable by setting split-flag = 1 without falling below the size of SCU. According to the example illustrated in Fig. 1, the size of LCU is set to 128, and the maximum layer depth is set to 5. A CU of 2N × 2N size is divided into CUs of N × N size for each corresponding to one layer below when the value of split_flag is "1".

The CU is further divided into prediction units (Prediction Unit (PUs)) each corresponding to an area of a unit for processing of intra or inter prediction (a partial area of an image in units of picture), and also divided into transform units (Transform Units (TUs)) each corresponding to an area of a unit for processing of orthogonal transform (a partial area of an image in units of picture). At present, orthogonal transforms for 16 x 16 and 32 × 32 are usable in HEVC system as well as orthogonal transforms for 4 × 4 and 8 × 8.

In case of a coding system which defines CUs and executes various types of processes in units of CU, such as HEVC system discussed herein, a macroblock in AVC system may be considered as a part corresponding to an LCU, and a block (sub block) in AVC system may be considered as a part corresponding to a CU. In addition, a motion compensation block in AVC system may be considered as a part corresponding to a PU. However, CUs have a layered structure, wherefore the size of LCU at the uppermost layer of the structure, such as 128 × 128 pixels, is generally set to a size larger than the size of macroblock in AVC system.

Accordingly, it is assumed hereinafter that an LCU contains a macroblock in AVC system as well, and that a CU contains a block (sub block) in AVC system as well. In this case, a "block" as a term used in the following explanation represents an arbitrary partial area within a picture, and the size, shape, characteristics and the like of the block are not particularly limited. In other words, the "block" includes an arbitrary area (unit for processing) such as TU, PU, SCU, CU, LCU, sub block, macroblock, and slice. Needless to say, the "block" similarly includes partial areas (units for processing) other than these areas. When limitations to the size, units for processing and the like are needed, explanation concerning this matter will be given in an appropriate manner.

[Mode Selection]

For achieving higher coding efficiency in AVC and HEVC coding systems, selection of an appropriate prediction mode is essential.

Examples of this selection method include a method implemented in reference software (published in (http://iphome.hhi.de/suehring/tml/index.htm) of H.264/MPEG-4 AVC called JM (Joint Model).

According to JM, two types of mode determining methods of High Complexity Mode and Low Complexity Mode are selectable as will be detailed below. Both the methods calculate cost function values for corresponding prediction modes (Modes), select a prediction mode where the cost function value becomes the minimum, and determine the selected prediction mode as the optimum mode for the block or macroblock.

The cost function in High Complexity Mode is expressed as in the following equation (1)

$$Cost(Mode \in \Omega) = D + \lambda*R ... (1)$$

In this equation, Q is a universal set of candidate modes for coding the block or macroblock, D is a difference energy between a decoded image and an input image at the time of coding in the prediction mode. In addition, λ is a Lagrange undetermined multiplier given as a function of a quantization parameter. Furthermore, R is a total code amount containing an orthogonal transform coefficient at the time of coding in the mode.

In this case, for coding in High Complexity Mode, a temporary encoding process needs to be executed in all the candidate modes to calculate the foregoing parameters D and R, wherefore a larger calculation volume is required.

The cost function in Low Complexity Mode is expressed as in the following equation (2).

$$Cost(Mode \in \Omega) = D + QP2Quant(QP) * HeaderBit ... (2)$$

In this equation, D corresponds to difference energy between a predicted image and an input image unlike the case of High Complexity Mode. In this case, QP2Quant(QP) is given as a function of a quantization parameter QP, while HeaderBit is a code amount of information belonging to Header such as a motion vector and a mode and not containing an orthogonal transform coefficient.

In Low Complexity Mode, therefore, a prediction process needs to be executed for each of the candidate modes, but a coding process is not needed for these modes due to elimination of the need for a decoded image. Accordingly, reduction of the calculation volume is allowed for Low Complexity Mode in comparison with High Complexity Mode.

[Scalable Coding]

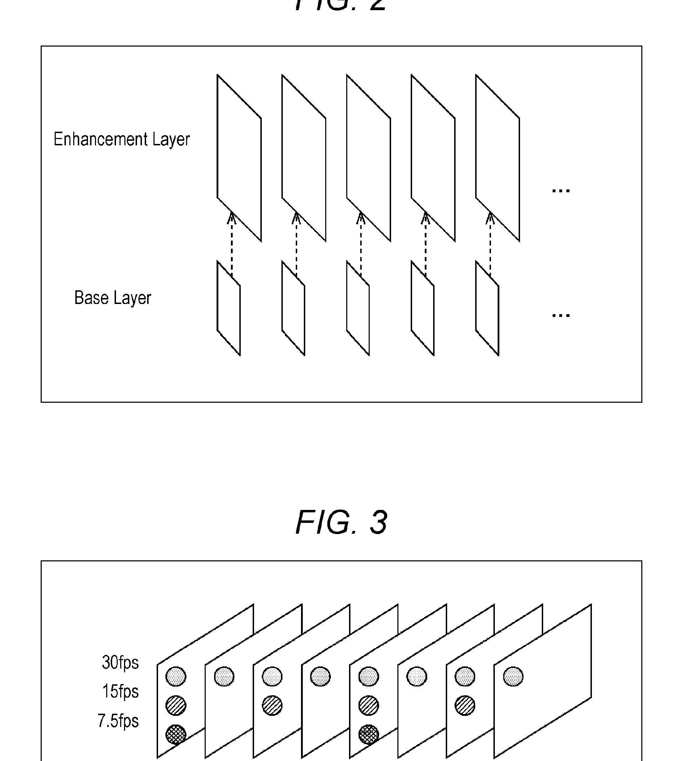

The conventional image coding systems such as MPEG2 and AVC have a function of scalability as illustrated in Figs. 2 through 4. Scalable coding (scalable coding) is a system which divides an image into multiple layers (layering), and codes each layer.

In image layering, one image is divided into multiple layers (layers) on the basis of predetermined parameters. Basically, each layer is constituted by difference data for reduction of redundancy. For example, when one image is layered into two layers of a base layer and an enhancement layer, an image having lower quality than the quality of the original image is obtained based only on the data of the base layer. In this case, the original image (i.e., high-quality image) is obtained by synthesizing the data of the base layer and the data of the enhancement layer.

By image layering in this manner, images having a wide variety of qualities can be easily obtained in accordance with situations. For example, for a terminal having lower processing capability such as a cellular phone, image compression information only on a base layer (base layer) is transmitted to reproduce a dynamic image having lower spatio-temporal resolution, or lower image quality. On the other hand, for a terminal having high processing capability such as a television set and a personal computer, image compression information on an enhancement layer is transmitted in addition to the base layer to reproduce a dynamic image having higher spatio-temporal resolution, or higher image quality. Accordingly, transmission of image compression information from a server is achievable in accordance with the capability of a terminal or a network without the necessity of executing transcode processing.

Examples of parameters capable of providing this scalability function include spatial resolution (spatial scalability) as illustrated in Fig. 2. In case of the spatial scalability, resolution differs for each layer. More specifically, each picture is divided into two layers constituted by a base layer having spatially lower resolution than that of the original image, and an enhancement layer synthesized with the image of the base layer to produce the original image (original spatial resolution) as illustrated in Fig. 2. Needless to say, the number of the layers is presented only by way of example, and may be arbitrarily determined in layering.

Another example of parameters providing this scalability function is temporal scalability as illustrated in Fig. 3. In case of the temporal scalability, the frame rate differs for each layer. In this case, division is made into layers having different frame rates as illustrated in Fig. 3. When a layer having a high frame rate is added to a layer having a low frame rate, a dynamic image having a higher frame rate is formed. When all the layers are added, the original dynamic image (original frame rate) is obtained. The number of layers is presented only by way of example, and may be arbitrarily determined in layering.

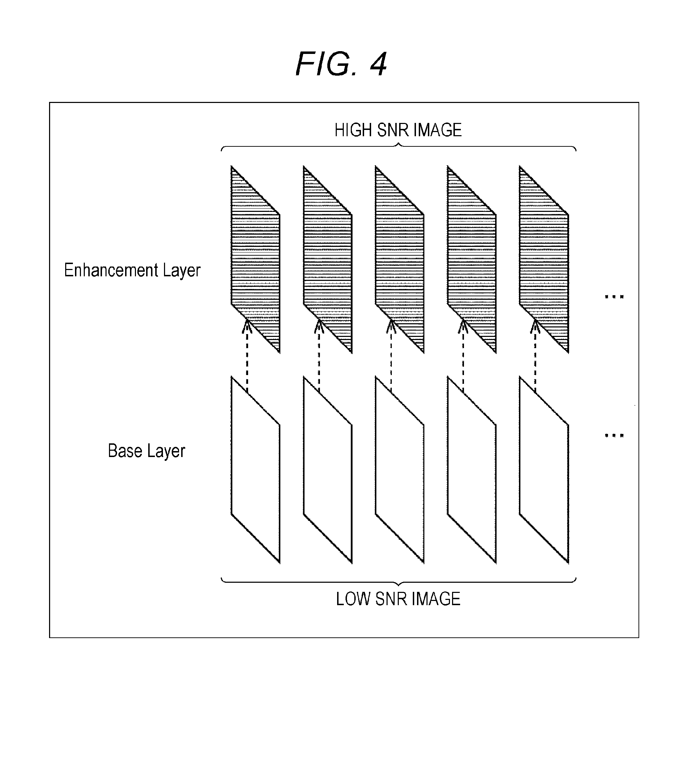

A further example of parameters providing this scalability function is a signal to noise ratio (SNR) (SNR scalability). In case of the SNR scalability, the SN ratio differs for each layer. More specifically, each picture is divided into two layers constituted by a base layer having lower SNR than that of the original image, and an enhancement layer synthesized with the image of the base layer to produce the original image (original SNR) as illustrated in Fig. 4. More specifically, information on images having low PSNR is transmitted while contained in base layer (base layer) image compression information. In this case, reconstitution of a high PSNR image is achievable by adding enhancement layer image compression information to the base layer image compression information. Needless to say, the number of the layers is presented only by way of example, and may be arbitrarily determined in layering.

Obviously, parameters providing scalability function may be other than the foregoing parameters. One of the examples is bit-depth scalability which obtains 10-bit (bit) images by adding an enhancement layer to a base layer constituted by 8-bit images.

Another example is chroma scalability which obtains component images in 4 : 2 : 2 format by adding an enhancement layer to a base layer constituted by component images in 4 : 2 : 0 format.

[Orthogonal Transform Skip]

HEVC standard adopts a method of "Intra Transform Skipping" proposed in Non-Patent Document 2. The orthogonal transform skip (Transform Skip) is a method which omits (skips) an orthogonal transform process.

In general, the orthogonal transform process is executed for image data (difference image data) for each block to transform information in a spatial area within each block into information in a frequency area. By this method, coefficients within each block are concentrated at a low area, wherefore deviation can increase. As a result, coding efficiency improves.

However, this deviation may be difficult to produce depending on patterns within each block. In case of artificial images such as CG images and captions, for example, gradations or intensive edges are easily produced in comparison with natural images. Accordingly, high-area components are easily generated, wherefore deviation is difficult to produce even after execution of the orthogonal transform process. For this type of blocks, skip of the orthogonal transform process is allowed so as to further improve the coding efficiency.

In the following description, skip (omission) of the orthogonal transform process is called orthogonal transform skip (Transform Skip).

According to this method, a block (TU) subjected to orthogonal transform skip (Transform Skip) at the time of coding is required to skip (omit) inverse orthogonal transform at the time of decoding as well. Accordingly, information on orthogonal transform skip (Transform Skip) is created for a current block on the coding side, and transmitted to the decoding side. On the decoding side, whether or not to skip inverse orthogonal transform is controlled based on this information on orthogonal transform skip (Transform Skip).

The information on skip of the orthogonal transform process includes skip enabling information (transform_skip_enable_flag) indicating whether orthogonal transform skip (Transform Skip) is enabled or disabled for a predetermined range, and skip recognition information (transform_skip_flag) indicating whether or not orthogonal transform skip has been applied to a current block, for example.

The skip enabling information (transform_skip_enable_flag) is information indicating whether or not orthogonal transform skip (Transform Skip) is enabled or disabled for each range wider than a unit of the orthogonal transform process. For example, when the skip enabling information (transform_skip_enable_flag) is false (such as "0"), orthogonal transform skip (Transform Skip) is prohibited (orthogonal transform is always executed) for blocks within a range corresponding to this value. Accordingly, when the value of the skip enabling information (transform_skip_enable_flag) is false (such as "0"), an inverse orthogonal transform process is always executed for blocks within a range corresponding to this value on the decoding side.

On the other hand, when the value of the skip enabling information (transform_skip_enable_flag) is true (such as "1"), orthogonal transform skip (Transform Skip) is enabled (orthogonal transform may be skipped) for blocks within a range corresponding to this value.

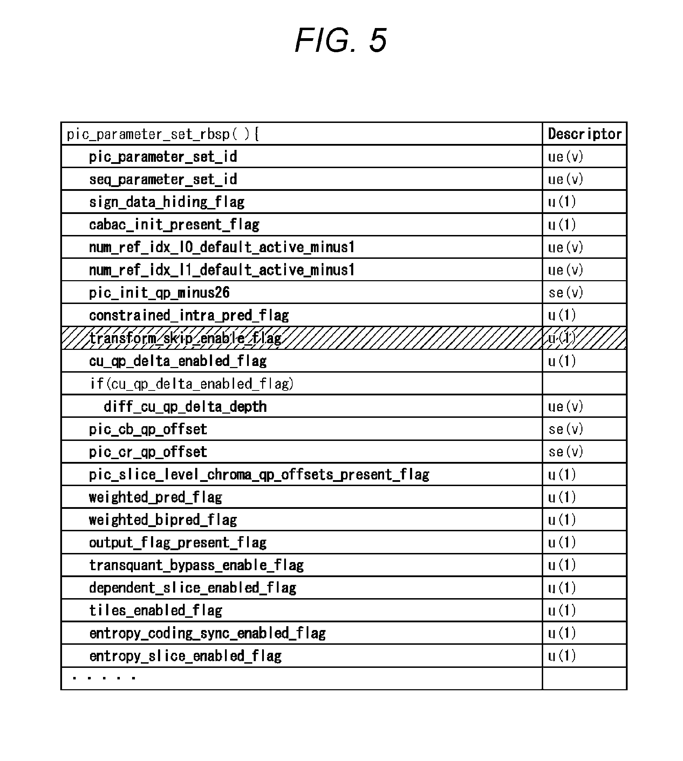

The skip enabling information (transform_skip_enable_flag) is set by a user, for example. The skip enabling information (transform_skip_enable_flag) is set for each picture, for example. More specifically, the skip enabling information (transform_skip_enable_flag) is transmitted in a picture parameter set (PPS) as illustrated in a syntax example of a picture parameter set (PPS (Picture Parameter Set)) in Fig. 5.

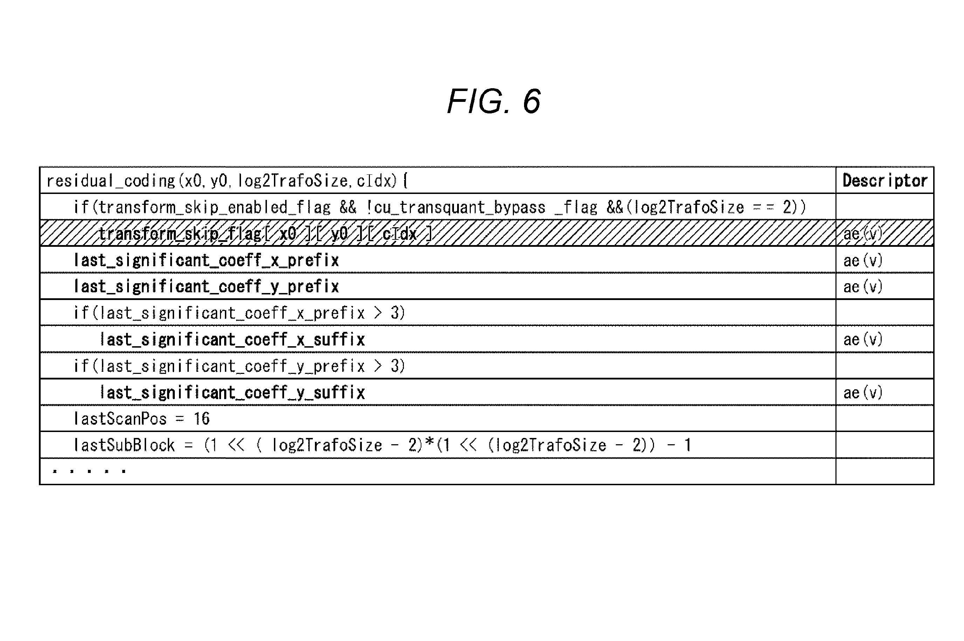

When the value of the skip enabling information (transform_skip_enable_flag) is true (such as "1"), orthogonal transform skip (Transform Skip) may be applied to a block (TU) of a predetermined size (such as $4 \times 4$ size). In this case, therefore, skip recognition information (transform_skip_flag) is transmitted for each block (TU) of $4 \times 4$ size as illustrated in a syntax example of residual coding in Fig. 6.

The skip recognition information (transform_skip_flag) is information indicating whether or not orthogonal transform skip has been executed at the time of coding for a current block (TU) as a processing target. When this value is false (such as "0"), orthogonal transform skip (Transform Skip) has not been executed (orthogonal transform has been executed) for the current block. Accordingly, when the value of the skip recognition information (transform_skip_flag) is false (such as "0"), the inverse orthogonal transform process is executed for the current block on the decoding side.

On the contrary, when this value is true (such as "1"), orthogonal transform skip (Transform Skip) is executed for the current block. Accordingly, when the value of the skip recognition information (transform_skip_flag) is true (such as "1"), the inverse orthogonal transform process is skipped (omitted) for the current block on the decoding side.

[Video Parameter Set]

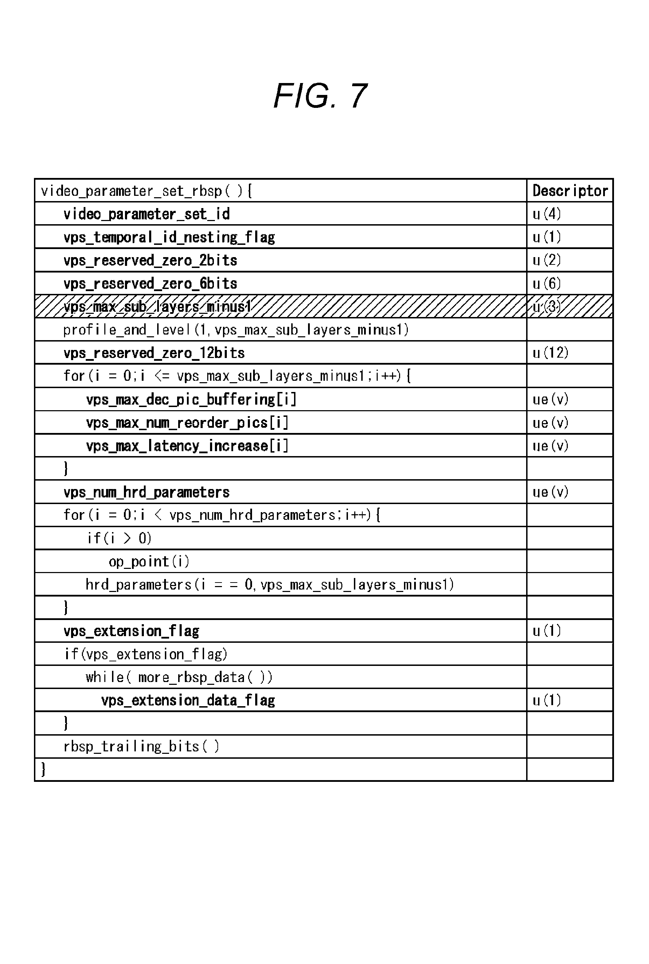

HEVC defines a video parameter set (VPS (Video Parameter Set)) as illustrated in Fig. 7 in addition to a sequence parameter set (SPS (Sequence Parameter Set)), and a picture parameter set (PPS).

The video parameter set (VPS) is created for the whole coded data subjected to scalable coding. The video parameter set (VPS) stores information on all of layers.

The sequence parameter set (SPS) is created for each layer. The sequence parameter set (SPS) stores information on the layer.

The picture parameter set (PPS) is created for each picture of the respective layers. The picture parameter set stores information on the picture of the layer.

[Orthogonal Transform Skip of Scalable Coding]

According to the conventional methods, however, application of orthogonal transform skip to a scalable coding system has not been considered. Accordingly, for application to scalable coding, information on orthogonal transform skip (Transform Skip) is required to be transmitted for each layer. In this case, the code amount increases with the necessity of transmission of information on orthogonal transform skip for each layer, wherefore coding efficiency may decrease.

For reducing decrease in coding efficiency, information on skip of the orthogonal transform process (such as transform_skip_enable_flag and transform_skip_flag) is shared by multiple layers of image data subjected scalable coding (scalable coding) discussed above.

In the following description, a layer forming an image only by the self-layer independently of another layer is called a base layer, while a layer forming an image by synthesis with another layer is called an enhancement layer. The number of layers of coded data layered by scalable coding may be arbitrarily determined. It is assumed in the following description that each layer is determined as either a base layer or an enhancement layer, and that any one of base layers is determined as a reference for each enhancement layer.

[Orthogonal Transform Skip of Base Layer]

Coding a base layer is achievable without using another layer. In other words, coding a base layer is executed basically in the same manner as the method of the conventional coding of one-layer image data. More specifically, in coding a base layer, information on skip of the orthogonal transform process (transform_skip_enable_flag and transform_skip_flag) is appropriately created, and transmitted to the decoding side. For example, skip enabling information (transform_skip_enable_flag) is set for each picture, and transmitted in a picture parameter set as discussed with reference to Fig. 5. In addition, skip recognition information (transform_skip_flag) is set for each block (TU) of $4 \times 4$ size, for example, and transmitted for each block (TU) of $4 \times 4$ size as discussed with reference to Fig. 6.

Accordingly, decoding a base layer is also executed basically in the same manner as the method of the conventional coding of a one-layer image data. More specifically, decoding a base layer is executed based on information on skip of the orthogonal transform process created for the data of the corresponding base layer on the coding side and transmitted. For example, whether or not to enable skip of the inverse orthogonal transform process for a current picture as a processing target is controlled based on the value of skip enabling information (transform_skip_enable_flag) transmitted in the picture parameter set of the current base layer (self-base layer) corresponding to the processing target. In addition, whether or not to skip the inverse orthogonal transform process for a current block (current TU) of $4 \times 4$ size as a processing target is controlled based on the value of skip recognition information (transform_skip_flag) transmitted for the current block.

[Orthogonal Transform Skip of Enhancement Layer]

On the other hand, coding an enhancement layer is executed basically in the same manner as in the case of a base layer. However, information on a base layer is referred to as information on skip of the orthogonal transform process. For example, whether or not to enable skip of the orthogonal transform process for a current picture is controlled based on the value of skip enabling information (transform_skip_enable_flag) for a base layer corresponding to a current enhancement layer as a processing target.

In other words, skip enabling information (transform_skip_enable_flag) is shared by both a base layer and an enhancement layer. Accordingly, skip enabling information (transform_skip_enable_flag) on an enhancement layer is not transmitted. More specifically, in decoding an enhancement layer, whether or not to enable skip of the inverse orthogonal transform process for a current picture is controlled based on the value of skip enabling information (transform_skip_enable_flag) transmitted in the picture parameter set of the corresponding base layer.

For example, when the value of the skip enabling information (transform_skip_enable_flag) of a base layer is false (such as "0"), skip of inverse orthogonal transform is not applied (enabled) not only to the base layer but also to the enhancement layer. On the contrary, when the value of the skip enabling information (transform_skip_enable_flag) of a base layer is true (such as "1"), skip of inverse orthogonal transform may be applied (enabled) not only to the base layer but also to the enhancement layer.

In addition, whether or not to skip the orthogonal transform process for a current block (current TU) in coding an enhancement layer, for example, is controlled based on the value of skip recognition information (transform_skip_flag) on a base layer corresponding to the current enhancement layer.

In other words, skip recognition information (transform_skip_flag) is shared by both a base layer and an enhancement layer. Accordingly, skip recognition information (transform_skip_flag) on an enhancement layer is not transmitted. More specifically, whether or not to skip the inverse orthogonal transform process for the current block is controlled based on the value of skip recognition information (transform_skip_flag) transmitted for a block (TU) of the corresponding base layer associated with the current block.

For example, when the value of skip recognition information (transform_skip_flag) of a block ($4 \times 4$ size) of a base layer corresponding to a current block is false (such as "0") in decoding of an enhancement layer, skip of inverse orthogonal transform is not applied (i.e., inverse orthogonal transform process is executed) not only to the base layer but also to the enhancement layer. On the contrary, when the value of skip recognition information (transform_skip_flag) of a block ($4 \times 4$ size) of a base layer corresponding to a current block is true (such as "1") in decoding of an enhancement layer, skip of inverse orthogonal transform may be applied (inverse orthogonal transform is skipped) not only to the base layer but also to the enhancement layer.

[In Case of One-to-one Correspondence]

When one block of a base layer corresponds to a current block of an enhancement layer, the following processing is executed. In case of SNR scalability or bit depth scalability, for example, a single block (TU) of a base layer (Baselayer) corresponds to a single block (TU) of an enhancement layer (Enhancementlayer) for both luminance signals and chrominance signals.

[In Case of Many-to-one Correspondence]

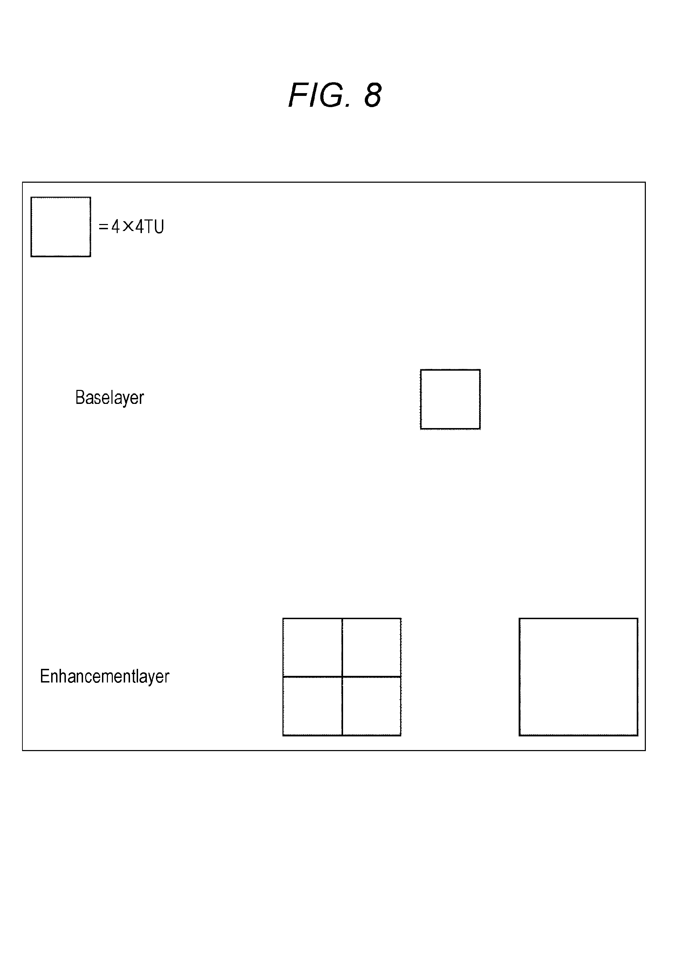

On the other hand, in case of 1:2 spatial scalability at a ratio of 1 : 2 for a resolution ratio of a base layer to an enhancement layer (i.e., when a single block of a base layer corresponds to multiple blocks of an enhancement layer), a single block (TU) of $4 \times 4$ size of a base layer (Baselayer) corresponds to four blocks (TUs) of $4 \times 4$ size, or a single block (TU) of $8 \times 8$ size of an enhancement layer (Enhancementlayer) as illustrated in Fig. 8.

Orthogonal transform skip is not applied to a single block (TU) of $8 \times 8$ size.

On the other hand, when a single block (TU) of $4 \times 4$ size of a base layer corresponds to four blocks (TUs) of $4 \times 4$ size of an enhancement layer, the value of skip recognition information (transform_skip_flag) of the corresponding block of the base layer is applied to each of the four blocks of the enhancement layer.

More specifically, when the value of skip recognition information (transform_skip_flag) of a block of a base layer is false (such as "0"), for example, the orthogonal transform process (inverse orthogonal transform process) is executed (not skipped) for each of four blocks of an enhancement layer associated with the corresponding block.

On the contrary, when the value of skip recognition information (transform_skip_flag) of a block of a base layer is true (such as "1"), for example, the orthogonal transform process (inverse orthogonal transform process) is skipped (not executed) for each of four blocks of an enhancement layer associated with the corresponding block.

In other words, when one block of a reference layer (a base layer in the foregoing example) for reference corresponds to multiple blocks of a current layer as a processing target (an enhancement layer in the foregoing example), whether or not to execute the orthogonal transform process (or inverse orthogonal transform process) at the time of execution of all processes (decoding and coding) for the multiple blocks of the current layer is controlled by utilizing information on skip of the orthogonal transform process for the one block of the reference layer.

[In Case of One-to-Noninteger or One-to-Many Correspondence]

The application range of the present technology is not limited to these examples. For example, the present technology is applicable to spatial scalability at an arbitrary ratio, such as 1 : 1.5.

When resolutions of a base layer and an enhancement layer are $1280 \times 720$, $1920 \times 1080$, respectively, for example, the ratio becomes 1 : 1.5. Accordingly, the block of the base layer corresponding to the single block of the enhancement layer is not a single block (i.e., one-to-noninteger or one-to-many correspondence).

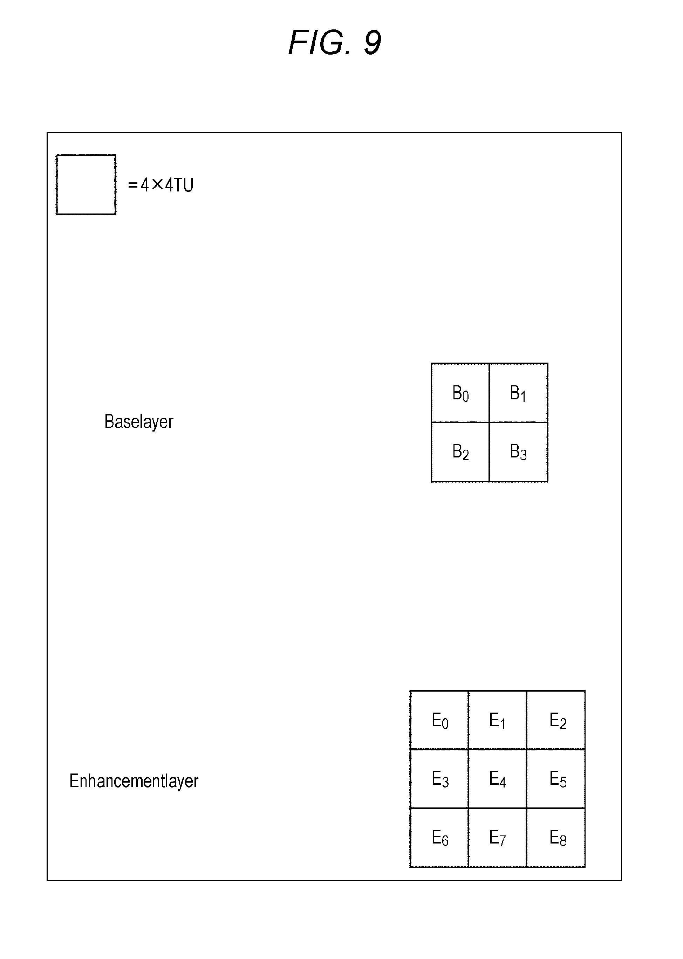

In this case, it is assumed herein that blocks (TUs) B0, B1, B2, and B3 of $4 \times 4$ size for each in a base layer correspond to blocks (TUs) E0, E1, E2, E3, E4, E5, E6, E7, E8, and E9 of 4 × 4 size for each in an enhancement layer as illustrated in Fig. 9.

According to this example, skip recognition information (transform_skip_flag) is shared by B0 and E0, by B1 and E2, by B2 and E6, and by B3 and E8, respectively. For example, the value of skip recognition information (transform_skip_flag) on B0 is applied to E0, and skip recognition information (transform_skip_flag) on E0 is not transmitted. Similarly, the value of skip recognition information (transform_skip_flag) on B1 is applied to E2, skip recognition information (transform_skip_flag) on B2 is applied to E6, and skip recognition information (transform_skip_flag) on B3 is applied to E8. Skip recognition information (transform_skip_flag) on E2, E6, and E8 for each is not transmitted.

It is also assumed herein that blocks (TUs) E1, E3, E5, and E7 of 4 × 4 size for each in an enhancement layer correspond to blocks (TUs) B0 and B1, B0 and B2, B1 and B3, and B2 and B3 of 4 × 4 size for each in a base layer, respectively. According to this example, skip recognition information (transform_skip_flag) is shared by a pair of B0 and B1 and E1, by a pair of B0 and B2 and E3, by a pair of B1 and B3 and E5, and by a pair of B2 and B3 and E7, respectively.

For example, values based on both skip recognition information (transform_skip_flag) on B0 and skip recognition information (transform_skip_flag) on B1 are applied to E1. More specifically, when at least either one of the values of the skip recognition information (transform_skip_flag) on B0 and B1 is true (such as "1"), skip of orthogonal transform (or inverse orthogonal transform) is applied to E1, for example.

In addition, values based on both skip recognition information (transform_skip_flag) on B0 and skip recognition information (transform_skip_flag) on B2 are applied to E3, for example. More specifically, when at least either one of the values of the skip recognition information (transform_skip_flag) on B0 and B2 is true (such as "1"), skip of orthogonal transform (or inverse orthogonal transform) is applied to E3, for example.

In addition, values based on both skip recognition information (transform_skip_flag) on B1 and skip recognition information (transform_skip_flag) on B3 are applied to E5, for example. More specifically, when at least either one of the values of the skip recognition information (transform_skip_flag) on B1 and B3 is true (such as "1"), skip of orthogonal transform (or inverse orthogonal transform) is applied to E5, for example.

In addition, values based on both skip recognition information (transform_skip_flag) on B2 and skip recognition information (transform_skip_flag) on B3 are applied to E7, for example. More specifically, when at least either one of the values of the skip recognition information (transform_skip_flag) on B2 and B3 is true (such as "1"), skip of orthogonal transform (or inverse orthogonal transform) is applied to E7, for example.

Skip recognition information (transform_skip_flag) on E1, E3, E5, and E7 for each is not transmitted.

It is also assumed herein that E4 corresponding to a block (TU) of 4 × 4 size in the enhancement layer corresponds to B0 through B3 as blocks (TUs) of 4 × 4 size for each in the base layer. In this case, skip recognition information (transform_skip_flag) is shared by the blocks of B0 through B3 and E4.

For example, values based on all of the skip recognition information (transform_skip_flag) on B0 through B3 are applied to E4. More specifically, when at least any one of the values of the skip recognition information (transform_skip_flag) on B0 through B3 is true, or when all of these values are true (such as "1"), skip of orthogonal transform (or inverse orthogonal transform) is applied to E4. Skip recognition information (transform_skip_flag) on E4 is not transmitted.

As discussed above, skip recognition information on one block of an enhancement layer may be obtained from skip recognition information of multiple blocks of a base layer by using a predetermined method. The method for obtaining this information is arbitrarily determined, and not limited to the method of the foregoing example. For example, skip recognition information of one block of an enhancement layer may be calculated based on values on skip recognition information of multiple blocks of a base layer by performing predetermined calculation. In addition, multiple methods may be combined as discussed in the foregoing examples to allow sharing of information on orthogonal transform skip based on correlations at a wider variety of block ratios for reduction of decrease in coding efficiency.

As obvious from the description herein, when multiple blocks of a reference layer correspond to a current block, information on skip of the orthogonal transform process for the current block may be obtained by using information on skip of the orthogonal transform process for each of the multiple blocks of the reference layer. Then, whether or not to execute the orthogonal transform process or the inverse orthogonal transform process may be controlled based on the information on skip of orthogonal transform thus obtained.

[Orthogonal Transform Skip of Chroma Format Scalability]

The same method is applicable to chrominance signals to achieve chroma format scalability.

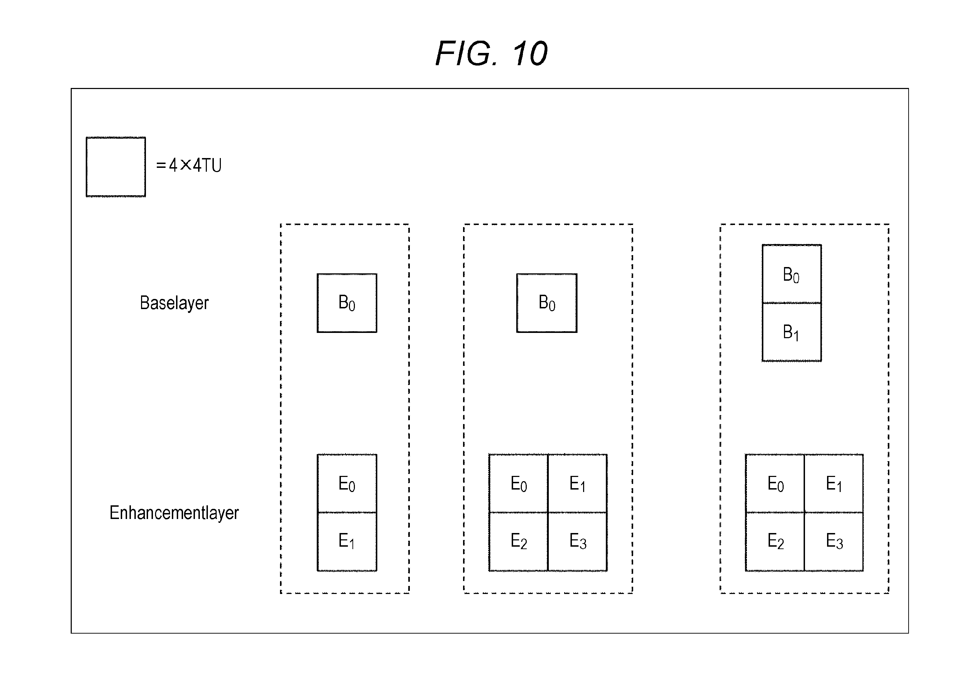

In case of an example illustrated at the left end in Fig. 10, for example, the component format of a base layer is 4 : 2 : 0, while the component format of an enhancement layer is 4 : 2 : 2. In this case, it is assumed herein that B0 as a block (TU) of 4 × 4 size in the base layer corresponds to E0 and E1 as blocks (TUs) of 4 × 4 size for each in the enhancement layer. According to this example, therefore, skip of the orthogonal transform process (inverse orthogonal transform process) for E0 and E1 is controlled based on skip recognition information (transform_skip_flag) on B0. In this case, skip recognition information (transform_skip_flag) on E0 and E1 for each is not transmitted.

In case of an example illustrated at the center in Fig. 10, the component format of a base layer is 4 : 2 : 0, while the component format of an enhancement layer is 4 : 4 : 4. In this case, it is assumed that B0 as a block (TU) of $4 \times 4$ size in the base layer corresponds to E0, E1, E2, and E3 as blocks (TUs) of $4 \times 4$ size for each in the enhancement layer. According to this example, therefore, skip of the orthogonal transform process (inverse orthogonal transform process) for E0 through E3 is controlled based on skip recognition information (transform_skip_flag) on B0. In this case, skip recognition information (transform_skip_flag) on E0 through E3 for each is not transmitted.

In case of an example illustrated at the right end in Fig. 10, the component format of a base layer is 4 : 2 : 0, while the component format of an enhancement layer is 4 : 4 : 4. In this case, it is assumed that B0 as a block (TU) of $4 \times 4$ size in the base layer corresponds to E0 and E1 as blocks (TUs) of $4 \times 4$ size for each in the enhancement layer, and that B1 as a block (TU) of $4 \times 4$ size in the base layer corresponds to E2 and E3 (TUs) as blocks of $4 \times 4$ size for each in the enhancement layer. According to this example, therefore, skip of the orthogonal transform process (inverse orthogonal transform process) for E0 and E1 is controlled based on skip recognition information (transform_skip_flag) on B0, and skip of the orthogonal transform process (inverse orthogonal transform process) for E2 and E3 is controlled based on skip recognition information (transform_skip_flag) on B1. In this case, skip recognition information (transform_skip_flag) on E0 through E3 for each is not transmitted.

As described above, the present technology is also applicable to chroma format scalability so as to allow sharing of information on orthogonal transform skip by respective layers for reduction of decrease in coding efficiency.

[Syntax]

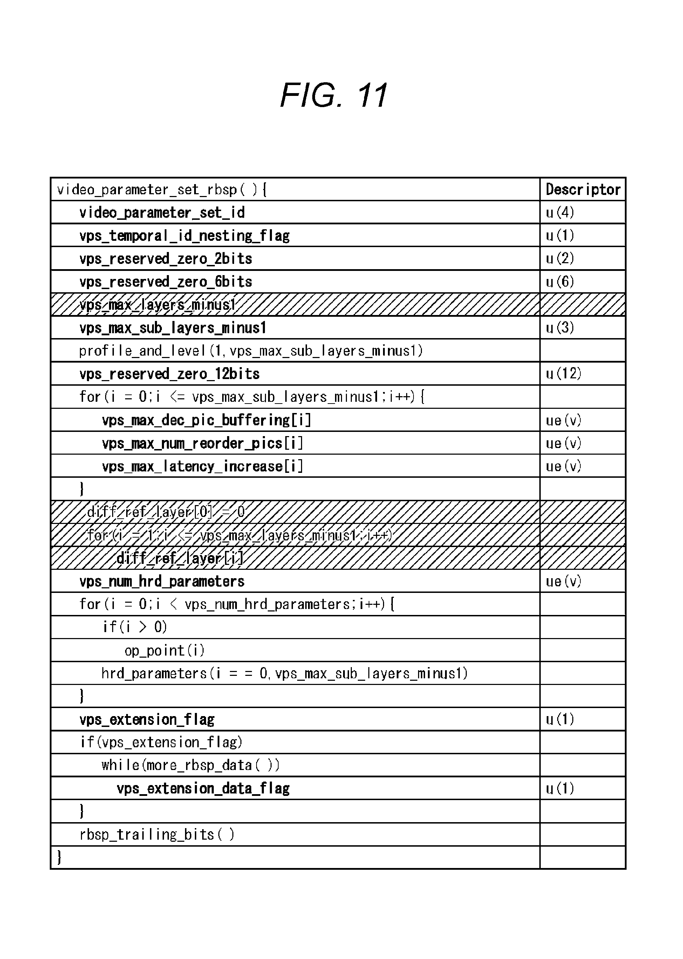

Syntax according to the present technology is illustrated in Figs. 11 through 13.

[Video Parameter Set]

Fig. 11 illustrates a syntax example of a video parameter set (VPS (Video Parameter Set)). Parameter vps_max_layer_minus1 on the sixth line from above in Fig. 11 indicates the number of main layers (number of layers) of scalability coding. On the other hand, parameter vps_max_sub_layer_minus1 on the seventh line from above in Fig. 11 indicates the maximum number of sublayers (maximum sublayer number) contained in each of main layers of scalability coding.

As illustrated on the fifteenth line from above in Fig. 11, parameter diff_ref_layer indicating a layer for reference is defined for each layer (main layer). This diff_ref_layer is calculated by the following equation on the assumption that the current layer is current layer (curr_layer), and that the layer to be referred to is reference layer (ref_layer).

$$\text{ref\_layer} = \text{curr\_layer} - \text{diff\_ref\_layer}$$

When the value of diff_ref_layer is 0, it is intended that the layer is image compression information subjected not to scalable coding but to individual coding. Accordingly, the value of diff_ref_layer for a base layer becomes 0.

As obvious from above, information indicating which layer is to be referred to by each layer is transmitted in the video parameter set (VPS). In this case, discrimination between a base layer and an enhancement layer is easily made for each layer. Accordingly, coding and decoding suitable for the types of layers are more easily achievable. In other words, decrease in coding efficiency is reducible.

[Picture Parameter Set]

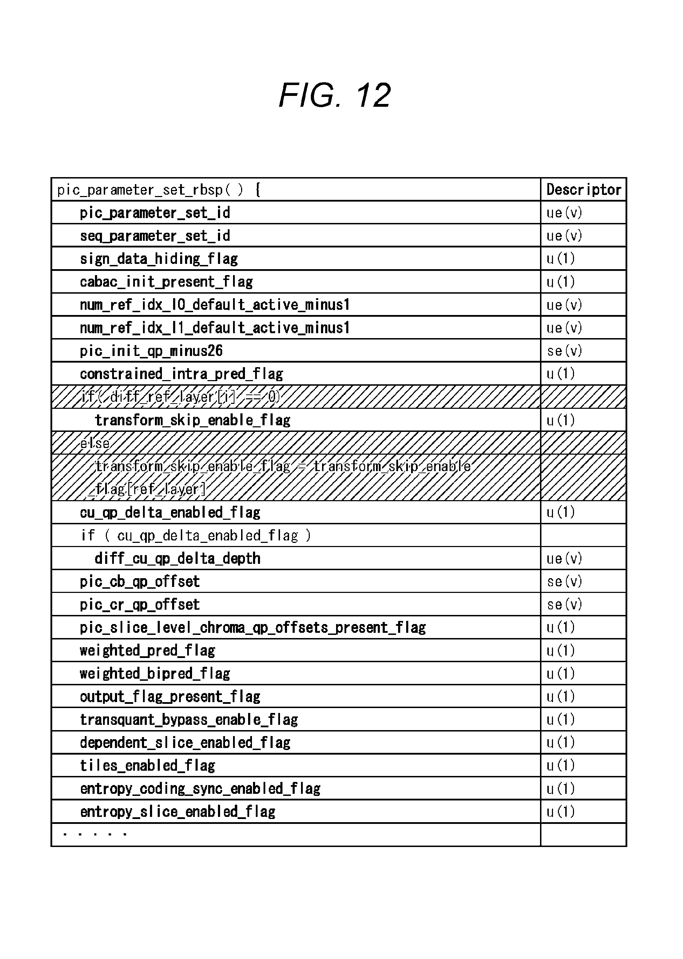

Fig. 12 illustrates a syntax example of a picture parameter set (PPS). According to a picture parameter set (PPS), skip enabling information (transform_skip_enable_flag) is created and transmitted when the value of parameter diff_ref_layer is 0, i.e., in case of a single layer or a base layer as shown in the tenth line and the eleventh line from above in Fig. 12.

On the other hand, when the value of parameter diff_ref_layer is not 0, i.e., in case of an enhancement layer, skip enabling information (transform_skip_enable_flag) stored in the picture parameter set of the base layer for reference (ref_layer) is referred to as illustrated in the twelfth line and thirteenth line from above in Fig. 12. In other words, skip enabling information (transform_skip_enable_flag) is not transmitted for this layer.

[Residual Coding]

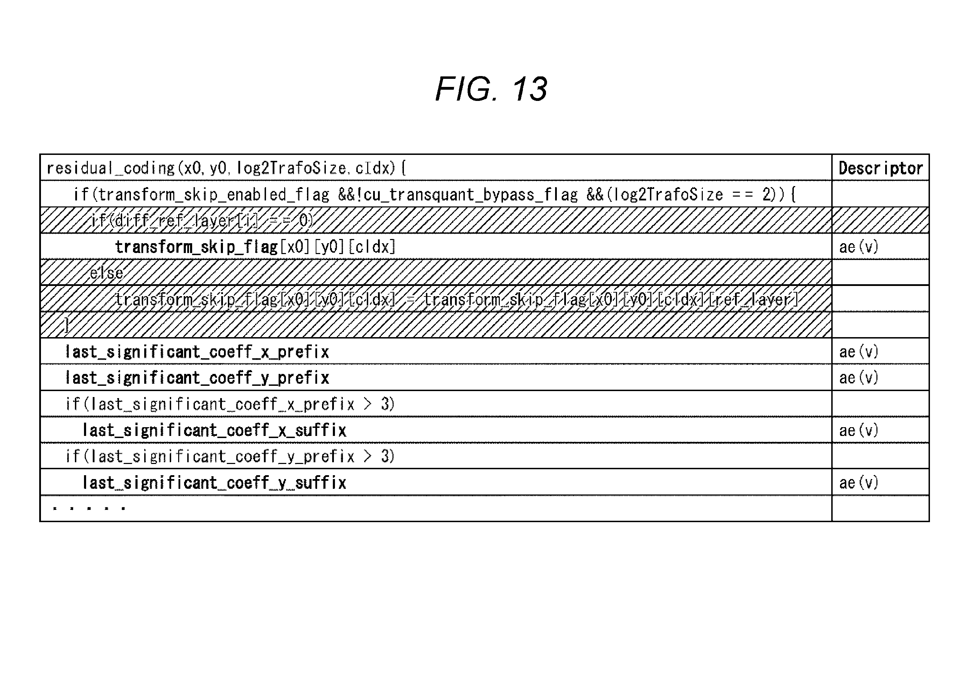

Fig. 13 illustrates an example of syntax of residual coding (residual_coding). The case of the residual coding (residual_coding) is basically similar to the case of the picture parameter set (PPS). More specifically, skip recognition information (transform_skip_flag) is created and transmitted for a block (TU) of a predetermined size (such as 4 × 4 size) when the value of parameter diff_ref_layer is 0, i.e., in case of a single layer or a base layer as shown in the third line and the fourth line from above in Fig. 13.

On the other hand, when the value of parameter diff_ref_layer is not 0, i.e., in case of an enhancement layer, skip recognition information (transform_skip_flag) on a block (TU) (reference block (reference TU)) contained in a base layer for reference (ref_layer) and corresponding to a current block (current TU), as a reference block contained in a picture (reference picture) corresponding to a current picture, is referred to as illustrated in the fifth line and sixth line from above in Fig. 13. In other words, skip recognition information (transform_skip_flag) is not transmitted for this layer.

Needless to say, creation, transmission, and reference of skip recognition information (transform_skip_flag) are limited to cases when skip enabling information (transform_skip_enable_flag) is true and when the size of the current block is a predetermined size (such as 4 × 4 size) (second line in Fig. 13).

When the foregoing syntax is applied, sharing of information on orthogonal transform skip by respective layers is allowed. Accordingly, reduction of decrease in coding efficiency is achievable.

Discussed hereinbelow are application examples of the present technology described above to specific devices.

<1. First Embodiment>

[Scalable Coding Device]

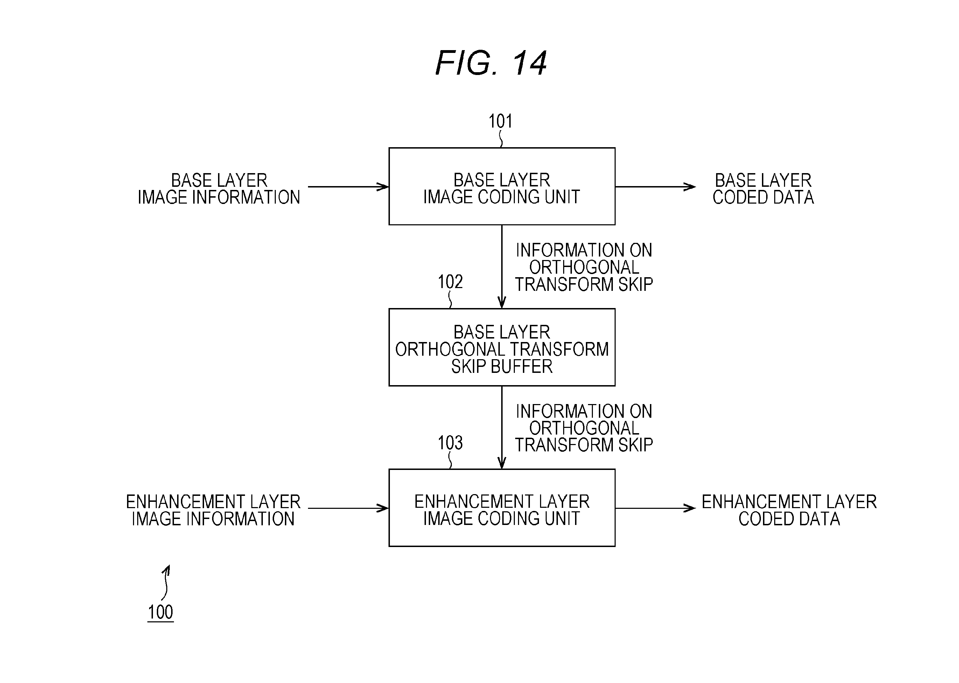

Fig. 14 is a block diagram illustrating an example of a general configuration of a scalable coding device.

A scalable coding device 100 illustrated in Fig. 14 codes respective layers of image data layered into a base layer and an enhancement layer. Parameters used as references for layering may be arbitrarily determined. The scalable coding device 100 includes a base layer image coding unit 101, a base layer orthogonal transform skip buffer 102, and an enhancement layer image coding unit 103.

The base layer image coding unit 101 obtains image information on the base layer (base layer image information). The base layer image coding unit 101 codes the base layer image information without referring to another layer, and creates and outputs coded data of the base layer (base layer coded data). The base layer image coding unit 101 also supplies information on orthogonal transform skip obtained at the time of coding to the base layer orthogonal transform skip buffer 102.

The base layer orthogonal transform skip buffer 102 stores information on orthogonal transform skip supplied from the base layer image coding unit 101. The base layer orthogonal transform skip buffer 102 supplies the stored information on orthogonal transform skip to the enhancement layer image coding unit 103 as necessary.

The enhancement layer image coding unit 103 obtains image information on the enhancement layer (enhancement layer image information). The enhancement layer image coding unit 103 obtains information on orthogonal transform skip of the base layer from the base layer orthogonal transform skip buffer 102, and codes the enhancement layer image information while referring to this information. The enhancement layer image coding unit 103 creates coded data of the enhancement layer (enhancement layer coded data) by this coding process, and outputs the created data.

As discussed above, the enhancement layer image coding unit 103 refers to the information on orthogonal transform skip of the base layer at the time of coding to control skip of the orthogonal transform process. The enhancement layer image coding unit 103 does not transmit information on orthogonal transform skip of the enhancement layer. In this case, information on orthogonal transform skip of the base layer is similarly referred to on the decoding side in controlling skip of the inverse orthogonal transform process of the enhancement layer.

Accordingly, the scalable coding device 100 eliminates the process of transmitting information on orthogonal transform skip of the enhancement layer, thereby achieving reduction of decrease in coding efficiency.

[Base Layer Image Coding Unit]

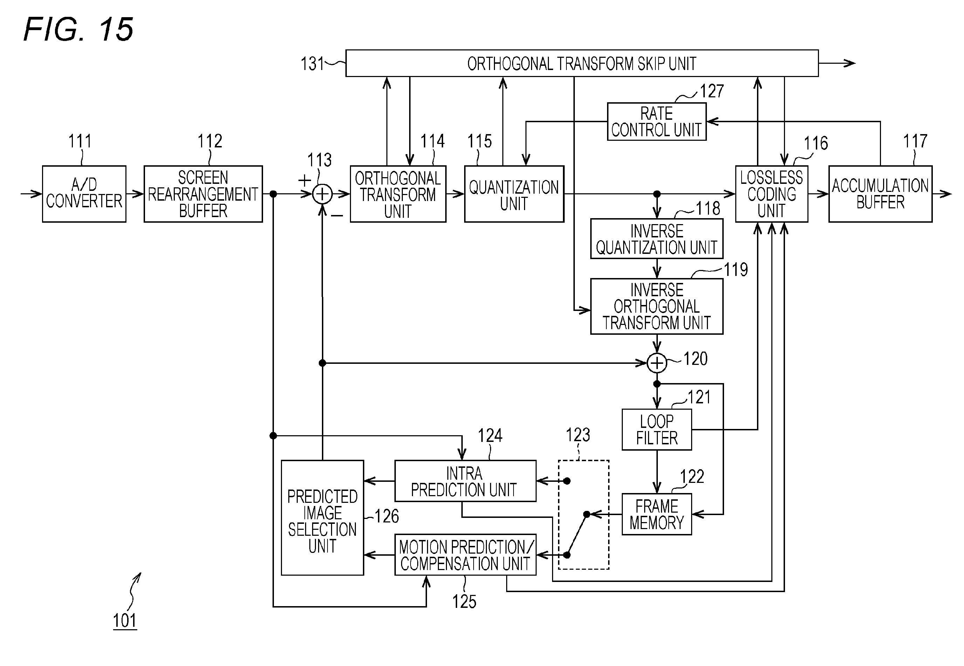

Fig. 15 is a block diagram illustrating an example of a general configuration of the base layer image coding unit 101 in Fig. 14. As illustrated in Fig. 15, the base layer image coding unit 101 includes an A/D converter 111, a screen rearrangement buffer 112, a calculation unit 113, an orthogonal transform unit 114, a quantization unit 115, a lossless coding unit 116, an accumulation buffer 117, an inverse quantization unit 118, and an inverse orthogonal transform unit 119. The base layer image coding unit 101 further includes a calculation unit 120, a loop filter 121, a frame memory 122, a selection unit 123, an intra prediction unit 124, a motion prediction/compensation unit 125, a predicted image selection unit 126, and a rate control unit 127.

The base layer image coding unit 101 further includes an orthogonal transform skip unit 131.

The A/D converter 111 executes A/D conversion for input image data (base layer image information), and supplies the converted image data (digital data) to the screen rearrangement buffer 112 to store the data in the screen rearrangement buffer 112. The screen rearrangement buffer 112 switches the order of frames of images from the stored order for display to the order for coding in accordance with GOP (Group Of Picture), and supplies the images of the frames in the switched order to the calculation unit 113. The screen rearrangement buffer 112 also supplies the images of the frames in the switched order to the intra prediction unit 124 and the motion prediction/compensation unit 125.

The calculation unit 113 receives a predicted image supplied from the intra prediction unit 124 or the motion prediction/compensation unit 125 via the predicted image selection unit 126, and subtracts the predicted image from an image read from the screen rearrangement buffer 112. Then, the calculation unit 113 outputs difference information thus obtained to the orthogonal transform unit 114. In case of an image to be intra-coded, for example, the calculation unit 113 receives a predicted image supplied from the intra prediction unit 124, and subtracts the received predicted image from an image read from the screen rearrangement buffer 112. On the other hand, in case of an image to be inter-coded, for example, the calculation unit 113 receives a predicted image supplied from the motion prediction/compensation unit 125, and subtracts the received predicted image from an image read from the screen rearrangement buffer 112.

The orthogonal transform unit 114 executes orthogonal transform, such as discrete cosine transform and Karhunen Loè-ve transform, for difference information supplied from the calculation unit 113. The orthogonal transform unit 114 supplies a transform coefficient thus obtained to the quantization unit 115.

The quantization unit 115 quantizes the transform coefficient supplied from the orthogonal transform unit 114. The quantization unit 115 sets quantization parameters for this quantization based on information on a target value of a code amount supplied from the rate control unit 127. The quantization unit 115 supplies the quantized transform coefficient to the lossless coding unit 116.

The lossless coding unit 116 codes the transform coefficient quantized by the quantization unit 115 in an arbitrary coding system. The coefficient data has been quantized under the control of the rate control unit 127, wherefore the resultant code amount becomes the target value set by the rate control unit 127 (or becomes similar to the target value).

The lossless coding unit 116 also obtains information indicating a mode of intra prediction and others from the intra prediction unit 124, and obtains information indicating a mode of inter prediction, difference motion vector information and others from the motion prediction/compensation unit 125. The lossless coding unit 116 also appropriately creates an NAL unit containing a video parameter set (VPS), a sequence parameter set (SPS), a picture parameter set (PPS) and others.

The lossless coding unit 116 codes the foregoing respective types of information in an arbitrary coding system to provide the coded information as a part of coded data (called coded stream as well) (i.e., multiplexes the coded information). The lossless coding unit 116 supplies the coded data thus coded to the accumulation buffer 117 to accumulate the coded data in the accumulation buffer 117.

Examples of the coding system adopted by the lossless coding unit 116 include variable codeword length coding and arithmetic coding, for example. Examples of variable codeword length coding include CAVLC (Context-Adaptive Variable Length Coding) defined in H.264/AVC system, for example. Examples of arithmetic coding include CABAC (Context-Adaptive Binary Arithmetic Coding), for example.

The accumulation buffer 117 temporarily retains coded data (base layer coded data) supplied from the lossless coding unit 116. The accumulation buffer 117 outputs the retained base layer coded data, at predetermined timing, to a not-shown recording device (recording medium) or a not-shown transmission path provided downstream, for example. Accordingly, the accumulation buffer 117 also functions as a transmission unit for transmitting coded data.

The transform coefficient quantized by the quantization unit 115 is also supplied to the inverse quantization unit 118. The inverse quantization unit 118 executes inverse quantization for the quantized transform coefficient by a method corresponding to the method of quantization used by the quantization unit 115. The inverse quantization unit 118 supplies a transform coefficient thus obtained to the inverse orthogonal transform unit 119.

The inverse orthogonal transform unit 119 executes inverse orthogonal transform for the transform coefficient supplied from the inverse quantization unit 118 by a method corresponding to the method of the orthogonal transform process executed by the orthogonal transform unit 114. The output subjected to inverse orthogonal transform (restored difference information) is supplied to the calculation unit 120.

The calculation unit 120 adds a predicted image received from the intra prediction unit 124 or the motion prediction/compensation unit 125 via the predicted image selection unit 116 to the restored difference information corresponding to the result of inverse orthogonal transform supplied from the inverse orthogonal transform unit 119 to obtain a locally decoded image (decoded image). The decoded image is supplied to the loop filter 121 or the frame memory 122.

The loop filter 121 contains deblocking filter or adaptive loop filter, for example, to appropriately execute filtering for a reconstituted image supplied from the calculation unit 120. For example, the loop filter 121 removes block distortion from a reconstituted image by deblocking filter the reconstituted image. In addition, the loop filter 121 improves image quality by loop-filtering the result of deblocking filter (reconstituted image after removal of block distortion) by using a wiener filter (Wiener Filter), for example. The loop filter 121 supplies the filtering result (hereinafter referred to as decoded image) to the frame memory 122.

The loop filter 121 may further execute other arbitrary filtering for the reconstituted image. In addition, the loop filter 121 may supply information on a filter coefficient and the like used for filtering to the lossless coding unit 116 as necessary so as to code the information.

The frame memory 122 stores a reconstituted image supplied from the calculation unit 120, and a decoded image supplied from the loop filter 121. The frame memory 122 supplies the stored reconstituted image to the intra prediction unit 124 via the selection unit 123 at predetermined timing, or in response to a request from the outside such as the intra prediction unit 124. The frame memory 122 also supplies the stored decoded image to the motion prediction/compensation unit 125 via the selection unit 123 at predetermined timing, or in response to a request from the outside such as the motion prediction/compensation unit 125.

The frame memory 122 stores a supplied decoded image, and supplies the stored decoded image to the selection unit 123 as a reference image at predetermined timing.

The selection unit 123 selects a supply destination of a reference image supplied from the frame memory 122. In case of intra prediction, for example, the selection unit 123 supplies a reference image (pixel value within current picture) supplied from the frame memory 122 to the motion prediction/compensation unit 125. On the other hand, in case of inter prediction, for example, the selection unit 123 supplies a reference image supplied from the frame memory 122 to the motion prediction/compensation unit 125.

The intra prediction unit 124 executes intra prediction (intra prediction) to create a predicted image based on a pixel value within a current picture corresponding to a reference image supplied from the frame memory 122 via the selection unit 123. The intra prediction unit 124 executes this intra prediction in multiple intra prediction modes prepared beforehand.

The intra prediction unit 124 creates predicted images in all candidate intra prediction modes, and evaluates cost function values of the respective predicted images based on an input image supplied from the screen rearrangement buffer 112 to select the optimum mode. The intra prediction unit 124 having selected the optimum intra prediction mode supplies the predicted image created in the selected optimum mode to the predicted image selection unit 126.

As discussed above, the intra prediction unit 124 appropriately supplies intra prediction mode information indicating the adopted intra prediction mode and the like to the lossless coding unit 116 to code the information.

The motion prediction/compensation unit 125 executes motion prediction (inter prediction) based on an input image supplied from the screen rearrangement buffer 112 and a reference image supplied from the frame memory 122 via the selection unit 123. The motion prediction/compensation unit 125 executes a motion compensation process in accordance with a detected motion vector to create a predicted image (inter prediction image information). The motion prediction/compensation unit 125 executes this inter prediction in multiple inter prediction modes prepared beforehand.

The motion prediction/compensation unit 125 creates predicted images in all candidate inter prediction modes. The motion prediction/compensation unit 125 evaluates cost function values of the respective predicted images based on an input image supplied from the screen rearrangement buffer 112 and information on created difference motion vectors, for example, to select the optimum mode. The motion prediction/compensation unit 125 having selected the optimum inter prediction mode supplies a predicted image created in the selected optimum mode to the predicted image selection unit 126.

In decoding information indicating the adopted inter prediction mode or coded data, the motion prediction/compensation unit 125 supplies information necessary for processing in the corresponding inter prediction mode and the like to the lossless coding unit 116 to code the information. The necessary information herein contains information on created difference motion vectors, and flags indicating indexes of predicted motion vectors as predicted motion vector information, for example.

The predicted image selection unit 126 selects a supply source of a predicted image to be supplied to the calculation unit 113 and the calculation unit 120. In case of intra coding, for example, the predicted image selection unit 126 selects the intra prediction unit 124 as a supply source of a predicted image, and supplies a predicted image received from the intra prediction unit 124 to the calculation unit 113 and the calculation unit 120. On the other hand, in case of inter coding, for example, the predicted image selection unit 126 selects the motion prediction/compensation unit 125 as a supply source of a predicted image, and supplies a predicted image received from the motion prediction/compensation unit 125 to the calculation unit 113 and the calculation unit 120.

The rate control unit 127 controls the rate of quantization operation executed by the quantization unit 115 such that overflow or underflow is not caused based on the code amount of coded data accumulated in the accumulation buffer 117.

The orthogonal transform skip unit 131 controls execution of the orthogonal transform process executed by the orthogonal transform unit 114 of the base layer image coding unit 101, and the inverse orthogonal transform process executed by the inverse orthogonal transform unit 119 of the base layer image coding unit 101. For example, the orthogonal transform skip unit 131 obtains an orthogonal transform coefficient and a difference value prior to orthogonal transform from the orthogonal transform unit 114. In addition, the orthogonal transform skip unit 131 obtains skip enabling information from the lossless coding unit 116, for example. The orthogonal transform skip unit 131 determines whether or not to skip (omit) the orthogonal transform process (or inverse orthogonal transform process) based on the foregoing information.

The orthogonal transform skip unit 131 controls the orthogonal transform unit 114 and the inverse orthogonal transform unit 119 of the base layer image coding unit 101 based on this determination. More specifically, the orthogonal transform unit 114 of the base layer image coding unit 101 executes the orthogonal transform process or skips the orthogonal transform process under the control of the orthogonal transform skip unit 131 of the base layer image coding unit 101. Similarly, the inverse orthogonal transform unit 119 of the base layer image coding unit 101 executes or skips the inverse orthogonal transform process under the control of the orthogonal transform skip unit 131 of the base layer image coding unit 101.

The orthogonal transform skip unit 131 also creates skip recognition information indicating the contents of the determination, i.e., whether or not to skip the orthogonal transform process (inverse orthogonal transform process), and supplies the created skip recognition information to the lossless coding unit 116 of the base layer image coding unit 101. The lossless coding unit 116 of the base layer image coding unit 101 incorporates the skip recognition information into base layer coded data, and transmits the coded data containing the skip recognition information to the decoding side. This skip recognition information may be transmitted to the decoding side as data different from the base layer coded data.

The orthogonal transform skip unit 131 further supplies the information on orthogonal transform skip thus obtained, containing skip enabling information and skip recognition information, to the base layer orthogonal transform skip buffer 102.

[Enhancement Layer Image Coding Unit]

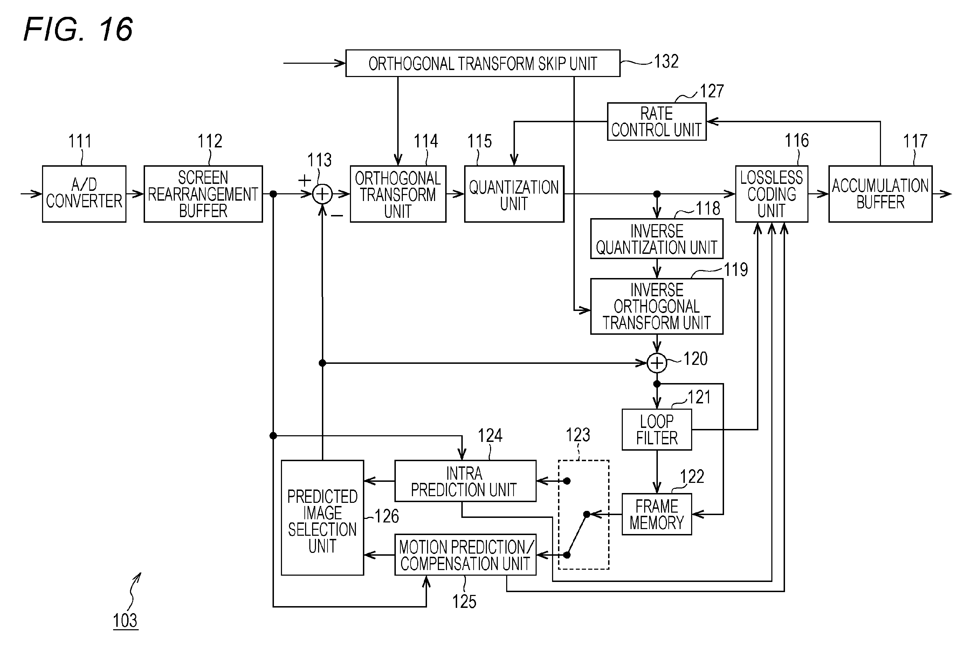

Fig. 16 is a block diagram illustrating an example of a general configuration of the enhancement layer image coding unit 103 in Fig. 14. As illustrated in Fig. 16, the enhancement layer image coding unit 103 has a configuration basically similar to the configuration of the base layer image coding unit 101 illustrated in Fig. 15. More specifically, the enhancement layer image coding unit 103 includes the respective units from the A/D converter 111 to the rate control unit 127.

However, each of the units of the enhancement layer image coding unit 103 executes processes not for coding a base layer, but for coding an enhancement layer. More specifically, the A/D converter 111 executes A/D conversion for enhancement layer image information, while the accumulation buffer 117 outputs enhancement layer coded data to a not-shown recording device (recording medium) and a not-shown transmission path provided downstream, for example.

The enhancement layer image coding unit 103 includes an orthogonal transform skip unit 132 in place of the orthogonal transform skip unit 131.

The orthogonal transform skip unit 132 controls execution of the orthogonal transform process by the orthogonal transform unit 114 of the enhancement layer image coding unit 103, and execution of the inverse orthogonal transform process by the inverse orthogonal transform unit 119 of the enhancement layer image coding unit 103. For example, the orthogonal transform skip unit 132 obtains information on orthogonal transform skip of the base layer from the base layer orthogonal transform skip buffer 102.

The orthogonal transform skip unit 132 controls the orthogonal transform unit 114 and the inverse orthogonal transform unit 119 of the enhancement layer image coding unit 103 based on the obtained information on orthogonal transform skip. More specifically, the orthogonal transform unit 114 of the enhancement layer image coding unit 103 executes or skips the orthogonal transform process under the control of the orthogonal transform skip unit 132 of the enhancement layer image coding unit 103. Similarly, the inverse orthogonal transform unit 119 of the enhancement layer image coding unit 103 executes or skips the inverse orthogonal transform process under the control of the orthogonal transform skip unit 132 of the enhancement layer image coding unit 103.

Information on orthogonal transform skip of the enhancement layer is not transmitted. More specifically, in case of the enhancement layer image coding unit 103, the lossless coding unit 116 does not create skip enabling information, supply the skip enabling information to the orthogonal transform skip unit 132, obtain skip recognition information from the orthogonal transform skip unit 132, nor transmit the skip recognition information to the decoding side.

[Orthogonal Transform Skip Unit and Base Layer Orthogonal Transform Skip Buffer]

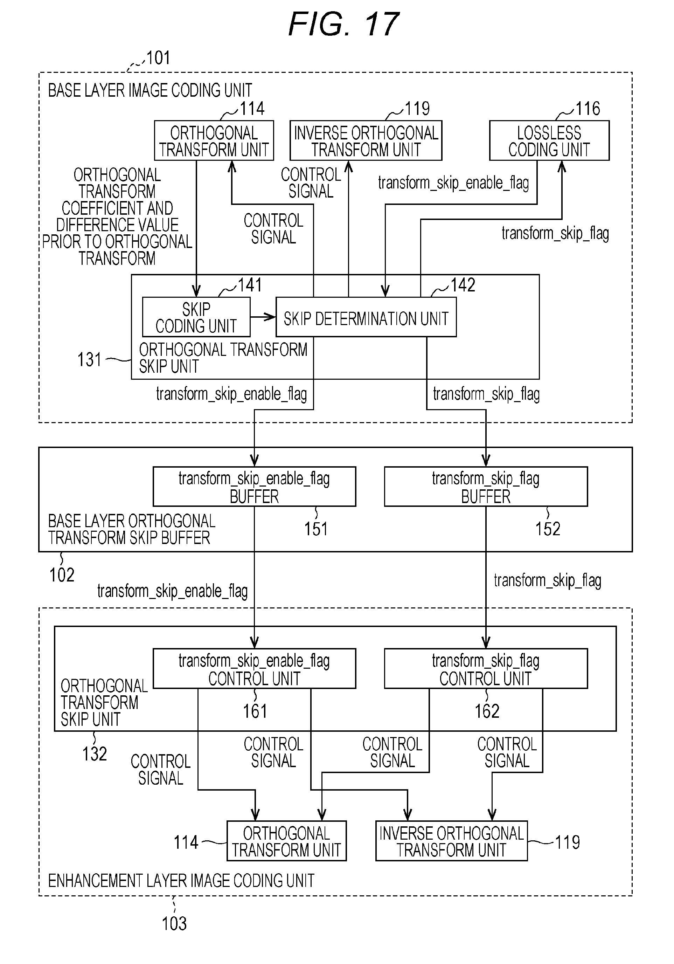

Fig. 17 is a block diagram illustrating an example of a general configuration of the orthogonal transform skip unit 131, the orthogonal transform skip unit 132, and the base layer orthogonal transform skip buffer 102.

As illustrated in Fig. 17, the orthogonal transform skip unit 131 includes a skip coding unit 141 and a skip determination unit 142. The base layer orthogonal transform skip buffer 102 includes a transform_skip_enable_flag buffer 151, and a transform_skip_flag buffer 152. The orthogonal transform skip unit 132 includes a transform_skip_enable_flag control unit 161 and a transform_skip_flag control unit 162.

The skip coding unit 141 calculates a cost function value produced when orthogonal transform is executed based on an orthogonal transform coefficient and a difference value prior to orthogonal transform obtained from the orthogonal transform unit 114 of the base layer image coding unit 101, and a cost function value produced when orthogonal transform is skipped. The skip coding unit 141 supplies the calculated cost function values to the skip determination unit 142.

The skip determination unit 142 obtains skip enabling information (transform_skip_enable_flag) from the lossless coding unit 116 of the base layer image coding unit 101. The skip determination unit 142 determines whether or not to skip the orthogonal transform process and the inverse orthogonal transform process for a current block (current TU) based on the obtained skip enabling information (transform_skip_enable_flag), and the cost functions supplied from the skip coding unit 141. The skip determination unit 142 supplies a control signal for control in accordance with this determination to the orthogonal transform unit 114 and the inverse orthogonal transform unit 119 of the base layer image coding unit 101 to control execution of the orthogonal transform process and the inverse orthogonal transform process.

The skip determination unit 142 further creates skip recognition information (transform_skip_flag) in accordance with this determination, and supplies the created skip recognition information (transform_skip_flag) to the lossless coding unit 116 of the base layer image coding unit 101 for transmission of this information to the decoding side.

The skip determination unit 142 also supplies both skip enabling information (transform_skip_enable_flag) and skip recognition information (transform_skip_flag) to the base layer orthogonal transform skip buffer 102 as information on orthogonal transform skip.

The transform_skip_enable_flag buffer 151 of the base layer orthogonal transform skip buffer 102 stores skip enabling information (transform_skip_enable_flag) of the base layer supplied from the skip determination unit 142. The transform_skip_enable_flag buffer 151 supplies the stored skip enabling information (transform_skip_enable_flag) of the base layer to the orthogonal transform skip unit 132 in response to a request from the orthogonal transform skip unit 132.

The transform_skip_flag buffer 152 of the base layer orthogonal transform skip buffer 102 stores skip recognition information (transform_skip_flag) of the base layer supplied from the skip determination unit 142. The transform_skip_flag buffer 152 supplies the stored skip recognition information (transform_skip_flag) of the base layer to the orthogonal transform skip unit 132 in response to a request from the orthogonal transform skip unit 132.

The transform_skip_enable_flag control unit 161 of the orthogonal transform skip unit 132 obtains skip enabling information (transform_skip_enable_flag) of a picture of the base layer corresponding to the current picture from the transform_skip_enable_flag buffer 151, and supplies a control signal corresponding to a value of this information to the orthogonal transform unit 114 and the inverse orthogonal transform unit 119 of the enhancement layer image coding unit 103 to control execution of the orthogonal transform process and the inverse orthogonal transform process.

On the other hand, the transform_skip_flag control unit 162 of the orthogonal transform skip unit 132 obtains skip recognition information (transform_skip_flag) of a block (TU) of the base layer corresponding to the current block (current TU) from the transform_skip_flag buffer 152, and supplies a control signal corresponding to a value of this information to the orthogonal transform unit 114 and the inverse orthogonal transform unit 119 of the enhancement layer image coding unit 103 to control execution of the orthogonal transform process and the inverse orthogonal transform process.

By this method, the scalable coding device 100 allows sharing of information on orthogonal transform skip by respective layers. In this case, the scalable coding device 100 eliminates the necessity of transmitting information on orthogonal transform skip of the enhancement layer as a part of image compression information to be output, and thus achieves improvement of coding efficiency.

[Flow of Coding Process]

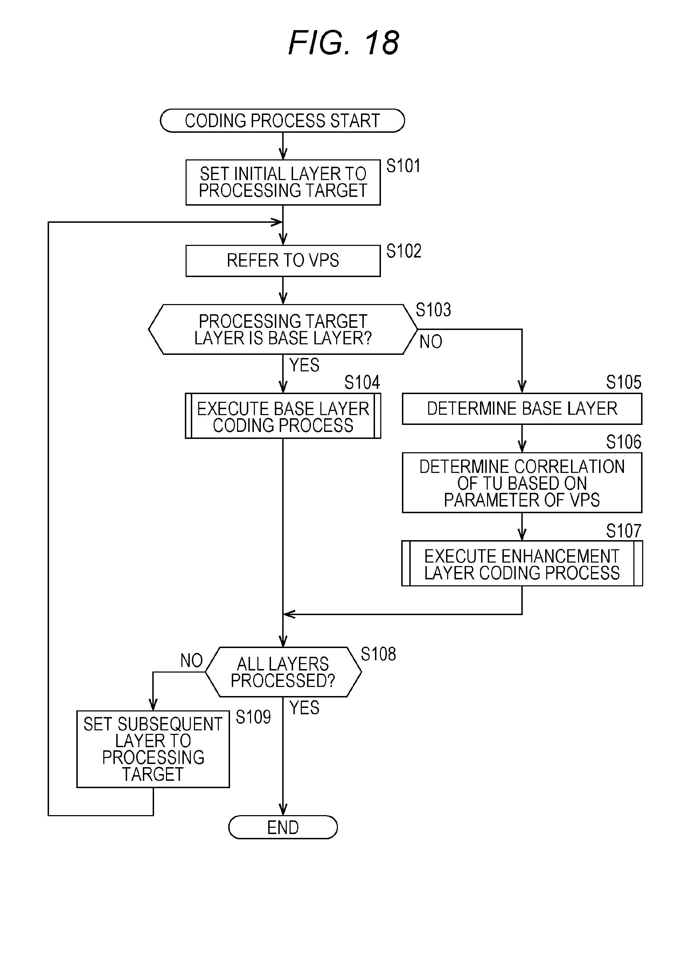

The flow of respective processes executed by the scalable coding device 100 thus constructed is hereinafter described. An example flow of a coding process is initially discussed with reference to a flowchart shown in Fig. 18.

With start of the coding process, the scalable coding device 100 sets an initial layer contained in multiple layers of image data to a processing target in step S101.

In step S102, the scalable coding device 100 refers to a video parameter set (VPS). In step S103, the scalable coding device 100 determines whether or not the current layer corresponding to the processing target is a base layer based on the value of the parameter diff_ref_layer.

When it is determined that the current layer is a base layer based on the value "0" of diff_ref_layer of the current layer, the flow proceeds to step S104.

In step S104, the base layer image coding unit 101 executes a base layer coding process for coding base layer image information. After completion of the process in step S104, the flow proceeds to step S108.

When it is determined in step S103 that the current layer is an enhancement layer based on the value "not 0" of diff_ref_layer of the current layer, the flow proceeds to step S105.

In step S105, the scalable coding device 100 determines a base layer corresponding to the current layer.

In step S106, the scalable coding device 100 determines the correlation of blocks (TUs) between the base layer and the enhancement layer based on parameters of the video parameter set (VPS). For example, the correlations of TUs as discussed with reference to Figs. 8 through 10 by way of example are determined in accordance with the resolution ratio, the component format, and other conditions of the base layer and the enhancement layer.

In step S107, the enhancement layer image coding unit 103 executes an enhancement layer coding process for coding enhancement layer image information. After completion of the process in step S107, the flow proceeds to step S108.

In step S108, the scalable coding device 100 determines whether or not all the layers have been processed. When it is determined that there remain not-processed layers, the flow proceeds to step S109.

In step S109, the scalable coding device 100 sets a subsequent not-processed layer to a new processing target.

After a new current layer is determined, the flow returns to step S102. Then, the processes from step S102 to step S109 are repeated to execute the coding process for the respective layers.

When it is determined that all the layers have been processed in step S108, the coding process ends.

[Flow of Base Layer Coding Process]

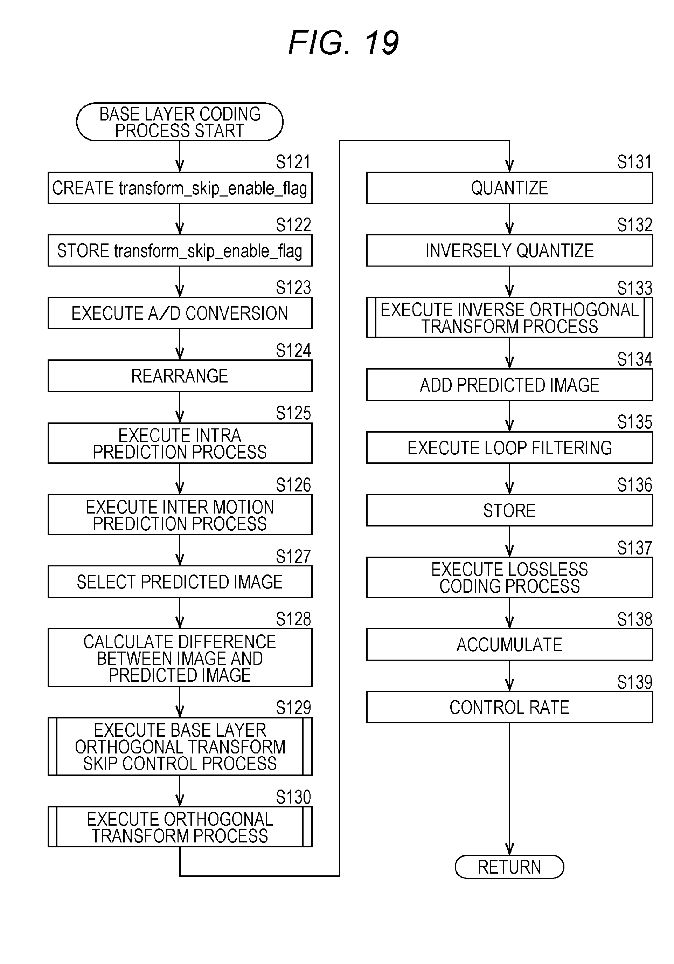

A flow example of the base layer coding process executed in step S104 in Fig. 18 is now described with reference to a flowchart in Fig. 19.

In step S121, the lossless coding unit 116 of the base layer image coding unit 101 creates skip enabling information (transform_skip_enable_flag) for a current picture of the base layer corresponding to the current layer based on an instruction from a user, for example.

In step S122, the skip determination unit 142 obtains the skip enabling information (transform_skip_enable_flag) from the lossless coding unit 116, and supplies this information to the transform_skip_enable_flag buffer 151 of the base layer orthogonal transform skip buffer 102 to store the information in the transform_skip_enable_flag buffer 151.

In step S123, the A/D converter 111 executes A/D conversion of image information (image data) of the input base layer. In step S124, the screen rearrangement buffer 112 stores image information (digital data) of the base layer subjected to A/D conversion, and switches the order of the respective pictures from the order for display to the order for coding. In step S125, the intra prediction unit 124 executes an intra prediction process in an intra prediction mode.

In step S126, the motion prediction/compensation unit 125 executes inter motion prediction for executing motion prediction or motion compensation in an inter prediction mode.

In step S127, the predicted image selection unit 126 determines an optimum mode based on respective cost function values output from the intra prediction unit 124 and the motion prediction/compensation unit 125. More specifically, the predicted image selection unit 126 selects either a predicted image created by the intra prediction unit 124, or a predicted image created by the motion prediction/compensation unit 125.

In step S128, the calculation unit 113 calculates the difference between the image rearranged by the process in step S124 and the predicted image selected by the process in step S127. Difference data has a smaller amount of data than the amount of original image data. Accordingly, greater compression of the data amount is achievable in comparison with the case of coding of an image as it is.

In step S129, the orthogonal transform skip unit 131 executes a base layer orthogonal transform skip control process.

In step S130, the orthogonal transform unit 114 executes an orthogonal transform process for the difference information created by the process in step S128 in accordance with the result of the process in step S129.

In step S131, the quantization unit 115 quantizes the orthogonal transform coefficient or the difference value prior to orthogonal transform obtained by the process in step S130 using quantization parameters calculated by the rate control unit 127.

The difference information quantized by the process in step S131 is locally decoded in the following manner. In step S132, the inverse quantization unit 118 inversely quantizes the quantized coefficient created by the process in step S131 (called quantized coefficient as well), based on characteristics corresponding to the characteristics of the quantization unit 115. In step S133, the inverse orthogonal transform unit 119 executes an inverse orthogonal transform process for the orthogonal transform coefficient or the difference value prior to orthogonal transform obtained by the process in step S132 in accordance with the result of the process in step S129.

The detailed explanation of the process in step S133 is similar to the explanation of the similar process executed in a decoding process to be described later, and therefore is not touched upon herein.

In step S134, the calculation unit 120 adds a predicted image to the locally decoded difference information to create a locally decoded image (image corresponding to input to the calculation unit 113).

In step S135, the loop filter 121 filters the image created by the process in step S134. This process removes block distortion or the like.

In step S136, the frame memory 122 stores the image subjected to removal of block distortion or the like by the process in step S135. The frame memory 122 also receives supply of an image not filtered by the loop filter 121 from the calculation unit 120, and stores this image. This image stored in the frame memory 122 is utilized for the process in step S125 and the process in step S126.

In step S137, the lossless coding unit 116 codes the coefficient quantized by the process in step S131. More specifically, the lossless coding unit 116 executes lossless coding such as variable codeword length coding and arithmetic coding for data corresponding to the difference image.

At this time, the lossless coding unit 116 codes information on the prediction mode of the predicted image selected by the process in step S127, and adds the coded information to the coded data obtained by coding the difference image. More specifically, the lossless coding unit 116 also codes optimum intra prediction mode information supplied from the intra prediction unit 124, or information corresponding to the optimum inter prediction mode supplied from the motion prediction/compensation unit 125, for example, and adds this coded information to the coded data.

The lossless coding unit 116 also appropriately codes information on orthogonal transform skip such as skip recognition information (transform_skip_flag), and adds this coded information to the coded data.

In step S138, the accumulation buffer 117 accumulates base layer coded data obtained by the process in step S137. The base layer coded data accumulated in the accumulation buffer 117 is read appropriately, and transmitted to the decoding side via a transmission path or a recording medium.

In step S139, the rate control unit 127 controls the rate of quantization operation executed by the quantization unit 115 such that overflow or underflow does not occur based on a code amount (generated code amount) of coded data accumulated in the accumulation buffer 117 by the process in step S138. The rate control unit 127 also supplies information on quantization parameters to the quantization unit 115.

After completion of the process in step S139, the base layer coding process ends, whereupon the flow returns to Fig. 18. The base layer coding process is executed for each of pictures, for example. More specifically, the base layer coding process is executed for each of pictures of the current layer. However, the respective processes within the base layer coding process are executed for each of the processes.

[Flow of Base Layer Orthogonal Transform Skip Control Process]

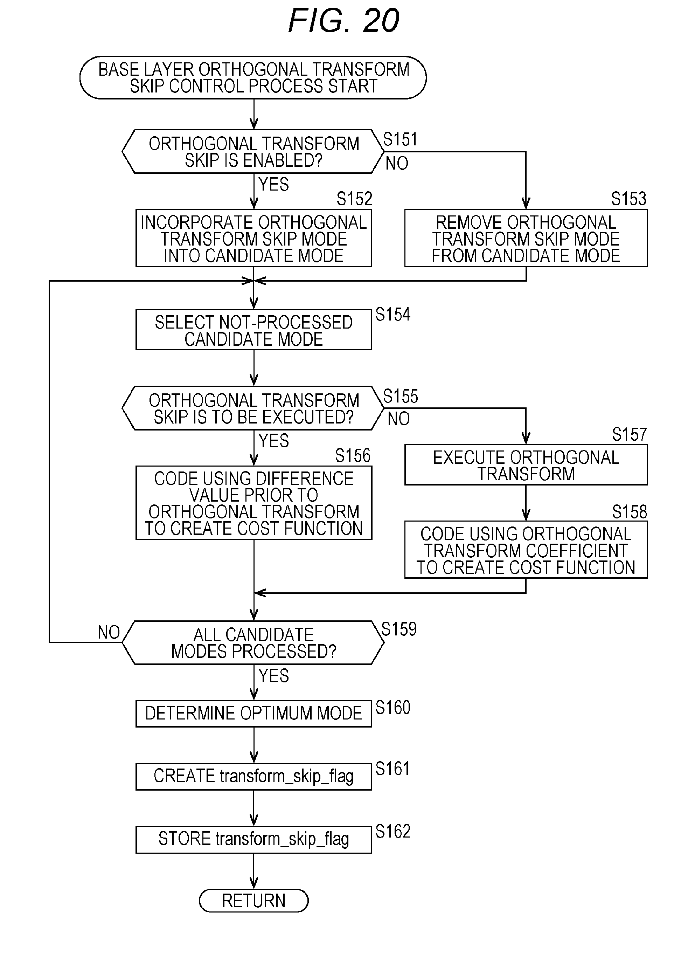

A flow example of the base layer orthogonal transform skip control process executed in step S129 in Fig. 19 is hereinafter described with reference to a flowchart in Fig. 20.

With start of the base layer orthogonal transform skip control process, the skip determination unit 142 determines in step S151 whether or not orthogonal transform skip has been enabled for the current picture corresponding to the processing target based on skip enabling information (transform_skip_enable_flag) obtained from the lossless coding unit 116.

When it is determined that orthogonal transform skip has been enabled, the flow proceeds to step S152. In step S152, the skip coding unit 141 incorporates an orthogonal transform skip mode for executing orthogonal transform skip as one of candidate modes corresponding to candidates for the prediction mode of the current picture. After completion of the process in step S152, the flow proceeds to step S154.

When it is determined that the orthogonal transform skip has not been enabled in step S151, the flow proceeds to step S153. In step S153, the skip coding unit 141 removes the orthogonal transform skip mode from the candidate modes for the current picture. After completion of the process in step S153, the flow proceeds to step S154.

In step S154, the skip coding unit 141 selects a not-processed candidate mode for the current picture.

In step S155, the skip coding unit 141 determines whether or not the selected mode is the orthogonal transform skip mode (i.e., whether to execute orthogonal transform skip). When it is determined that the selected mode is the orthogonal transform skip mode, the flow proceeds to step S156.

In step S156, the skip coding unit 141 obtains the difference value prior to orthogonal transform from the orthogonal transform unit 114, executes coding using the difference value prior to orthogonal transform, and calculates a cost function value. In other words, the skip coding unit 141 executes coding while skipping the orthogonal transform process, and calculates the cost function value. The skip coding unit 141 supplies the cost function value in the calculated orthogonal transform mode to the skip determination unit 142. After completion of the process in step S156, the flow proceeds to step S159.

On the other hand, when it is determined that the selected mode is not the orthogonal transform skip mode in step S155, the flow proceeds to step S157. In step S157, the orthogonal transform unit 114 executes orthogonal transform of the difference value prior to orthogonal transform to obtain an orthogonal transform coefficient. In step S158, the skip coding unit 141 obtains the orthogonal transform coefficient from the orthogonal transform unit 114, executes coding using the difference value prior to orthogonal transform, and calculates a cost function value. In other words, the skip coding unit 141 executes coding while skipping the orthogonal transform process, and calculates the cost function value.

The skip coding unit 141 supplies the cost function value in the calculated orthogonal transform mode to the skip determination unit 142. After completion of the process in step S156, the flow proceeds to step S159.

In step S159, the skip coding unit 141 determines whether or not all the candidate modes have been processed. When it is determined that there remain not-processed candidate modes, the flow returns to step S154. When it is determined in step S159 that all the candidate modes have been processed after repeat of the processes from step S154 to step S159, the flow proceeds to step S160.

In step S160, the skip determination unit 142 determines the optimum mode from the candidate modes. The mode determined as the optimum mode is used as an actual coding mode. Accordingly, the skip determination unit 142 supplies a control signal corresponding to the optimum mode to the orthogonal transform unit 114 and the inverse orthogonal transform unit 119 of the base layer image coding unit 101.

In step S161, the skip determination unit 142 creates skip recognition information (transform_skip_flag) corresponding to the optimum mode. In step S162, the skip determination unit 142 supplies the skip recognition information (transform_skip_flag) created in step S161 to the transform_skip_flag buffer 152 of the base layer orthogonal transform skip buffer 102 to store the skip recognition information (transform_skip_flag) in the transform_skip_flag buffer 152.

After completion of the process in step S162, the base layer orthogonal transform skip control process ends, whereupon the flow returns to Fig. 19. This base layer orthogonal transform skip control process is executed for each arbitrary unit of processing (such as each LCU). However, the respective processes within the base layer orthogonal transform skip control process are executed for each of the processes.

[Flow of Orthogonal Transform Process]

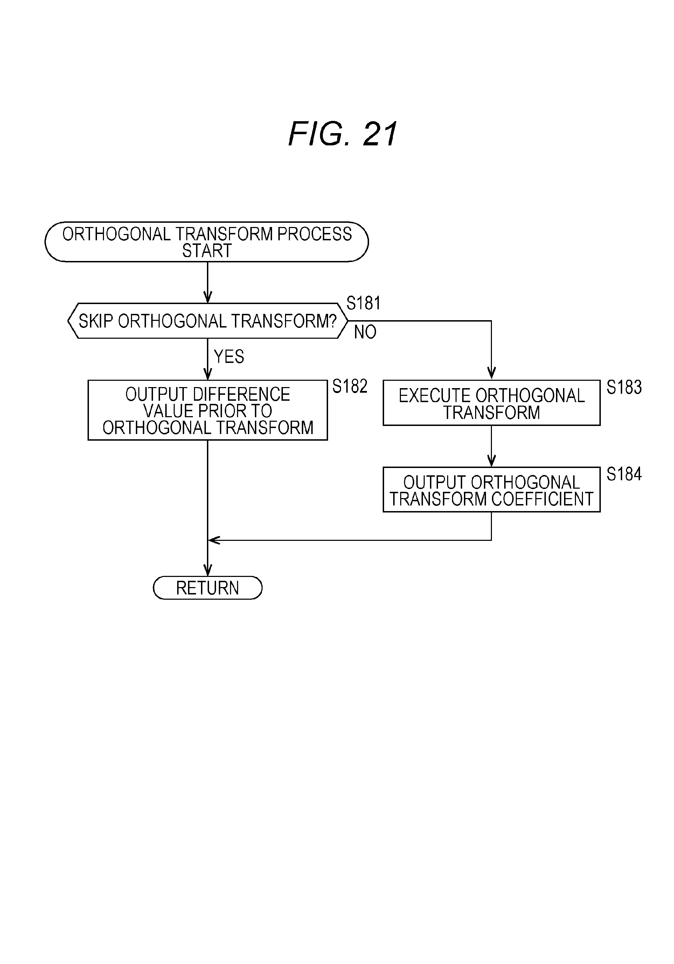

A flow example of the orthogonal transform process executed in step S130 in Fig. 19 is hereinafter described with reference to a flowchart in Fig. 21.

With start of the orthogonal transform process, the orthogonal transform unit 114 determines in step S181 whether or not to skip orthogonal transform for the current block under the control of the skip determination unit 142. When it is determined that orthogonal transform is to be skipped, the flow proceeds to step S182.

In step S182, the orthogonal transform unit 114 skips the orthogonal transform process for the current block, and outputs a difference value prior to orthogonal transform for the current block. After completion of the process in step S182, the flow returns to Fig. 19.

When it is determined that orthogonal transform is not to be skipped for the current block in step S181 in Fig. 21, the flow proceeds to step S183.

In step S183, the orthogonal transform unit 114 executes orthogonal transform of a difference value prior to orthogonal transform for the current block. In step S184, the orthogonal transform unit 114 outputs an obtained orthogonal transform coefficient. After completion of the process in step S184, the orthogonal transform process ends, whereupon the process returns to Fig. 19.

The orthogonal transform process is executed for each arbitrary unit of processing (such as each TU). However, the respective processes within the orthogonal transform process are executed for each of the processes.

[Flow of Enhancement Layer Coding Process]

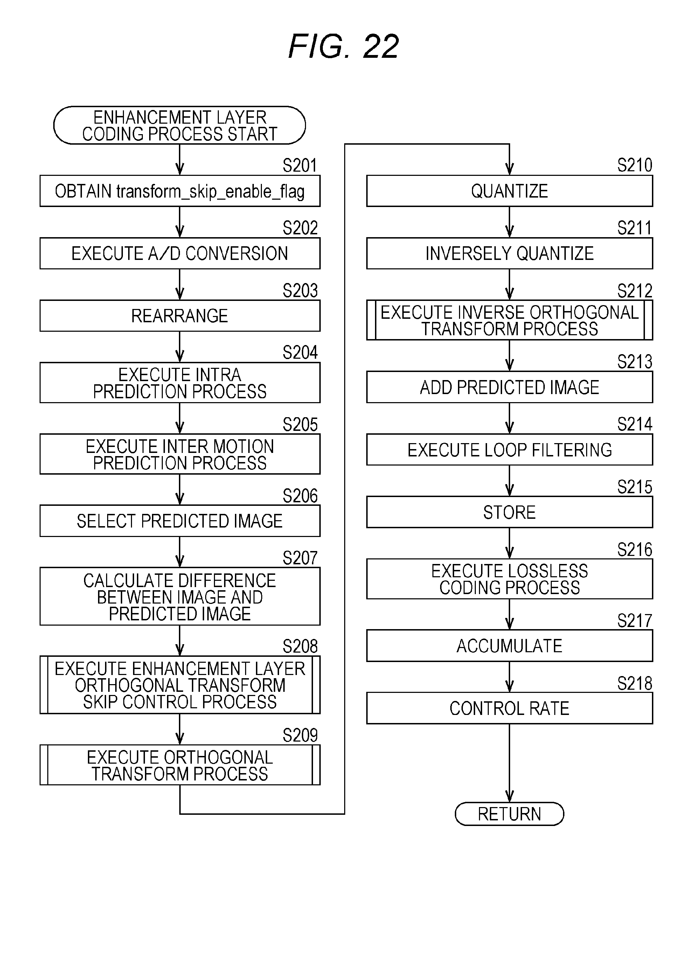

A flow example of the enhancement layer coding process executed in step S107 in Fig. 18 is hereinafter described with reference to a flowchart in Fig. 22.

In step S201, the transform_skip_enable_flag control unit 161 of the enhancement layer image coding unit 103 obtains skip enabling information (transform_skip_enable_flag) for the current picture of the base layer corresponding to the current layer from the transform_skip_enable_flag buffer 151 of the base layer orthogonal transform skip buffer 102.

The respective processes from step S202 to step S207 are executed similarly to the respective processes from step S123 to step S128 of the base layer coding process (Fig. 19). However, the respective processes from step S202 to step S207 are executed for enhancement layer image information by the respective processing units of the enhancement layer image coding unit 103.

In step S208, the orthogonal transform skip unit 132 executes an enhancement layer orthogonal transform skip control process.

In step S209, the orthogonal transform unit 114 of the enhancement layer image coding unit 103 executes the orthogonal transform process for difference information created by the process in step S207 in accordance with the result of the process in step S208. This process is executed similarly to the orthogonal transform process discussed with reference to the flowchart in Fig. 21, except that the orthogonal transform unit 114 of the enhancement layer image coding unit 103 executes this process for data of the enhancement layer under the control of the orthogonal transform skip unit 132, and that the flow returns to Fig. 22 after completion of the orthogonal transform process. Accordingly, the explanation of this process is not given herein.

The respective processes in step S210 and step S211 are executed similarly to the respective processes in step S131 and step S132 of the base layer coding process (Fig. 19). However, the respective processes in step S210 and step S211 are executed for enhancement layer image information by the respective processing units of the enhancement layer image coding unit 103.

In step S212, the inverse orthogonal transform unit 119 of the enhancement layer image coding unit 103 executes an inverse orthogonal transform process for an orthogonal transform coefficient or a difference value prior to orthogonal transform obtained by the process in step S211 in accordance with the result of the process in step S208. This process is executed similarly to the inverse orthogonal transform process executed in step S133 in Fig. 19, except that the inverse orthogonal transform unit 119 of the enhancement layer image coding unit 103 executes this process for data of the enhancement layer under the control of the orthogonal transform skip unit 132, and that the flow returns to Fig. 22 after completion of the inverse orthogonal transform process. Accordingly, the explanation of this process is not given herein.

The respective processes from step S213 to step S218 are executed similarly to the respective processes from step S134 to step S139 of the base layer coding process (Fig. 19). However, the respective processes from step S213 to step S218 are executed for enhancement layer image information by the respective processing units of the enhancement layer image coding unit 103.

After completion of the process in step S218, the enhancement layer coding process ends, whereupon the flow returns to Fig. 18. The enhancement layer coding process is executed for each of pictures. More specifically, the enhancement layer coding process is executed for each picture of the current layer. However, the respective processes within the enhancement layer coding process are executed for each of the processes.

[Flow of Enhancement Layer Orthogonal Transform Skip Control Process]

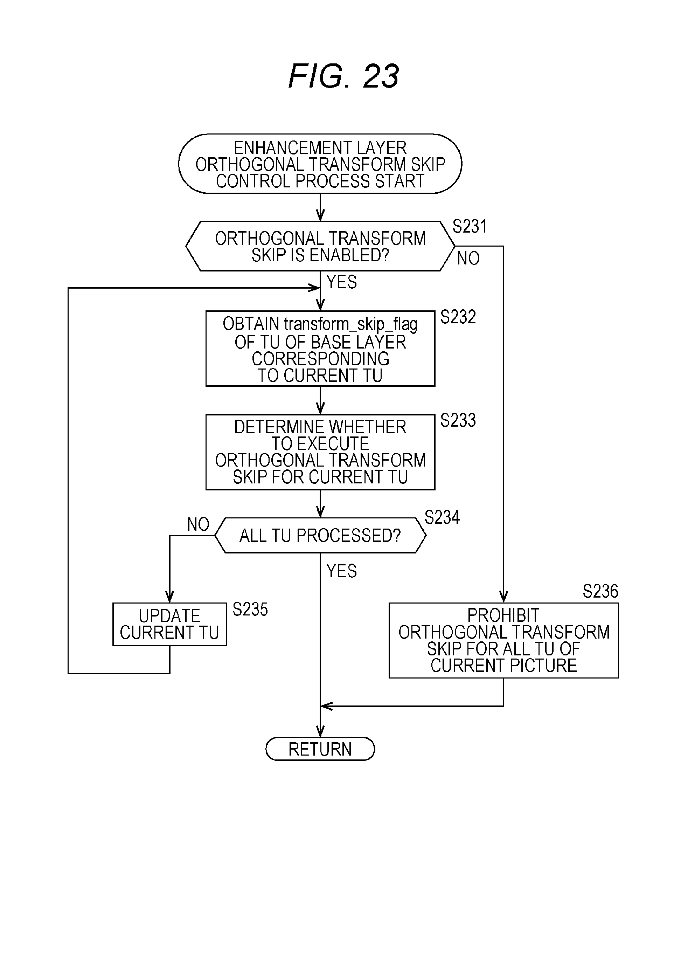

A flow example of the enhancement layer orthogonal transform skip control process executed in step S208 in Fig. 22 is hereinafter described with reference to a flowchart in Fig. 23.

With start of the enhancement layer orthogonal transform skip control process, the transform_skip_enable_flag control unit 161 determines in step S231 whether or not orthogonal transform skip has been enabled for the current picture corresponding to the processing target based on the skip enabling information (transform_skip_enable_flag) of the base layer obtained from the transform_skip_enable_flag buffer 151.

When it is determined that orthogonal transform skip has been enabled, the flow proceeds to step S232. In step S232, the transform_skip_flag control unit 162 obtains skip recognition information (transform_skip_flag) for the block (TU) of the base layer corresponding to the current block (current TU) from the transform_skip_flag buffer 152.

In step S233, the transform_skip_flag control unit 162 determines whether or not to skip the orthogonal transform process and the inverse orthogonal transform process for the current block (current TU) in accordance with the skip recognition information (transform_skip_flag) obtained in step S232. The transform_skip_flag control unit 162 supplies a control signal corresponding to this determination to the orthogonal transform unit 114 and the inverse orthogonal transform unit 119 of the enhancement layer image coding unit 103.

In step S234, it is determined whether or not all the blocks (TUs) of the current picture have been processed. When it is determined that there remain not-processed blocks (TUs), the flow proceeds to step S235. In step S235, transform_skip_flag control unit 162 sets a subsequent not-processed block (TU) to the current block (current TU) for update.

After completion of the process in step S235, the flow returns to step S232. The respective processes from step S232 to step S235 are repeatedly executed to process the respective blocks (TUs). When it is determined that all the blocks (TUs) have been processed in step S234, the enhancement layer orthogonal transform skip control process ends, whereupon the process returns to Fig. 22.

When it is determined that orthogonal transform skip has not been enabled in step S231 in Fig. 23, the flow proceeds to step S236.

In step S236, the transform_skip_enable_flag control unit 161 prohibits orthogonal transform skip for all the blocks (TUs) of the current picture. The transform_skip_enable_flag control unit 161 supplies a control signal indicating this intension to the orthogonal transform unit 114 and the inverse orthogonal transform unit 119 of the enhancement layer image coding unit 103.

After completion of the process in step S236, the enhancement layer orthogonal transform skip control process ends, whereupon the flow returns to Fig. 22. This enhancement layer orthogonal transform skip control process is executed for each arbitrary unit of processing (such as each picture). However, the respective processes within the enhancement layer orthogonal transform skip control process are executed for each of the processes.

1

By executing the respective processes in the foregoing manner, the scalable coding device 100 reduces decrease in coding efficiency, and decrease in image quality caused by coding and decoding.

<2. Second Embodiment>

[Scalable Decoding Device]

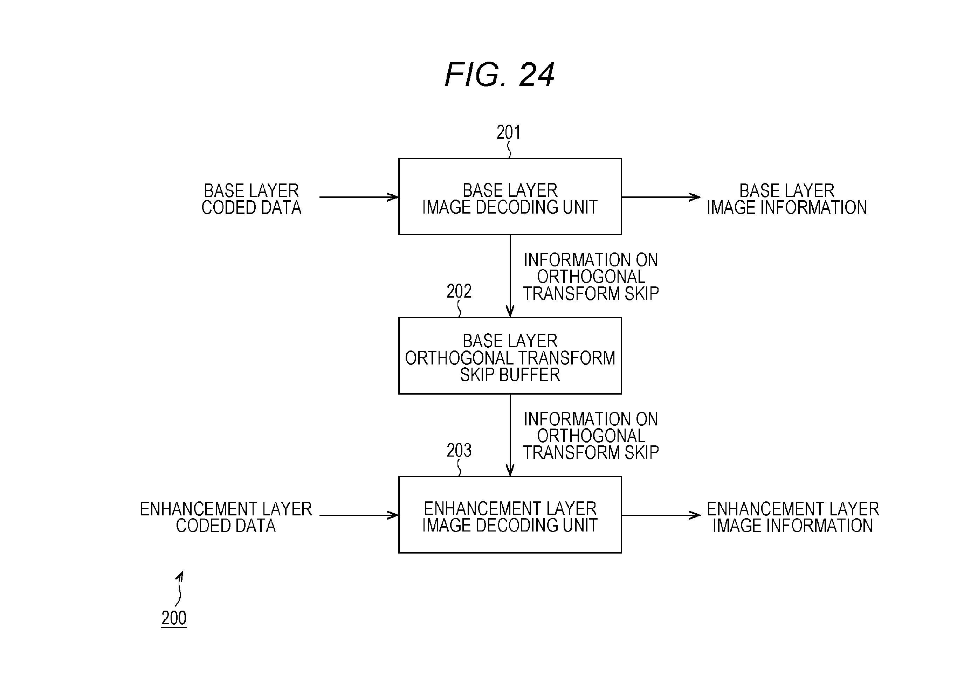

Discussed hereinafter is decoding of coded data (bit stream) subjected to scalable coding in the foregoing manner. Fig. 24 is a block diagram illustrating an example of a general configuration of a scalable decoding device corresponding to the scalable coding device 100 illustrated in Fig. 14. A scalable decoding device 200 illustrated in Fig. 24 executes scalable decoding of coded data corresponding to image data subjected to scalable coding by the scalable coding device 100, by adopting a method corresponding to the coding method of the scalable coding device 100, for example.

The scalable decoding device 200 includes a base layer image decoding unit 201, a base layer orthogonal transform skip buffer 202, and an enhancement layer image decoding unit 203.

The base layer image decoding unit 201 is an image decoding unit corresponding to the base layer image coding unit 101, and obtains base layer coded data corresponding to base layer image information coded by the base layer image coding unit 101, for example. The base layer image decoding unit 201 decodes the base layer coded data without referring to another layer, reconstitutes the base layer image information, and outputs the reconstituted base layer image information. The base layer image decoding unit 201 also obtains information on orthogonal transform skip transmitted from the coding side, and supplies the obtained information to the base layer orthogonal transform skip buffer 202.

The base layer orthogonal transform skip buffer 202 stores information on orthogonal transform skip supplied from the base layer image decoding unit 201. The base layer orthogonal transform skip buffer 202 supplies the stored information on orthogonal transform skip to the enhancement layer image decoding unit 203 in response to a request.

The enhancement layer image decoding unit 203 is an image decoding unit corresponding to the enhancement layer image coding unit 103, and obtains enhancement layer coded data corresponding to enhancement layer image information coded by the enhancement layer image coding unit 103, for example. The enhancement layer image decoding unit 203 obtains information on orthogonal transform skip of a base layer from the base layer orthogonal transform skip buffer 202, and decodes enhancement layer coded data with reference to the obtained information. The enhancement layer image decoding unit 203 reconstitutes the enhancement layer image information by this decoding process, and outputs the reconstituted enhancement layer image information.

At the time of decoding, the enhancement layer image decoding unit 203 controls skip of the inverse orthogonal transform process with reference to the information on orthogonal transform skip of the base layer transmitted from the coding side as discussed above.

Accordingly, the scalable decoding device 200 eliminates the process for transmitting information on orthogonal transform skip of the enhancement layer, thereby reducing decrease in coding efficiency.

[Base Layer Image Decoding Unit]

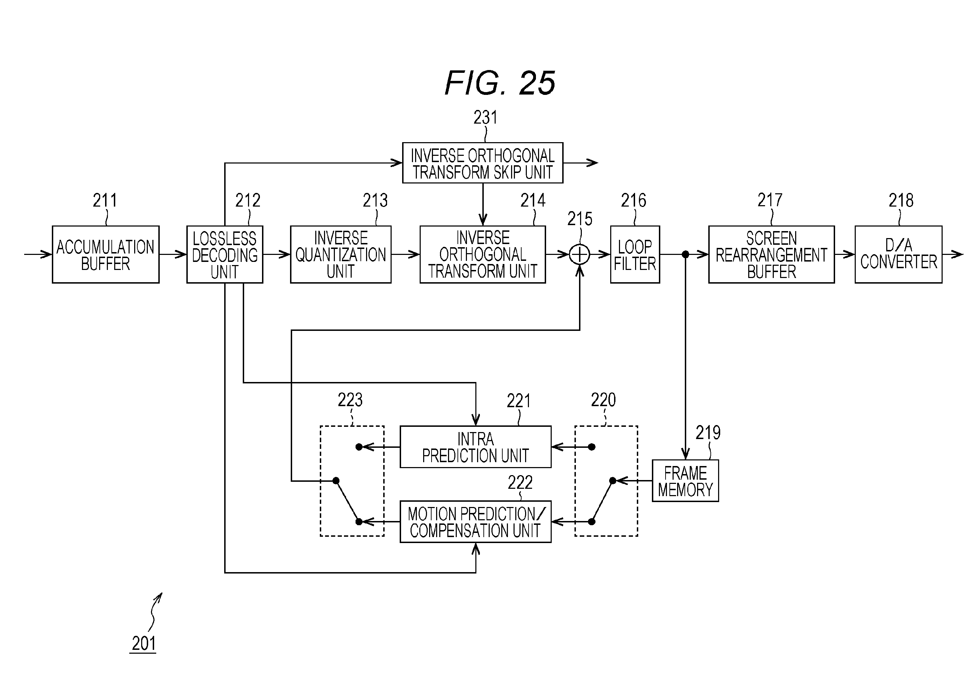

Fig. 25 is a block diagram illustrating an example of a general configuration of the base layer image decoding unit 201 in Fig. 24. As illustrated in Fig. 25, the base layer image decoding unit 201 includes an accumulation buffer 211, a lossless decoding unit 212, an inverse quantization unit 213, an inverse orthogonal transform unit 214, a calculation unit 215, a loop filter 216, a screen rearrangement buffer 217, and a D/A converter 218. The base layer image decoding unit 201 further includes a frame memory 219, a selection unit 220, an intra prediction unit 221, a motion prediction/compensation unit 222, and a selection unit 223.

The base layer image decoding unit 201 further includes an inverse orthogonal transform skip unit 231.

The accumulation buffer 211 also functions as a reception unit for receiving transmitted base layer coded data. The accumulation buffer 211 receives transmitted base layer coded data, accumulates the coded data, and supplies the coded data to the lossless decoding unit 212 at predetermined timing. Information necessary for decoding such as prediction mode information and information on orthogonal transform skip (including skip enabling information and skip recognition information, for example) is added to the base layer coded data.

The lossless decoding unit 212 receives supply of information coded by the lossless coding unit 116 from the accumulation buffer 211, and decodes this information in a system corresponding to the coding system of the lossless coding unit 116. The lossless decoding unit 212 supplies quantized coefficient data of a difference image obtained by decoding to the inverse quantization unit 213.

The lossless decoding unit 212 appropriately extracts and obtains an NAL unit included in base layer coded data and containing a video parameter set (VPS), a sequence parameter set (SPS), and a picture parameter set (PPS) and others. The lossless decoding unit 212 extracts information on the optimum prediction mode from the foregoing information, determines which of the intra prediction mode and the inter prediction mode has been selected as the optimum prediction mode based on this information, and supplies information on the optimum prediction mode to the intra prediction unit 221 or the motion prediction/compensation unit 222 corresponding to the mode determined as the selected mode. More specifically, when it is determined that the intra prediction mode has been selected as the optimum prediction mode by the base layer image coding unit 101, for example, information on the corresponding optimum prediction mode is supplied to the intra prediction unit 221. On the other hand, when it is determined that the inter prediction mode has been selected as the optimum prediction mode by the base layer image coding unit 101, for example, information on the corresponding optimum prediction mode is supplied to the motion prediction/compensation unit 222.

The lossless decoding unit 212 also extracts information necessary for inverse quantization such as quantization matrix and quantization parameters from the NAL unit or the like, for example, and supplies the extracted information to the inverse quantization unit 213. The lossless decoding unit 212 further extracts information on orthogonal transform skip containing skip enabling information (transform_skip_enable_flag), skip recognition information (transform_skip_flag) and the like from the NAL unit or the like, for example, and supplies the information to the inverse orthogonal transform skip unit 231.

The inverse quantization unit 213 inversely quantizes quantized coefficient data obtained by decoding at the lossless decoding unit 212 in a system corresponding to the quantization system of the quantization unit 115. The inverse quantization unit 213 is a processing unit similar to the inverse quantization unit 118. Accordingly, the description of the inverse quantization unit 213 is applicable to the description of the inverse quantization unit 118. However, the respective targets of data input and data output and others need to be appropriately switched in accordance with devices.

The inverse quantization unit 213 supplies the obtained coefficient data to the inverse orthogonal transform unit 214.

The inverse orthogonal transform unit 214 executes inverse orthogonal transform of the coefficient data (orthogonal transform coefficient or difference value prior to orthogonal transform) supplied from the inverse quantization unit 213 in a system corresponding to the orthogonal transform system of the orthogonal transform unit 114 as necessary under the control of the inverse orthogonal transform skip unit 231. The inverse orthogonal transform unit 214 is a processing unit similar to the inverse orthogonal transform unit 119. Accordingly, the description of the inverse orthogonal transform unit 214 is applicable to the description of the inverse orthogonal transform unit 119. However, the respective targets of data input and data output and others need to be appropriately switched in accordance with devices.

The inverse orthogonal transform unit 214 executes this inverse orthogonal transform process to obtain decoded residual data corresponding to residual data prior to orthogonal transform executed by the orthogonal transform unit 114. The decoded residual data obtained by inverse orthogonal transform is supplied to the calculation unit 215. A predicted image is also supplied to the calculation unit 215 from the intra prediction unit 221 or the motion prediction/compensation unit 222 via the selection unit 223.

The calculation unit 215 adds the predicted image to the decoded residual data to obtain decoded image data corresponding to image data before subtraction of the predicted image by the calculation unit 113. The calculation unit 215 supplies the decoded image data to the loop filter 216.

The loop filter 216 appropriately executes filtering including deblocking filter, adaptive filtering and the like for the supplied decoded image, and supplies the filtered decoded image to the screen rearrangement buffer 217 and the frame memory 219. For example, the loop filter 216 executes deblocking filter for the decoded image to remove block distortion from the decoded image. In addition, the loop filter 216 executes loop filtering for the result of deblocking filter (decoded image from which block distortion has been removed) using wiener filter to improve image quality, for example. The loop filter 216 is a processing unit similar to the loop filter 121.

The decoded image output from the calculation unit 215 may be supplied to the screen rearrangement buffer 217 and the frame memory 219 without intervention of the loop filter 216. In other words, a part or the whole of filtering by the loop filter 216 may be omitted.

The screen rearrangement buffer 217 rearranges a decoded image. More specifically, the order of the frames switched to the order for coding by the screen rearrangement buffer 112 is switched to the order of the original display. The D/A converter 218 executes D/A conversion of an image supplied from the screen rearrangement buffer 217, and outputs the converted image to a not-shown display to display the image on the display.

The frame memory 219 stores a supplied decoded image, and supplies the stored decoded image to the selection unit 220 as a reference image at predetermined timing or in response to a request from the outside such as the intra prediction unit 221 and the motion prediction/compensation unit 222.

The selection unit 220 selects a supply destination of a reference image supplied from the frame memory 219. In decoding an intra-coded image, the selection unit 220 supplies the reference image received from the frame memory 219 to the intra prediction unit 221. In decoding an inter-coded image, the selection unit 220 supplies the reference image received from the frame memory 219 to the motion prediction/compensation unit 222.

The intra prediction unit 221 appropriately receives supply of information indicating an intra prediction mode obtained by decoding header information, for example, from the lossless decoding unit 212. The intra prediction unit 221 executes intra prediction based on a reference image obtained from the frame memory 219 in the intra prediction mode used by the intra prediction unit 124 so as to create a predicted image. The intra prediction unit 221 supplies the created predicted image to the selection unit 223.

The motion prediction/compensation unit 222 obtains information obtained by decoding header information (such as optimum prediction mode information and reference image information) from the lossless decoding unit 212.

The motion prediction/compensation unit 222 executes inter prediction based on a reference image obtained from the frame memory 219 in an inter prediction mode indicated by the optimum prediction mode information obtained from the lossless decoding unit 212 so as to create a predicted image.

1 The selection unit 223 supplies the predicted image received from the intra prediction unit 221 or the predicted image received from the motion prediction/compensation unit 222 to the calculation unit 215. The calculation unit 215 adds the predicted image created using motion vectors to decoded residual data (difference image information) received from the inverse orthogonal transform unit 214 to obtain the original image by decoding.

The inverse orthogonal transform skip unit 231 obtains information on orthogonal transform skip supplied from the coding side (such as skip enabling information and skip recognition information) via the lossless decoding unit 212, determines whether or not to skip (omit) an inverse orthogonal transform process based on this information, and controls execution of the inverse orthogonal transform process executed by the inverse orthogonal transform unit 214 of the base layer image decoding unit 201 in accordance with this determination.

The inverse orthogonal transform unit 214 of the base layer image decoding unit 201 executes or skips the inverse orthogonal transform process under the control of the inverse orthogonal transform skip unit 231.

The inverse orthogonal transform skip unit 231 supplies information on orthogonal transform skip containing the obtained skip enabling information and skip recognition information to the base layer orthogonal transform skip buffer 202.

[Enhancement Layer Image Decoding Unit]

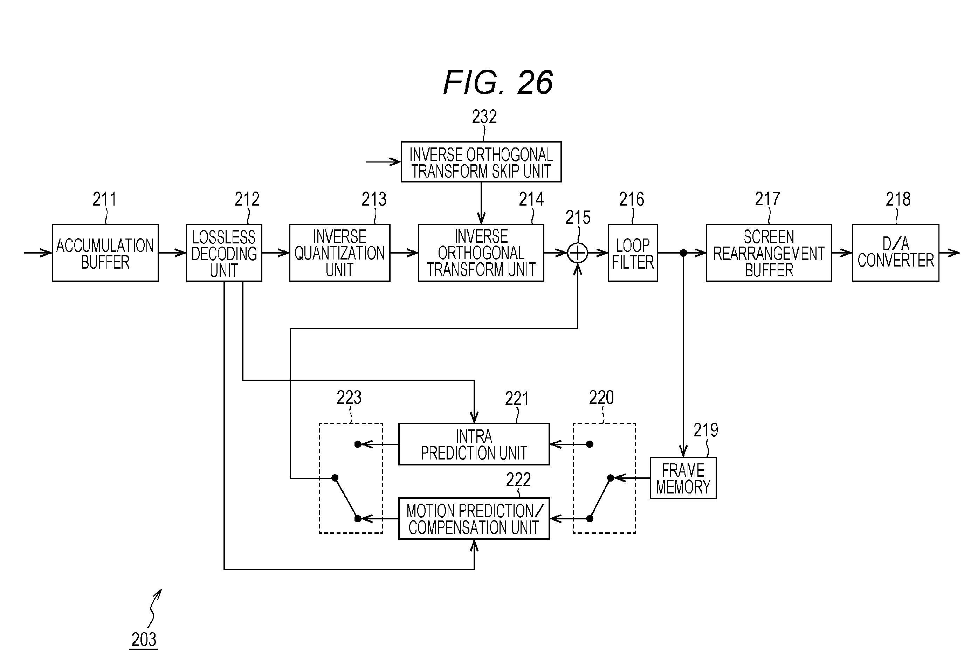

Fig. 26 is a block diagram illustrating an example of a general configuration of the enhancement layer image decoding unit 203 in Fig. 24. As illustrated in Fig. 26, the enhancement layer image decoding unit 203 has a configuration basically similar to the configuration of the base layer image decoding unit 201 in Fig. 25. More specifically, the enhancement layer image decoding units 203 includes the units from the accumulation buffer 211 to the selection unit 223.

However, the respective units of the enhancement layer image decoding unit 203 execute processes for decoding not base layer coded data but enhancement coded data. More specifically, the accumulation buffer 211 receives and accumulates enhancement layer coded data, while the D/A converter 218 outputs enhancement layer image information (decoded image) to a not-shown recording device (recording medium) and a not-shown display unit provided downstream, for example.

The enhancement layer image decoding unit 203 further includes an inverse orthogonal transform skip unit 232 in place of the inverse orthogonal transform skip unit 231.

The inverse orthogonal transform skip unit 232 controls execution of the inverse orthogonal transform process by the inverse orthogonal transform unit 214 of the enhancement layer image decoding unit 203. For example, the inverse orthogonal transform skip unit 232 obtains information on orthogonal transform skip of the base layer from the base layer orthogonal transform skip buffer 202.

The inverse orthogonal transform skip unit 232 controls the inverse orthogonal transform unit 214 of the enhancement layer image decoding unit 203 based on this information on orthogonal transform skip. More specifically, the inverse orthogonal transform unit 214 of the enhancement layer image decoding unit 203 executes or skips the inverse orthogonal transform process under the control of the inverse orthogonal transform skip unit 232.

Information on orthogonal transform skip of the enhancement layer is not transmitted. More specifically, in case of the enhancement layer image decoding unit 203, the lossless decoding unit 212 does not obtain information on orthogonal transform (skip enabling information and skip recognition information), nor supply this information to the inverse orthogonal transform skip unit 232.

[Inverse Orthogonal Transform Skip Unit and Base Layer Orthogonal Transform Skip Buffer]

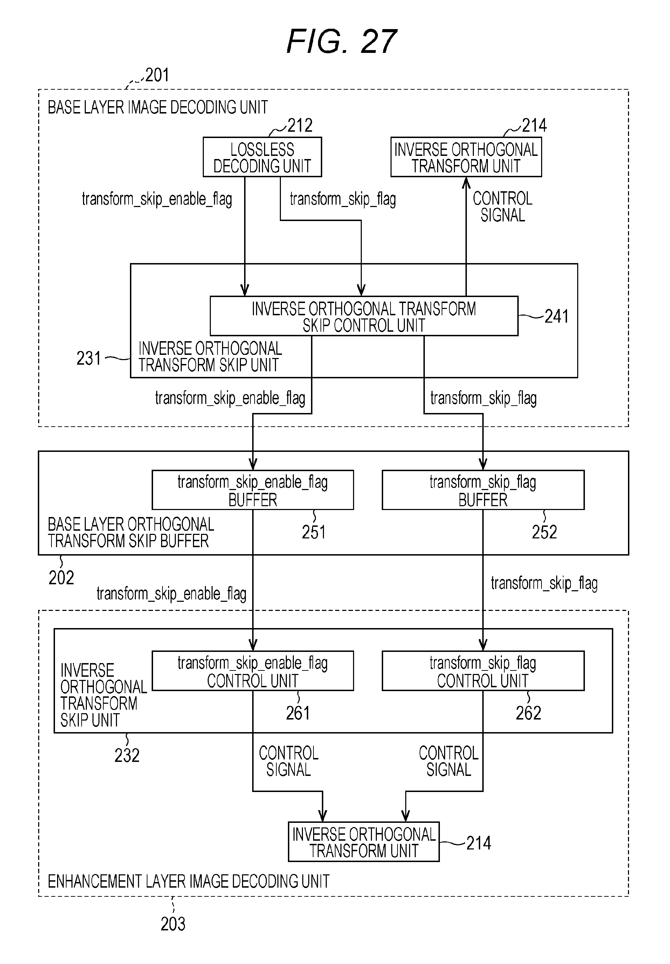

Fig. 27 is a block diagram illustrating an example of a general configuration of the inverse orthogonal transform skip unit 231, the inverse orthogonal transform skip unit 232, and the base layer orthogonal transform skip buffer 202.

As illustrated in Fig. 27, the inverse orthogonal transform skip unit 231 includes an inverse orthogonal transform skip control unit 241. The base layer orthogonal transform skip buffer 202 includes a transform_skip_enable_flag buffer 251 and a transform_skip_flag buffer 252. The inverse orthogonal transform skip unit 232 includes a transform_skip_enable_flag control unit 261 and a transform_skip_flag control unit 262.

The inverse orthogonal transform skip control unit 241 obtains, from the lossless decoding unit 212 of the base layer image decoding unit 201, information on orthogonal transform skip transmitted from the coding side (such as skip enabling information (transform_skip_enable_flag) and skip recognition information (transform_skip_flag)).

The inverse orthogonal transform skip control unit 241 determines whether or not to skip the inverse orthogonal transform process in accordance with the value of the information on orthogonal transform skip. The inverse orthogonal transform skip control unit 241 supplies a control signal for control in correspondence with this determination to the inverse orthogonal transform unit 214 of the base layer image decoding unit 201 to control execution of the inverse orthogonal transform process.

The inverse orthogonal transform skip control unit 241 further supplies the information on orthogonal transform skip obtained from the lossless decoding unit 212 (such as skip enabling information (transform_skip_enable_flag) and skip recognition information (transform_skip_flag)) to the base layer orthogonal transform skip buffer 202.

The transform_skip_enable_flag buffer 251 of the base layer orthogonal transform skip buffer 202 stores skip enabling information (transform_skip_enable_flag) supplied from the inverse orthogonal transform skip control unit 241. The transform_skip_enable_flag buffer 251 supplies the stored skip enabling information (transform_skip_enable_flag) of the base layer to the transform_skip_enable_flag control unit 261 in response to a request from the transform_skip_enable_flag control unit 261.

The transform_skip_flag buffer 252 of the base layer orthogonal transform skip buffer 202 stores skip recognition information (transform_skip_flag) of the base layer supplied from the inverse orthogonal transform skip control unit 241. The transform_skip_flag buffer 252 supplies the stored skip recognition information (transform_skip_flag) of the base layer to the transform_skip_flag control unit 262 in response to a request from the transform_skip_flag control unit 262.

The transform_skip_enable_flag control unit 261 of the inverse orthogonal transform skip unit 232 obtains skip enabling information (transform_skip_enable_flag) of a picture of the base layer corresponding to the current picture from the transform_skip_enable_flag buffer 251, and supplies a control signal corresponding to the value of this information to the inverse orthogonal transform unit 214 of the enhancement layer image decoding unit 203 to control execution of the inverse orthogonal transform process.

On the other hand, the transform_skip_flag control unit 262 of the inverse orthogonal transform skip unit 232 obtains skip recognition information (transform_skip_flag) of a block (TU) of the base layer corresponding to the current block (current TU) from the transform_skip_flag buffer 252, and supplies a control signal corresponding to the value of this information to the inverse orthogonal transform unit 214 of the enhancement layer image decoding unit 203 to control execution of the inverse orthogonal transform process.

By this method, the scalable decoding device 200 allows sharing of information on orthogonal transform skip by respective layers. Accordingly, the salable decoding device 200 eliminates the necessity for transmission of information on orthogonal transform skip of the enhancement layer as a part of image compression information to be output, thereby improving coding efficiency.

[Flow of Decoding Process]

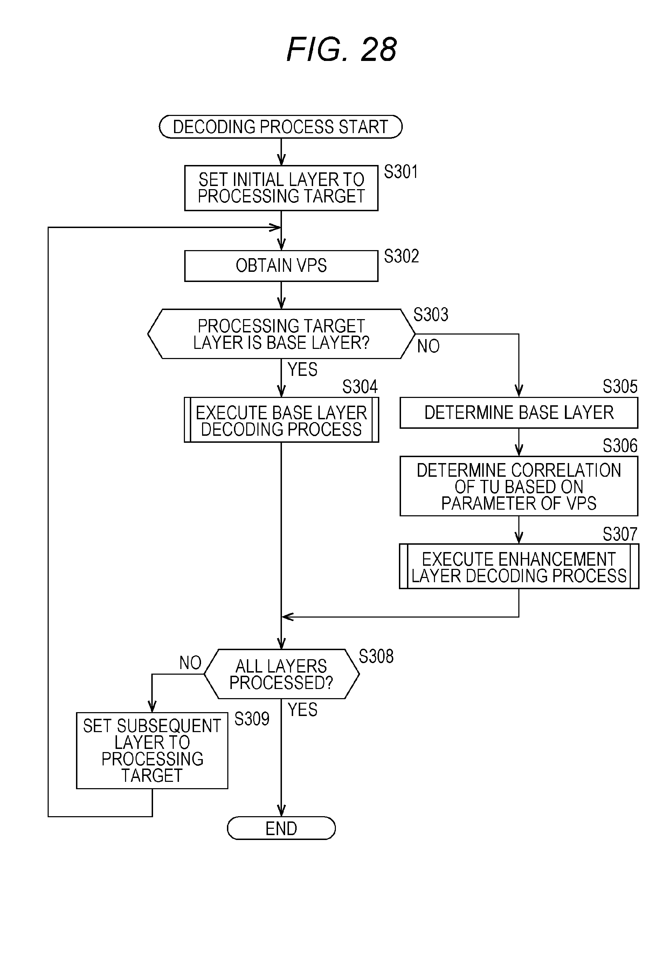

Described hereinbelow are flows of respective processes executed by the scalable decoding device 200 thus constructed. A flow example of a decoding process is initially discussed with reference to Fig. 28.

With start of a coding process, the scalable decoding device 200 sets an initial layer included in multiple layers of decoded data to a processing target in step S301.

In step S302, the scalable decoding device 200 obtains a video parameter set (VPS) transmitted from the coding side. In step S303, the scalable decoding device 200 refers to the obtained video parameter set (VPS), and determines whether or not the current layer corresponding to the processing target is a base layer based on the value of parameter diff_ref_layer concerning the current layer and contained in the video parameter set (VPS).

When it is determined that the current layer is a base layer based on the value "0" of diff_ref_layer of the current layer, the flow proceeds to step S304.

In step S304, the base layer image decoding unit 201 executes a base layer decoding process for decoding base layer coded data. After completion of the process in step S304, the flow proceeds to step S308.

When it is determined in step S303 that the current layer is an enhancement layer based on the value "not 0" of diff_ref_layer of the current layer, the flow proceeds to step S305.

In step S305, the scalable decoding device 200 determines a base layer corresponding to the current layer.

In step S306, the scalable decoding device 200 determines the correlation of blocks (TUs) between the base layer and the enhancement layer based on parameters of the video parameter set (VPS).

In step S307, the enhancement layer image decoding unit 203 executes an enhancement layer decoding process for decoding enhancement layer coded data. After completion of the process in step S307, the flow proceeds to step S308.

In step S308, the scalable decoding device 200 determines whether or not all the layers have been processed. When it is determined that there remain not-processed layers, the flow proceeds to step S309.

In step S309, the scalable decoding device 200 sets a subsequent not-processed layer to a new processing target.

After a new current layer is determined, the flow returns to step S302. Then, the processes from step S302 to step S309 are repeated to execute the decoding process for the respective layers.

When it is determined that all the layers have been processed in step S308, the decoding process ends.

[Flow of Base Layer Decoding Process]

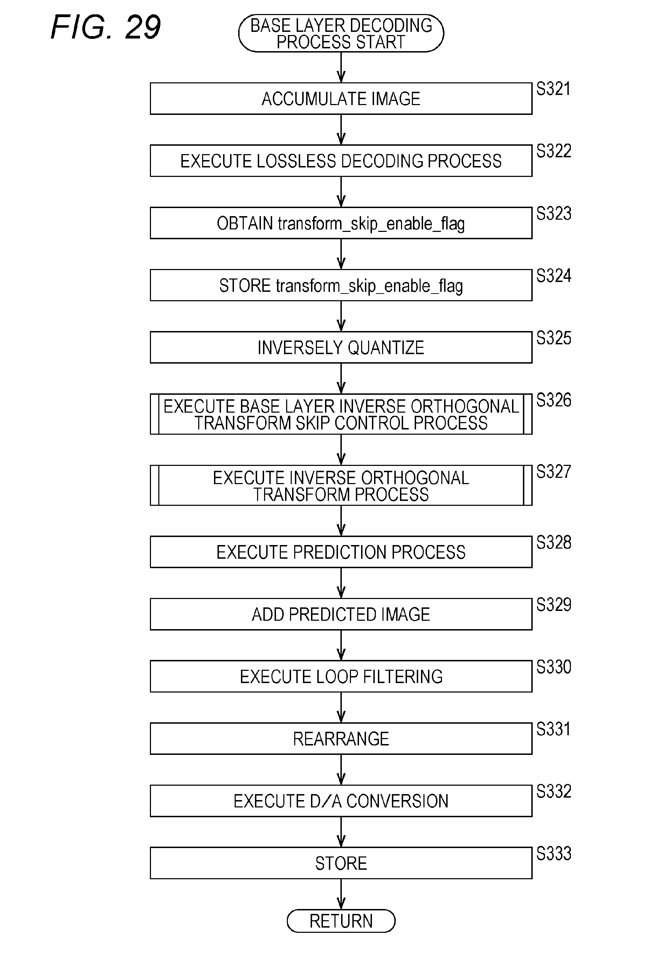

Discussed hereinbelow is a flow example of the base layer decoding process executed in step S304 in Fig. 28 with reference to a flowchart in Fig. 29.

With start of the base layer decoding process, the accumulation buffer 211 of the base layer image decoding unit 201 accumulates a bit stream of a base layer transmitted from the coding side in step S321. In step S322, the lossless decoding unit 212 decodes the bit stream (coded difference image information) of the base layer supplied from the accumulation buffer 211. More specifically, the lossless decoding unit 212 decodes I picture, P picture, and B picture coded by the lossless coding unit 116. At this time, various types of information contained in the bit stream are also decoded such as header information other than the difference image information.

In step S323, the inverse orthogonal transform control unit 241 obtains skip enabling information (transform_skip_enable_flag) extracted from the coded data of the base layer by the lossless decoding unit 212. In step S324, the inverse orthogonal transform skip control unit 241 supplies the skip enabling information (transform_skip_enable_flag) obtained in step S323 to the transform_skip_enable_flag buffer 251 to store the skip enabling information (transform_skip_enable_flag) in the transform_skip_enable_flag buffer 251.

In step S325, the inverse quantization unit 213 inversely quantizes a quantized coefficient obtained by the process in step S322.

In step S326, the inverse orthogonal transform skip control unit 241 executes a base layer inverse orthogonal transform skip control process. In step S327, the inverse orthogonal transform unit 214 executes an inverse orthogonal transform process for the current block (current TU) in accordance with the control in step S326.

In step S328, the intra prediction unit 221 or the motion prediction/compensation unit 222 executes a prediction process to create a predicted image. In this case, the prediction process is executed in a prediction mode applied at the time of coding and determined by the lossless decoding unit 212. More specifically, when intra prediction is applied at the time of coding, for example, the intra prediction unit 221 creates a predicted image in the intra prediction mode determined as the optimum at the time of coding. On the other hand, when inter prediction is applied at the time of coding, for example, the motion prediction/compensation unit 222 creates a predicted image in the inter prediction mode determined as the optimum at the time of coding.

In step S329, the calculation unit 215 adds the predicted image created in step S328 to the difference image information obtained by the inverse orthogonal transform process in step S327. As a result, the original image is obtained by decoding.

In step S330, the loop filter 216 appropriately executes loop filtering for the decoded image obtained in step S329.

In step S331, the screen rearrangement buffer 217 rearranges the image filtered in step S330. More specifically, the order of the frames rearranged for coding by the screen rearrangement buffer 112 is switched to the order of the original display.

In step S332, the D/A converter 218 executes D/A conversion of the image subjected to rearrangement of the frames in step S331. The image thus converted is output to a not-shown display to display the image thereon.

In step S333, the frame memory 219 stores the image loop-filtered in step S330.

After completion of the process in step S333, the base layer decoding process ends, whereupon the flow returns to Fig. 28.

[Flow of Base Layer Inverse Orthogonal Transform Skip Control Process]

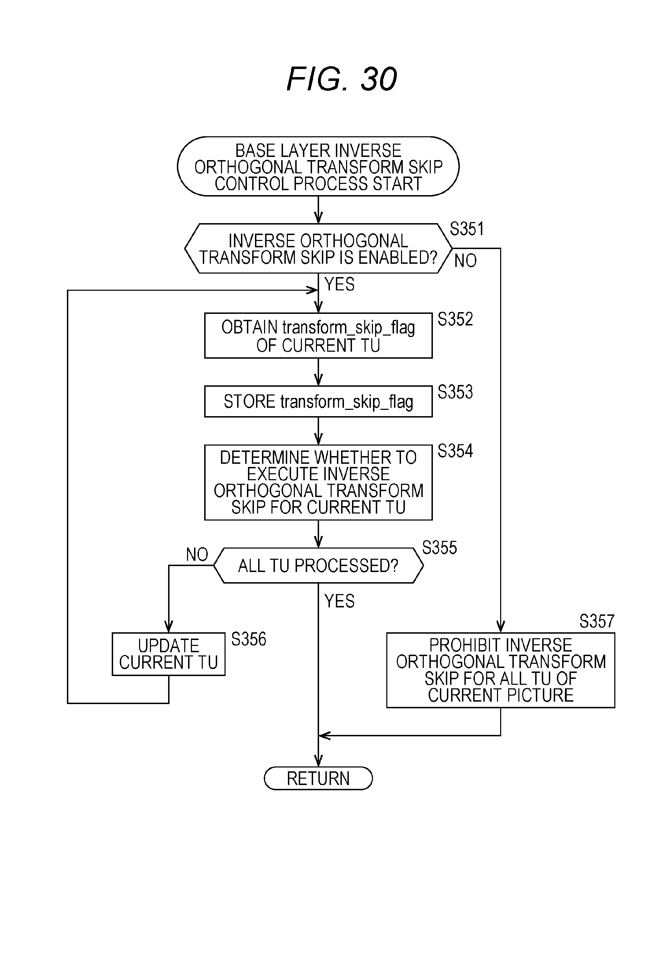

A flow example of the base layer inverse orthogonal transform skip control process executed in step S326 in Fig. 29 is hereinafter described with reference to a flowchart in Fig. 30.

With start of the base layer inverse orthogonal transform skip control process, the inverse orthogonal transform skip control unit 241 determines in step S351 whether or not skip of the inverse orthogonal transform process for the current picture has been enabled based on the skip enabling information (transform_skip_enable_flag) obtained by the process in step S323 in Fig. 29.

When it is determined that skip of the inverse orthogonal transform process has been enabled, the flow proceeds to step S352. In step S352, the inverse orthogonal transform skip control unit 241 obtains skip recognition information (transform_skip_flag) for the current block (current TU) from the lossless decoding unit 212 of the base layer image decoding unit 201.

In step S353, the inverse orthogonal transform skip control unit 241 supplies the skip recognition information (transform_skip_flag) obtained in step S352 to the transform_skip_flag buffer 252 to store the skip recognition information (transform_skip_flag) in the transform_skip_flag buffer 252.

In step S354, the inverse orthogonal transform skip control unit 241 determines whether or not to skip the inverse orthogonal transform process for the current block (current TU). The inverse orthogonal transform skip control unit 241 supplies a control signal corresponding to this determination to the inverse orthogonal transform unit 214 of the base layer image decoding unit 201.

In step S355, the inverse orthogonal transform skip control unit 241 determines whether or not all the blocks (TUs) have been processed for the current picture. When it is determined that there remain not-processed blocks (TUs), the flow proceeds to step S356. In step S356, the inverse orthogonal transform skip control unit 241 sets a subsequent not-processed block (TU) to the current block (current TU) for update.

After completion of the process in step S356, the flow returns to step S352. The respective processes from step S352 to step S356 are repeated to process the respective blocks (TUs). When it is determined that all the blocks (TUs) have been processed in step S355, the base layer orthogonal transform skip control process ends, whereupon the flow returns to Fig. 29.

When it is determined that skip of the inverse orthogonal transform has not been enabled in step S351 in Fig. 30, the flow proceeds to step S357.

In step S357, the inverse orthogonal transform skip control unit 241 prohibits orthogonal transform skip for all the blocks (TUs) of the current picture. The inverse orthogonal transform skip control unit 241 supplies a control signal indicating this intension to the inverse orthogonal transform unit 214 of the base layer image decoding unit 201.

After completion of the process in step S357, the base layer inverse orthogonal transfer skip control process ends, whereupon the flow returns to Fig. 29. This base layer inverse orthogonal transform skip control process is executed for each arbitrary unit of processing (such as each picture). However, the respective processes within the base layer inverse orthogonal transform skip control process are executed for each of the processes.

[Flow of Inverse Orthogonal Transform Process]

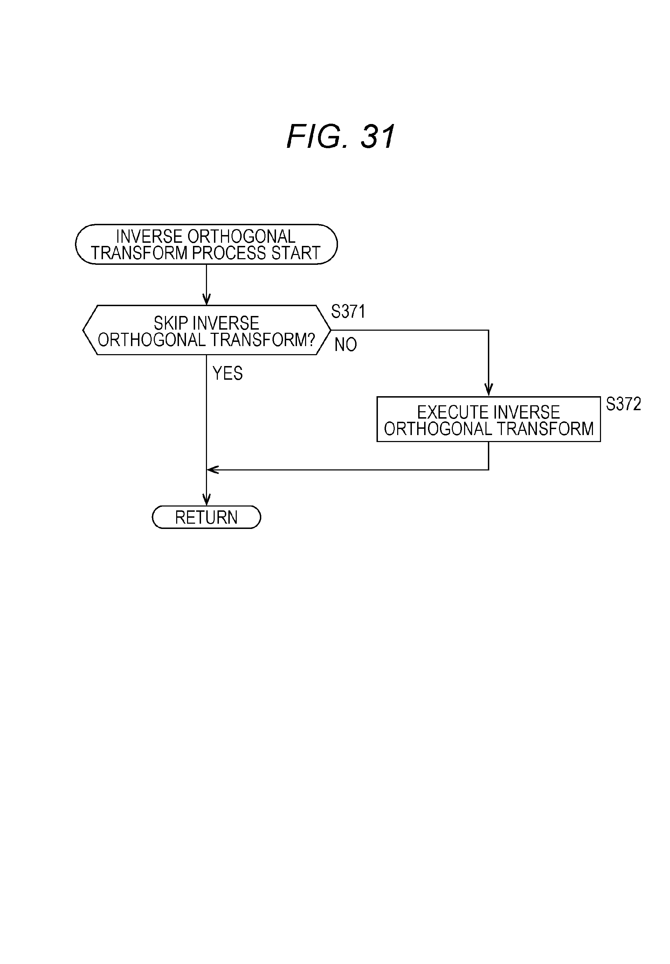

A flow example of the inverse orthogonal transform process executed in step S327 in Fig. 29 is hereinafter described with reference to a flowchart in Fig. 31.

With start of the inverse orthogonal transform process, the inverse orthogonal transform unit 214 determines whether or not to skip inverse orthogonal transform for the current block under the control of the inverse orthogonal transform skip control unit 241 in step S371. When it is determined that the inverse orthogonal transform is to be skipped, the inverse orthogonal transform process ends. Then, the flow returns to Fig. 29.

When it is determined that the inverse orthogonal transform is not to be skipped for the current block in step S371 in Fig. 31, the flow proceeds to step S372.

In step S372, the inverse orthogonal transform unit 214 executes inverse orthogonal transform of an orthogonal transform coefficient of the current block. After completion of the process in step S372, the inverse orthogonal transform process ends, whereupon the process returns to Fig. 29.

This inverse orthogonal transform process is executed for each arbitrary unit of processing (such as each TU). However, the respective processes within the inverse orthogonal transform process are executed for each of the processes.

[Flow of Enhancement Layer Coding Process]

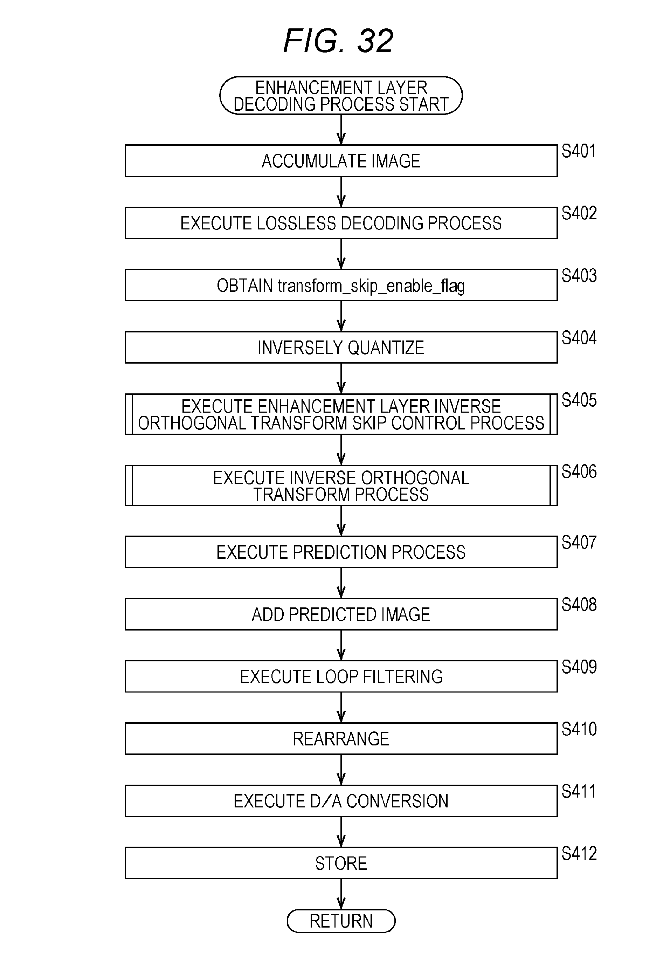

A flow example of the enhancement layer decoding process executed in step S307 in Fig. 28 is hereinafter described with reference to a flowchart in Fig. 32.

The respective processes in step S401 and step S402 are executed similarly to the respective processes in step S321 and step S322 in the base layer decoding process (Fig. 29). However, the respective processes in step S401 and step S402 are executed by the respective processing units of the enhancement layer image decoding unit 203 for enhancement layer coded data.

In step S403, the transform_skip_enable_flag control unit 261 of the enhancement layer image decoding unit 203 obtains skip enabling information (transform_skip_enable_flag) for the current picture of the base layer corresponding to the current layer from the transform_skip_enable_flag buffer 251 of the base layer orthogonal transform skip buffer 202.

The process in step S404 is executed similarly to the process in step S325 of the base layer coding process (Fig. 29). However, the process in step S404 is executed by the respective processing units of the enhancement layer image decoding unit 203 for data of the enhancement layer.

In step S405, the inverse orthogonal transform skip unit 232 executes an enhancement layer inverse orthogonal transform skip control process.

In step S406, the inverse orthogonal transform unit 214 of the enhancement layer image decoding unit 203 executes the orthogonal transform process for a difference image created by the process in step S404 in accordance with the result of the process in step S405. This process is executed similarly to the inverse orthogonal transform process discussed with reference to the flowchart in Fig. 31, except that the inverse orthogonal transform unit 214 of the enhancement layer image decoding unit 203 executes this process for data of the enhancement layer under the control of the inverse orthogonal transform skip unit 232, and that the flow returns to Fig. 32 after completion of the inverse orthogonal transform process. Accordingly, the explanation of this process is not given herein.

The respective processes from step S407 to step S412 are executed similarly to the respective processes from step S328 to step S333 in the base layer decoding process (Fig. 29). However, the respective processes from step S407 to step S412 are executed by the respective processing units of the enhancement layer image decoding unit 203 for data of the enhancement layer.

After completion of the process in step S412, the enhancement layer decoding process ends, whereupon the flow returns to Fig. 28. The enhancement layer decoding process is executed for each picture, for example. More specifically, the enhancement layer decoding process is executed for each picture of the current layer. However, the respective processes within the enhancement layer decoding process are executed for each of the processes.

[Flow of Enhancement Layer Inverse Orthogonal Transform Skip Control Process]

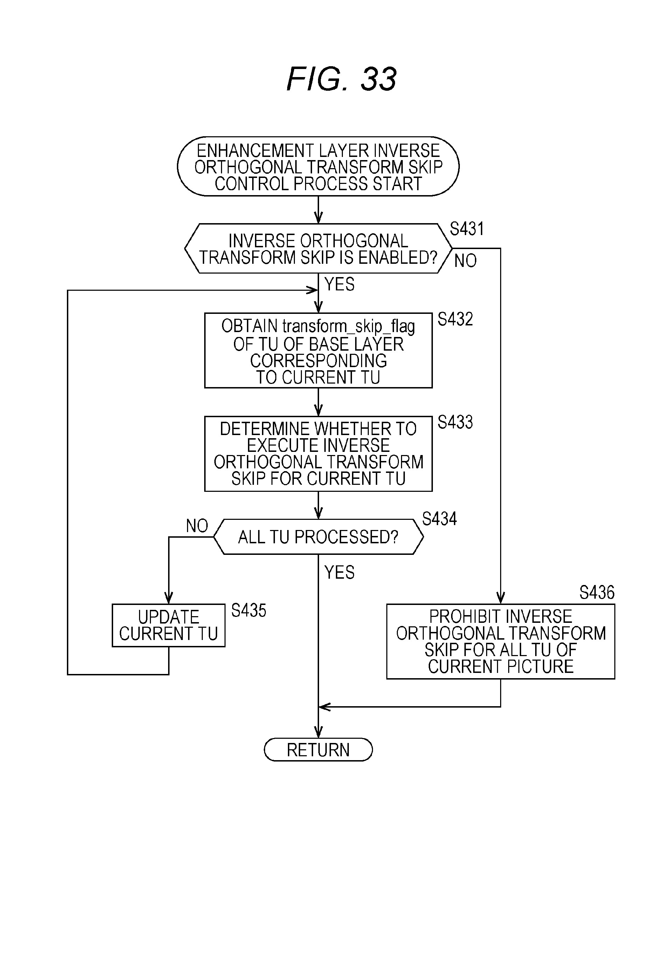

A flow example of the enhancement layer inverse orthogonal transform skip control process executed in step S405 in Fig. 32 is hereinafter described with reference to a flowchart in Fig. 33.

With start of the enhancement layer inverse orthogonal transform skip control process, the transform_skip_enable_flag control unit 261 determines in step S431 whether or not skip of the inverse orthogonal transform process has been enabled for the current picture corresponding to the processing target based on the skip enabling information (transform_skip_enable_flag) of the base layer obtained from the transform_skip_enable_flag buffer 251.

When it is determined that skip of the inverse orthogonal transform process has been enabled, the flow proceeds to step S432. In step S432, the transform_skip_flag control unit 262 obtains skip recognition information (transform_skip_flag) for a block (TU) of the base layer corresponding to the current block (current TU) from the transform_skip_flag buffer 252.

In step S433, the transform_skip_flag control unit 262 determines whether or not to skip the inverse orthogonal transform process for the current block (current TU) based on the skip recognition information (transform_skip_flag) obtained in step S432. The transform_skip_flag control unit 262 supplies a control signal corresponding to this determination to the inverse orthogonal transform unit 214 of the enhancement layer image decoding unit 203.

In step S434, the transform_skip_flag control unit 262 determines whether or not all the blocks (TUs) have been processed for the current picture. When it is determined that there remain not-processed blocks (TUs), the flow proceeds to step S435. In step S435, the transform_skip_flag control unit 262 sets a subsequent not-processed block (TU) to the current block (current TU) for update.

After completion of the process in step S435, the flow returns to step S432. The respective processes from step S432 to step S435 are repeatedly executed to process the respective blocks (TUs). When it is determined that all the blocks (TUs) have been processed in step S434, the enhancement layer inverse orthogonal transform skip control process ends. Then, the flow returns to Fig. 32.

When it is determined that skip of the inverse orthogonal transform process has not been enabled in step S431 in Fig. 33, the flow proceeds to step S436.

In step S436, the transform_skip_enable_flag control unit 261 prohibits skip of the inverse orthogonal transform process for all the blocks (TUs) of the current picture. The transform_skip_enable_flag control unit 261 supplies a control signal indicating this intention to the inverse orthogonal transform unit 214 of the enhancement layer image decoding unit 203.

After completion of the process in step S436, the enhancement layer inverse orthogonal transform skip control process ends, whereupon the process returns to Fig. 32. This enhancement layer inverse orthogonal transform skip control process is executed for each arbitrary unit of processing (such as each picture). However, the respective processes within the enhancement layer inverse orthogonal transform skip control process are executed for each of the processes.

By executing the respective processes in the foregoing manner, the scalable decoding device 200 reduces decrease in coding efficiency, and decrease in image quality caused by coding and decoding.

<3. Others>

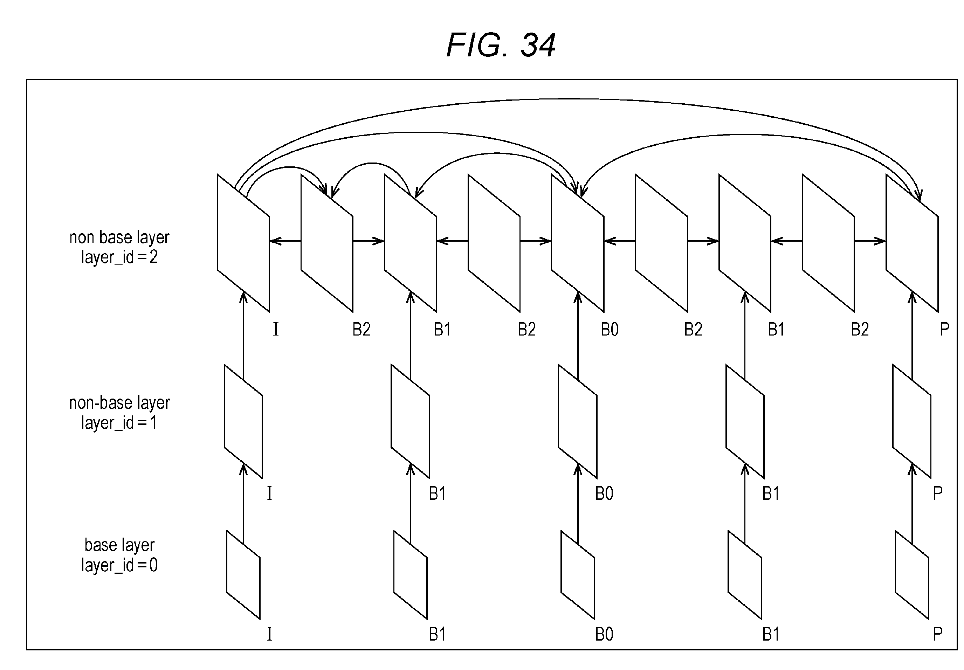

According to the above description, image data is layered into multiple layers by scalable coding. In this case, the number of layers may be arbitrarily determined. In addition, only a part of a picture may be layered as illustrated in an example in Fig. 34. According to the above description, an enhancement layer is processed with reference to a base layer at the time of coding or decoding. However, the enhancement layer may be processed with reference to another processed enhancement layer.

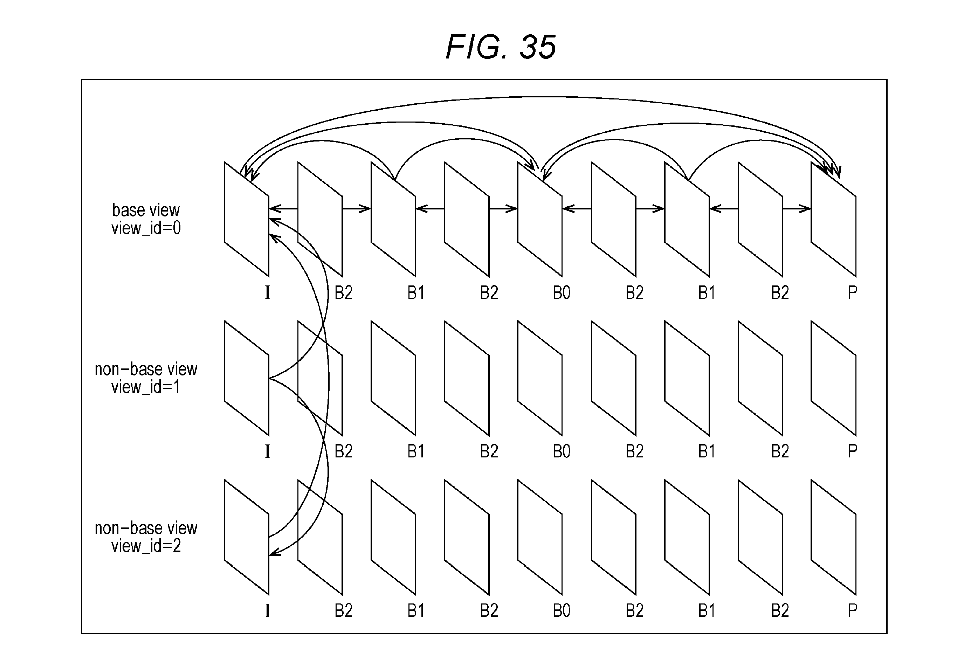

The layers discussed herein include views obtained by multi-view image coding and decoding. In other words, the present technology is applicable to multi-view image coding and multi-view image decoding. Fig. 35 illustrates an example of multi-view image coding system.

As illustrated in Fig. 35, multi-view images include images of multiple views (views). In this case, an image of a predetermined view in the multiple views is designated as a base view image. Images of respective views other than the base view image are handled as non-base view images.

In coding and decoding the multi-view images illustrated in Fig. 35, coding and decoding of the images of the respective views are executed for each. In this case, the methods discussed herein may be applied for coding and decoding of the respective views. More specifically, information on orthogonal transform skip may be shared by multiple views in the multiview coding and decoding.

For example, a base view is coded and decoded without referring to information on orthogonal transform skip for other views, while a non-base view is coded and decoded with reference to information on orthogonal transform skip for the base view. In this case, only information on orthogonal transform skip for the base view is transmitted.

By this method, decrease in coding efficiency is reduced in multi-view coding and decoding similarly to scalable coding and decoding.

As obvious from above, the present technology is applicable to any types of image coding apparatus and image decoding apparatus which adopt coding and decoding system executing orthogonal transform skip (Transform Skip).

In addition, the present technology is applicable to image coding apparatus and image decoding apparatus used in receiving image information (bit stream) compressed by discrete cosine transform or other orthogonal transform and motion compensation, such as MPEG, H.26x, via satellite broadcasting, cable television, the Internet, or a cellular phone, or other network media. In addition, the present technology is applicable to image coding apparatus and image decoding apparatus used in processing on a recording medium such as optical and magnetic disks, and a flash memory. Furthermore, the present technology is applicable to an orthogonal transform device or an inverse orthogonal transform device included in these image coding apparatuses and image decoding apparatuses, for example.

<4. Third Embodiment>

[Computer]

The foregoing series of processes may be executed either by hardware or by software. When the series of processes are executed by software, programs constituting the software are installed into a computer. The computer in this context includes a computer incorporated into dedicated hardware, and a computer capable of executing various types of functions under various types of programs installed into the computer, such as a general-purpose personal computer.

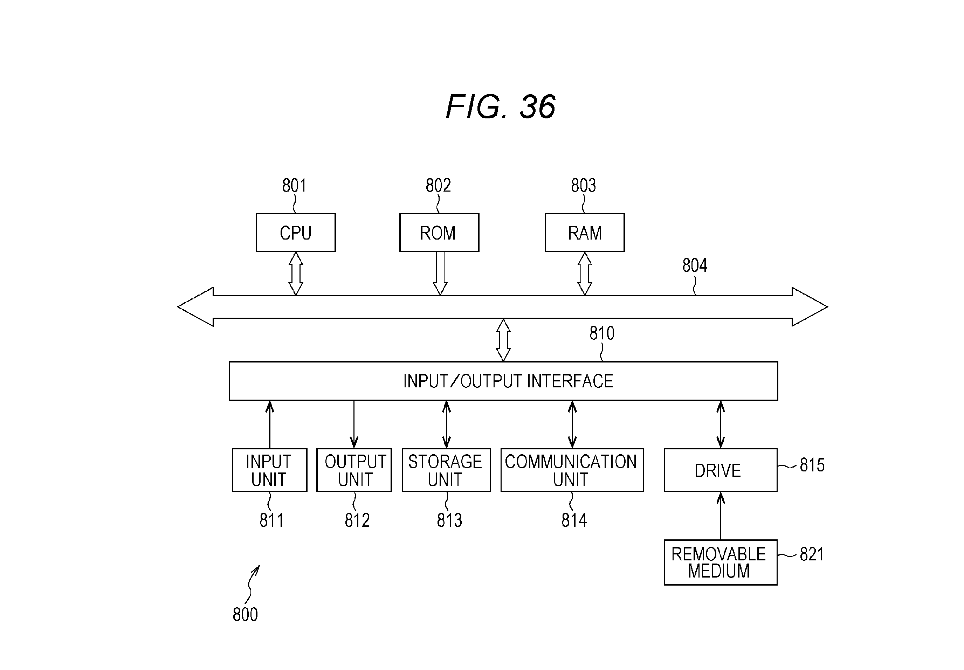

Fig. 36 is a block diagram illustrating a configuration example of hardware of a computer which executes the foregoing series of processes under programs.

In a computer 800 illustrated in Fig. 36, a CPU (Central Processing Unit) 801, ROM (Read Only Memory) 802, and RAM (Random Access Memory) 803 are connected with one another via a bus 804.

An input/output interface 810 is further connected with the bus 804. An input unit 811, an output unit 812, a storage unit 813, a communication unit 814, and a drive 815 are connected with the input/output interface 810.

The input unit 811 is constituted by a keyboard, a mouse, a microphone, a touch panel, an input terminal and others, for example. The output unit 812 is constituted by a display, a speaker, an output terminal and others, for example. The storage unit 813 is constituted by a hard disk, RAM disk, non-volatile memory and others, for example. The communication unit 814 is constituted by a network interface, for example. The drive 815 drives a removable medium 821 such as a magnetic disk, an optical disk, a magneto-optical disk, and semiconductor memory.

According to the computer thus constructed, the CPU 801 executes programs stored in the storage unit 813 and loaded into the RAM 803 via the input/output interface 810 and the bus 804 to perform the foregoing series of processes, for example. The RAM 803 also appropriately stores data necessary for execution of the various processes by the CPU 801.

The programs executed by the computer (CPU 801) may be recorded on the removable medium 821 as a package medium, for example, and used in this form. In addition, the programs may be presented via a wired or wireless transmission medium such as a local area network, the Internet, and digital satellite broadcasting.

The programs may be installed into the storage unit 813 of the computer via the input/output interface 810 by attachment of the removable medium 821 to the drive 815. Alternatively, the programs may be received by the communication unit 814 via a wired or wireless transmission medium, and installed into the storage unit 813. Instead, the programs may be installed beforehand in the ROM 802 or the storage unit 813.

The programs executed by the computer may be programs under which processes are executed in time series in the order described in the present specification, or executed in parallel or at necessary timing such as on occasions of calls.

The steps describing the programs recorded in a recording medium contain not only processes executed in time series in the order discussed herein, but also processes executed in parallel or individually, rather than executed in time series.

According to the present specification, the system refers to a collection of multiple constituent elements (such as devices and modules (parts)), and includes both cases where all the constituent elements are contained in the same housing, and where some of the constituent elements are not contained in the same housing. Accordingly, multiple devices accommodated in separate houses and connected via a network, and one device including multiple modules accommodated within one housing are both regarded as systems.

According to the foregoing description, a configuration discussed as one device (or processing unit) may be divided into multiple devices (or processing units). On the contrary, the configuration discussed as multiple devices (or processing units) may be combined into one device (or processing unit). Needless to say, configurations not discussed herein may be added to the configurations of the respective devices (or respective processing units). In addition, when the configuration and operation of the whole system are substantially identical, a part of a configuration of a certain device (or pressing unit) may be incorporated into a configuration of another device (or another processing unit).

While the preferred embodiments according to the present disclosure have been described in detail with reference to the accompanying drawings, the technical scope of the present disclosure is not limited to these examples. It is obvious that various examples of changes and modifications may be presented by those having ordinary knowledge in the technical field of the present disclosure in the light of the present technology within the scope of the technical spirit described in the claims. It is therefore understood that these changes and modifications are also contained in the technical range of the present disclosure as a matter of course.

For example, the present technology is applicable to a system of cloud computing where one function is shared by multiple devices and processed in cooperation with one another via a network.

The respective steps discussed with reference to the foregoing flowcharts may be shared and executed by multiple devices rather than executed by one device.

When multiple processes are contained in one step, the multiple processes contained in the one step may be shared and executed by multiple devices rather than executed by one device.

The image coding apparatus and image decoding apparatus according to the foregoing embodiments are applicable to satellite broadcasting, wired broadcasting such as cable TV, distribution on the Internet, a transmitter or receiver used for distribution to a terminal via cellular communication, a recording device for recording images on a medium such as an optical disk, a magnetic disk, and a flash memory, a reproducing device for reproducing images from these types of storage medium, and other various types of electronic devices. Discussed hereinbelow are four application examples.

<5. Application Examples>

[First Application Example: Television Receiver]

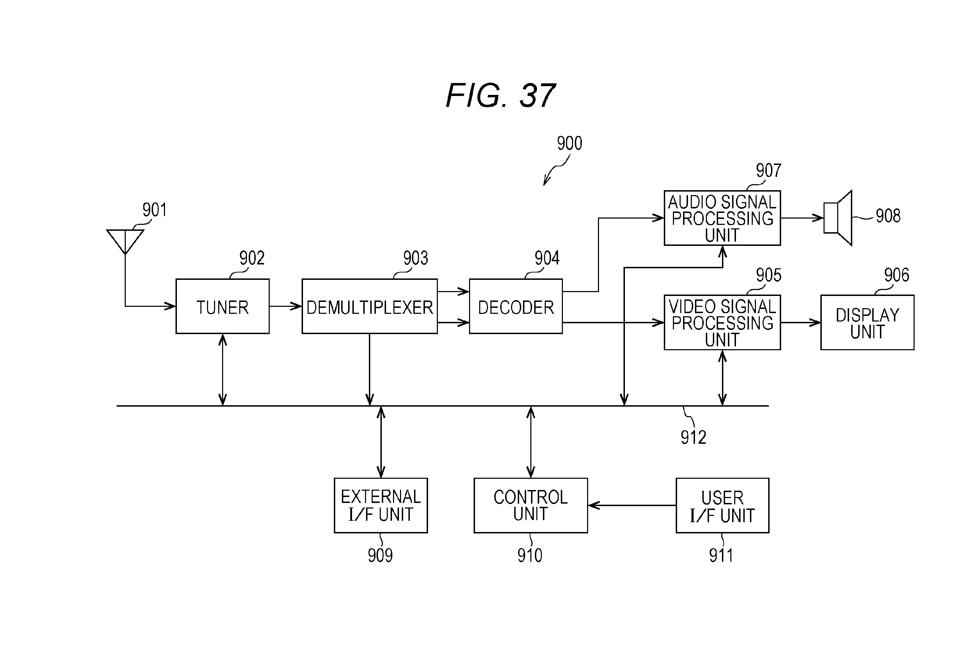

Fig. 37 illustrates an example of a general configuration of a television device to which the foregoing embodiments are applied. A television device 900 includes an antenna 901, a tuner 902, a demultiplexer 903, a decoder 904, a video signal processing unit 905, a display unit 906, an audio signal processing unit 907, a speaker 908, an external interface 909, a control unit 910, a user interface 911, and a bus 912.

The tuner 902 extracts a signal in a desired channel from a broadcasting signal received via the antenna 901, and demodulates the extracted signal. Then, the tuner 902 outputs a coded bit stream obtained by demodulation to the demultiplexer 903. Accordingly, the tuner 902 has a function as a transmitting unit of the television device 900 for receiving a coded stream corresponding to a coded image.

The demultiplexer 903 separates a video stream and an audio stream of a program corresponding to a viewing target from the coded bit stream, and outputs the respective separated streams to the decoder 904. The demultiplexer 903 also extracts auxiliary data such as EPG (Electronic Program Guide) from the coded bit stream, and supplies the extracted data to the control unit 910. When the coded bit stream is a scrambled stream, the demultiplexer 903 may descramble the coded bit stream.

The decoder 904 decodes the video stream and the audio stream input from the demultiplexer 903. Then, the decoder 904 outputs video data created by decoding to the video signal processing unit 905. The decoder 904 also outputs audio data created by decoding to the audio signal processing unit 907.

The video signal processing unit 905 reproduces the video data input from the decoder 904, and displays a video image on the display unit 906. The video signal processing unit 905 may receive application screens supplied via a network and display the application screens on the display unit 906. The video signal processing unit 905 may execute additional processes such as noise removal for the video data in accordance with settings. The video signal processing unit 905 may create images of GUI (Graphical User Interface) such as menus, buttons, and a cursor, and superimpose the created images on output images.

The display unit 906 is driven in accordance with a driving signal supplied from the video signal processing unit 905, and displays a video image or an image on a video screen of a display device (such as liquid crystal display, plasma display, and OELD (Organic ElectroLuminescence Display (organic EL display).

The audio signal processing unit 907 executes reproduction processes such as D/A conversion and amplification for the audio data input from the decoder 904, and outputs a voice from the speaker 908. The audio signal processing unit 907 may execute additional processes such as noise removal for the audio data.

The external interface 909 is an interface for connection between the television device 900 and an external device or a network. For example, a video stream or an audio stream received via the external interface 909 may be decoded by the decoder 904. In other words, the external interface 909 also functions as a transmitting unit of the television device 900 for receiving a coded stream corresponding to a coded image.

The control unit 910 includes a processor such as a CPU, and memories such as RAM and ROM. The memories store programs executed by the CPU, program data, EPG data, and data obtained via a network, for example. The programs stored in the memories are read and executed by the CPU at the time of start of the television device 900. The CPU executes the programs to control operation of the television device 900 in accordance with an operation signal input from the user interface 911, for example.

The user interface 911 is connected with the control unit 910. The user interface 911 includes buttons and switches operated by a user for operation of the television device 900, and a receiving unit for receiving a remote control signal, for example. The user interface 911 generates an operation signal based on detection of operation input from the user via these constituent elements, and outputs the generated operation signal to the control unit 910.

The bus 912 connects the tuner 902, the demultiplexer 903, the decoder 904, the video signal processing unit 905, the audio signal processing unit 907, the external interface 909, and the control unit 910 for mutual connection between these components.

According to the television device 900 thus constructed, the decoder 904 has the function of the scalable decoding device 200 in the foregoing embodiment. Accordingly, reduction of decrease in coding efficiency, and reduction of decrease in image quality cause by coding or decoding are both achievable in decoding images by the television device 900.

[Second Application Example: Cellular Phone]

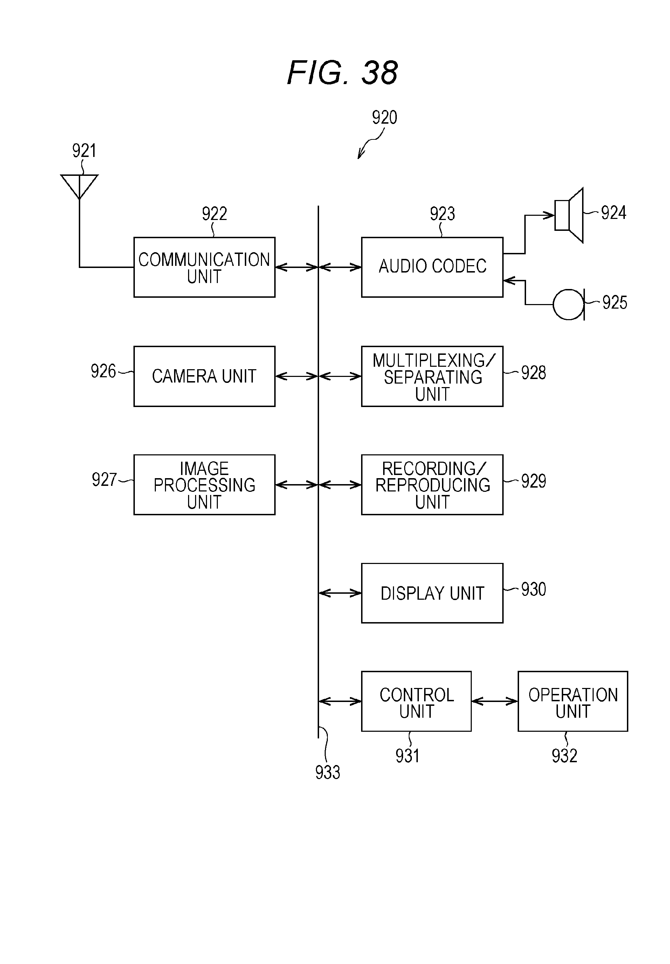

Fig. 38 illustrates an example of a general configuration of a cellular phone to which the foregoing embodiments are applied. A cellular phone 920 includes an antenna 921, a communication unit 922, an audio codec 923, a speaker 924, a microphone 925, a camera unit 926, an image processing unit 927, a multiplexing/separating unit 928, a recording/reproducing unit 929, a display unit 930, a control unit 931, an operation unit 932, and a bus 933.

The antenna 921 is connected with the communication unit 922. The speaker 924 and the microphone 925 are connected with the audio codec 923. The operation unit 932 is connected with the control unit 931. The bus 933 connects the communication unit 922, the audio codec 923, the camera unit 926, the image processing unit 927, the multiplexing/separating unit 928, the recording/reproducing unit 929, the display unit 930, and the control unit 931 for mutual connection between these components.

The cellular phone 920 executes operations such as transmission and reception of audio signals, transmission and reception of electronic mails or image data, imaging, and data recording in various types of operation modes including audio phone call mode, data communication mode, imaging mode, and video phone mode.

In the audio phone call mode, an analog audio signal generated by the microphone 925 is supplied to the audio codec 923. The audio codec 923 converts the analog audio signal into audio data, executes A/D conversion for the converted audio data, and compresses the A/D converted data. Then, the audio codec 923 outputs the compressed audio data to the communication unit 922. The communication unit 922 codes and modulates the audio data to generate a transmission signal. The communication unit 922 transmits the generated transmission signal to a base station (not shown) via the antenna 921. The communication unit 922 also amplifies a wireless signal received via the antenna 921 and executes frequency conversion for the wireless signal to obtain a reception signal. Then, the communication unit 922 demodulates and decodes the reception signal to create audio data, and outputs the created audio data to the audio codec 923. The audio codec 923 decompresses audio data and executes D/A conversion for the decompressed audio data to generate an analog audio signal. Then, the audio codec 923 supplies the generated audio signal to the speaker 924, and outputs a voice from the speaker 924.

In the data communication mode, the control unit 931 creates character data constituting an electronic mail in accordance with operation from the user via the operation unit 932, for example. The control unit 931 displays characters on the display unit 930. The control unit 931 creates electronic mail data in accordance with a transmission instruction input from the user via the operation unit 932, and outputs the created electronic mail data to the communication unit 922. The communication unit 922 codes and modulates the electronic mail data to generate a transmission signal. The communication unit 922 transmits the generated transmission signal to a base station (not shown) via the antenna 921. The communication unit 922 also amplifies a wireless signal received via the antenna 921 and executes frequency conversion for the wireless signal to obtain a reception signal. Then, the communication unit 922 demodulates and decodes the reception signal to restore the electronic mail data, and outputs the restored electronic mail data to the control unit 931. The control unit 931 displays the contents of the electronic mail on the display unit 930, and records the electronic mail data on a storage medium of the recording/reproducing unit 929.

The recording/reproducing unit 929 includes an arbitrary readable and writable storage medium. For example, the storage medium may be a built-in type storage medium such as RAM and a flash memory, or may be an external attachable type storage medium such as a hard disk, a magnetic disk, a magneto-optical disk, an optical disk, a USB (Unallocated Space Bitmap) memory, and a memory card.

In the imaging mode, the camera unit 926 images a subject to create image data, and outputs the created image data to the image processing unit 927, for example. The image processing unit 927 codes the image data input from the camera unit 926, and stores a coded stream in the storage medium of the storage and reproducing unit 929.

In the video phone mode, the multiplexing/separating unit 928 multiplexes a video stream coded by the image processing unit 927, and an audio stream input from the audio codec 923, and outputs the multiplexed stream to the communication unit 922. The communication unit 922 codes and modulates the stream to generate a transmission signal. The communication unit 922 transmits the generated transmission signal to a base station (not shown) via the antenna 921. The communication unit 922 also amplifies a wireless signal received via the antenna 921 and executes frequency conversion for the wireless signal to obtain a reception signal. These transmission signal and reception signal may contain a coded bit stream. Then, the communication unit 922 demodulates and decodes the reception signal to restore the stream, and outputs the restored stream to the multiplexing/separating unit 928. The multiplexing/separating unit 928 separates the video stream and the audio stream from the input stream, and outputs the video stream to the image processing unit 927, and outputs the audio steam to the audio codec 923. The image processing unit 927 decodes the video stream to create video data. The video data is supplied to the display unit 930, and a series of images are displayed on the display unit 930. The audio codec 923 executes decompression and D/A conversion for the audio stream to generate an analog audio signal. Then, the audio codec 923 supplies the generated audio signal to the speaker 924, and outputs a voice from the speaker 924.

According to the cellular phone 920 thus constructed, the image processing unit 927 has the functions of the scalable coding device 100 and the scalable decoding device 200 in the foregoing embodiments. Accordingly, in coding and decoding images on the cellular phone 920, reduction of decrease in coding efficiency, and reduction of decrease in image quality caused by coding and decoding are both achievable.

[Third Application Example: Recording/Reproducing Device]

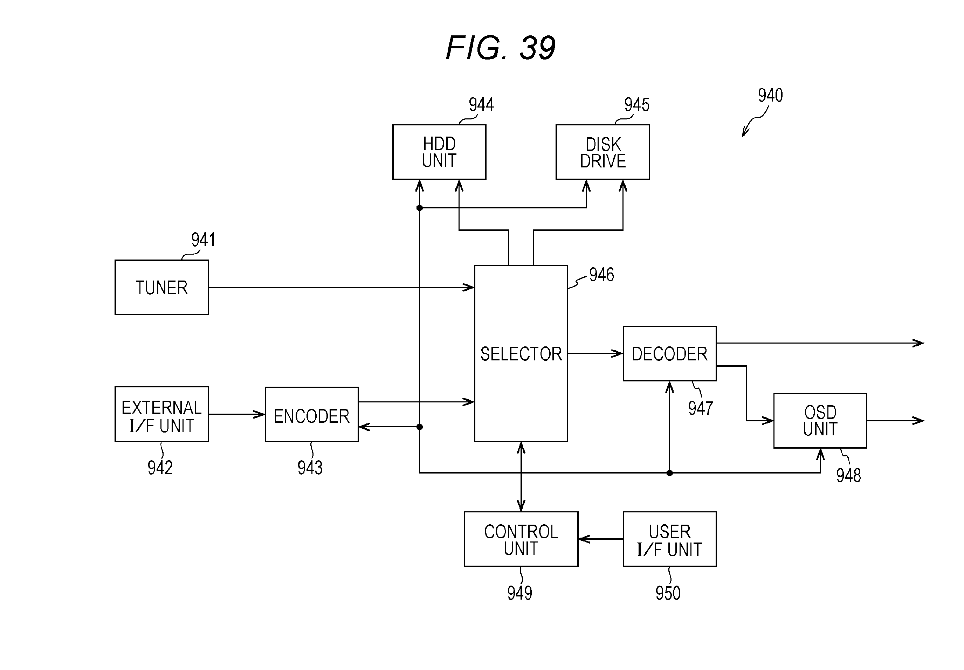

Fig. 39 illustrates an example of a general configuration of a recording/reproducing device to which the foregoing embodiments are applied. A recording/reproducing device 940 codes audio data and video data of a received broadcasting program, and records these data on a recording medium, for example. The recording/reproducing device 940 may code audio data and video data obtained from another device, and record the coded data on a recording medium, for example. The recording/reproducing device 940 reproduces data recorded on a recording medium such that the data can be reproduced on a monitor and a speaker in accordance with an instruction from a user, for example. In this case, the recording/reproducing device 940 decodes audio data and video data.

The recording/reproducing device 940 includes a tuner 941, an external interface 942, an encoder 943, an HDD (Hard Disk Drive) 944, a disk drive 945, a selector 946, a decoder 947, an OSD (On-Screen Display) 948, a control unit 949, and a user interface 950.

The tuner 941 extracts a signal in a desired channel from a broadcasting signal received via an antenna (not shown), and demodulates the extracted signal. Then, the tuner 941 outputs a coded bit stream obtained by demodulation to the selector 946. Accordingly, the tuner 941 functions as a transmitting unit of the recording/reproducing device 940.

The external interface 942 is an interface for connecting the recording/reproducing device 940 with an external device or a network. The external interface 942 may be an IEEE1394 interface, a network interface, a USB interface, a flash memory interface, or others. For example, video data and audio data received via the external interface 942 are input to the encoder 943. Accordingly, the external interface 942 functions as a transmitting unit of the recording/reproducing device 940.

The encoder 943 codes video data and audio data input from the external interface 942 when these video data and audio data are not coded. Then, the encoder 943 outputs the coded bit stream to the selector 946.

The HDD 944 records a coded bit stream containing compressed contents data such as video and audio data, various types of programs, and other data on an internal hard disk. The HDD 944 also reads these data from the hard disk at the time of reproduction of a video image and a voice.

The disk drive 945 records data on an attached recording medium, and reads data from the attached recording medium. The recording medium attached to the disk drive 945 may be a DVD disk (such as DVD-Video, DVD-RAM, DVD-R, DVD-RW, DVD+R, and DVD+RW), or a Blu-ray (registered trademark) disk, for example.

At the time of recording of a video image and a voice, the selector 946 selects a coded bit stream input from the tuner 941 or the encoder 943, and outputs the selected coded bit stream to the HDD 944 or the disk drive 945. At the time of reproduction of a video image and a voice, the selector 946 outputs a coded bit stream input from the HDD 944 or the disk drive 945 to the decoder 947.

The decoder 947 decodes a coded bit stream to create video data and audio data. Then, the decoder 947 outputs the created video data to the OSD 948. The decoder 904 also outputs the created audio data to an external speaker.

The OSD 948 reproduces video data input from the decoder 947 to display a video image. The OSD 948 may superimpose images of GUI such as menus, buttons, and a cursor on a displayed video image.

The control unit 949 includes a processor such as a CPU, and memories such as RAM and ROM. The memories store programs executed by the CPU, and program data, for example. The programs stored in the memories are read and executed by the CPU at the time of start of the recording/reproducing device 940. The CPU executes the programs to control operation of the recording/reproducing device 940 in accordance with an operation signal input from the user interface 950, for example.

The user interface 950 is connected with the control unit 949. The user interface 950 includes buttons and switches for operating the recording/reproducing device 940, and a receiving unit for receiving a remote control signal, for example. The user interface 950 detects operation input from the user via these constituent elements, generates an operation signal, and outputs the generated operation signal to the control unit 949.

According to the recording/reproducing device 940 thus constructed, the encoder 943 has the function of the scalable coding device 100 in the foregoing embodiment. In addition, the decoder 947 has the function of the scalable decoding device 200 in the foregoing embodiment. Accordingly, in coding and decoding images by the recording/reproducing device 940, reduction of decrease in coding efficiency, and reduction of decrease in image quality caused by coding and decoding are both achievable.

[Fourth Application Example: Imaging Device]

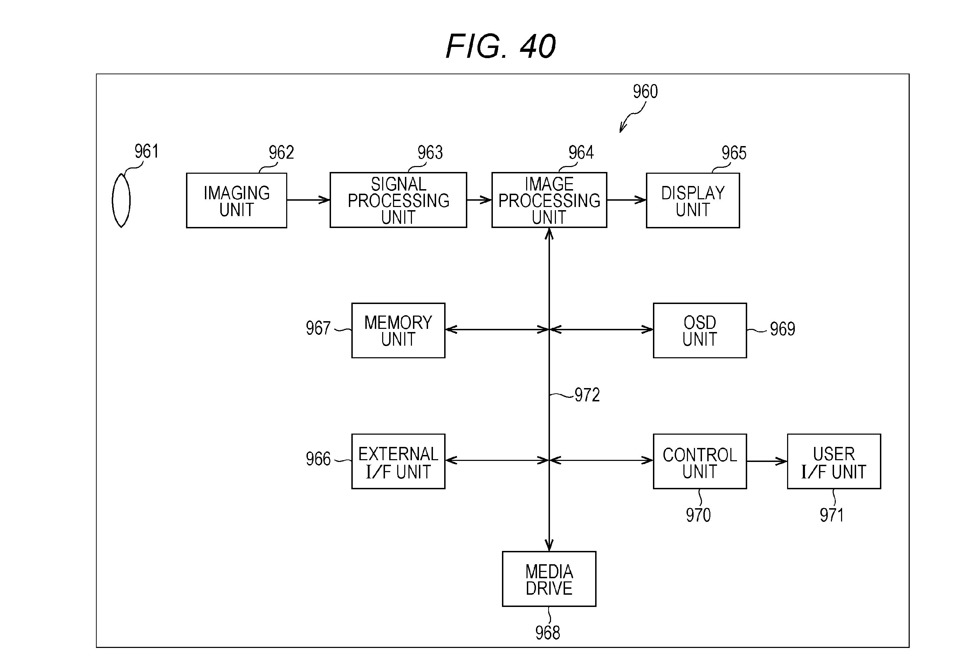

Fig. 40 illustrates an example of a general configuration of an imaging device to which the foregoing embodiments are applied. An imaging device 960 images a subject to form an image, codes image data, and records the coded data on a recording medium.

The imaging device 960 includes an optical block 961, an imaging unit 962, a signal processing unit 963, an image processing unit 964, a display unit 965, an external interface 966, a memory 967, a media drive 968, an OSD 969, a control unit 970, a user interface 971, and a bus 972.

The optical block 961 is connected with the imaging unit 962. The imaging unit 962 is connected with the signal processing unit 963. The display unit 965 is connected with the image processing unit 964. The user interface 971 is connected with the control unit 970. The bus 972 connects the image processing unit 964, the external interface 966, the memory 967, the media drive 968, the OSD 969, and the control unit 970 for mutual connection between these components.

The optical block 961 includes a focus lens, a diaphragm mechanism, and others. The optical block 961 forms an optical image of a subject on an imaging surface of the imaging unit 962. The imaging unit 962 includes an image sensor such as a CCD (Charge Coupled Device) and a CMOS (Complementary Metal Oxide Semiconductor), and converts the optical image formed on the imaging surface into an image signal in the form of an electric signal by photoelectric conversion. Then, the imaging unit 962 outputs the image signal to the signal processing unit 963.

The signal processing unit 963 executes various types of camera signal processing such as knee correction, gamma correction, and color correction for the image signal input from the imaging unit 962. The signal processing unit 963 outputs image data subjected to camera signal processing to the image processing unit 964.

The image processing unit 964 codes image data input from the signal processing unit 963 to create coded data. Then, the image processing unit 964 outputs the created coded data to the external interface 966 or the media drive 968. The image processing unit 964 also decodes coded data input from the external interface 966 or the media drive 968 to create image data. Then, the image processing unit 964 outputs the created image data to the display unit 965. The image processing unit 964 may output the image data input from the signal processing unit 963 to the display unit 965 to display an image on the display unit 965. In addition, the image processing unit 964 may superimpose display data obtained from the OSD 969 on an image to be output to the display unit 965.

The OSD 969 forms images of GUI such as menus, buttons and a cursor, and outputs the formed images to the image processing unit 964.

The external interface 966 is constituted by an USB input/output terminal, for example. The external interface 966 connects the imaging device 960 and a printer at the time of printing of images, for example. A drive is connected with the external interface 966 as necessary. A removable medium such as a magnetic disk and an optical disk is attached to the drive, and programs read from the removable medium may be installed into the imaging device 960. The external interface 966 may be constituted by a network interface connected with a network such as a LAN and the Internet. In other words, the external interface 966 functions as a transmitting unit of the imaging device 960.

The recording medium attached to the media drive 968 may be an arbitrary readable and writable removable medium such as a magnetic disk, a magneto-optical disk, an optical disk, and semiconductor memory. In addition, a recording medium may be fixedly attached to the media drive 968 to form a non-portable storage unit such as a built-in hard disk drive and an SSD (Solid State Drive).

The control unit 970 includes a processor such as a CPU, and memories such as RAM and ROM. The memories store programs executed by the CPU, and program data, for example. The programs stored in the memories are read and executed by the CPU at the time of start of the imaging device 960. The CPU executes the programs to control operation of the imaging device 960 in accordance with an operation signal input from the user interface 971, for example.

The user interface 971 is connected with the control unit 970. The user interface 971 includes buttons and switches operated by a user for operation of the imaging device 960. The user interface 971 detects operation input from the user via these constituent elements, generates an operation signal, and outputs the generated operation signal to the control unit 970.

According to the imaging device 960 thus constructed, the image processing unit 964 has the functions of the scalable coding device 100 and the scalable decoding device 200 in the foregoing embodiments. Accordingly, in coding and decoding of images by the imaging device 960, reduction of decrease in coding efficiency, and reduction of decrease in image quality caused by coding and decoding are both achievable.

<6. Application Examples of Scalable Coding>

[First System]

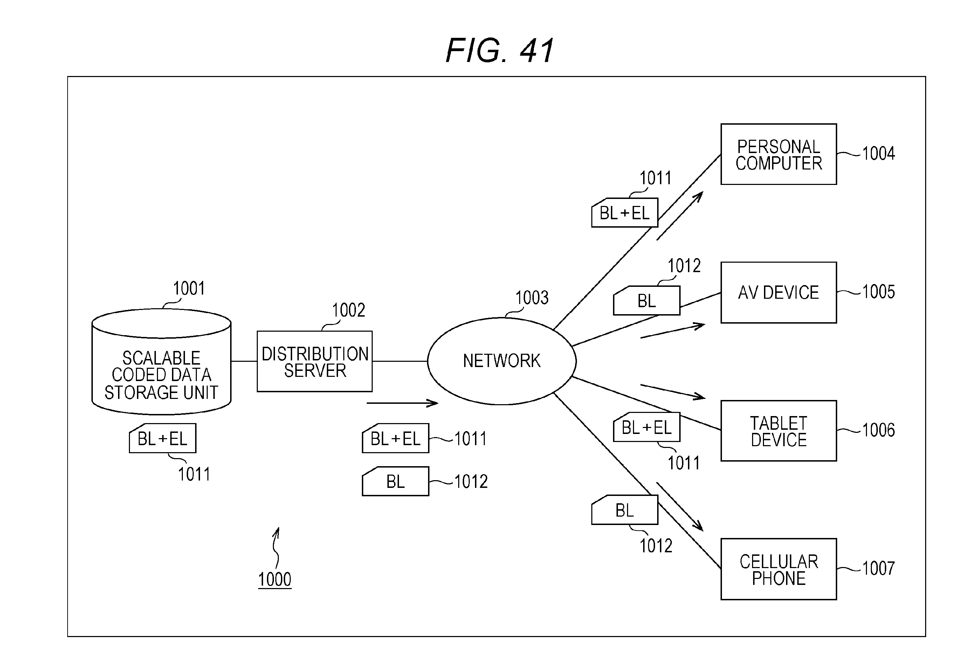

Discussed hereinbelow is a specific use example of scalable coded data subjected to scalable coding (scalable coding). Scalable coding is utilized for selection of transmission data as illustrated in an example in Fig. 41.

According to a data transmission system 1000 illustrated in Fig. 41, a distribution server 1002 reads scalable coded data stored in a scalable coded data storage unit 1001, and distributes the data to a personal computer 1004, an AV device 1005, a tablet device 1006, a cellular phone 1007, and other terminal devices via a network 1003.

In this case, the distribution server 1002 selects and transmits coded data of appropriate quality in accordance with the capability of each terminal device, the communication environment and others. When the distribution server 1002 transmits data of excessively high quality, this data does not necessarily produce high-quality images on the terminal device side, but causes delay or overflow in some cases. In addition, there may occur unnecessary occupation of communication bands, or unnecessary increase in loads given to the terminal device. On the other hand, when the distribution server 1002 transmits data of excessively low quality, images of sufficient image quality may be difficult to produce on the terminal device side. Accordingly, the distribution server 1002 appropriately reads scalable coded data stored in the scalable coded data storage unit 1001 as coded data of quality suited for the capability of the terminal device, the communication environment and others, and transmits the read data.

For example, suppose that the scalable coded data storage unit 1001 stores scalable coded data (BL+EL) 1011 coded in a scalable manner. This scalable coded data (BL+EL) 1011 is coded data containing both a base layer and an enhancement layer, as data from which both images of the base layer and the enhancement layer are obtained by decoding.

The distribution server 1002 selects a suited layer in accordance with the capability of the terminal to which data is transmitted, the communication environment and others, and reads data of the corresponding layer. For example, the distribution server 1002 reads high-quality scalable coded data (BL+EL) 1011 from the scalable coded data storage unit 1001 for the personal computer 1004 and the tablet device 1006 having high processing capability, and transmits the read data as it is. On the other hand, for example, the distribution server 1002 extracts data of a base layer from the scalable coded data (BL+EL) 1011, and transmits the extracted data as scalable coded data (BL) 1012 including the same contents as the contents of the scalable coded data (BL+EL) 1011 but having lower quality than the quality of the scalable coded data (BL+EL) 1011, for the AV device 1005 and the cellular phone 1007 having low processing capability.

Accordingly, the use of scalable coded data allows easy adjustment of the data amount, wherefore reduction of delay and overflow, and reduction of unnecessary increase in loads given to terminal devices and communication media are both achievable. In addition, the scalable coded data (BL+EL) 1011 has reduced redundancy between layers, wherefore the data amount of the scalable coded data (BL+EL) 1011 is smaller than the data amount of coded data contained in the respective layers as individual data. Accordingly, more efficient use of the memory area of the scalable coded data storage unit 1001 is achievable.

The terminal devices may be various types of devices including the devices from the personal computer 1004 to the cellular phone 1007. In this case, the performance of hardware of the terminal devices differ for each device. In addition, applications to be executed by the respective terminal devices may be various types of applications, wherefore the capability of software of the terminal devices differ for each device. Moreover, the network 1003 corresponding to a communication medium may be constituted by various types of communication line networks including wired, wireless, or both wired and wireless networks, such as the Internet and a LAN (Local Area Network). Accordingly, the data transmission capability differs for each network. In addition, the data transmission capability may be changeable in accordance with other communications and the like.

In consideration of these circumstances, the distribution server 1002 may communicate with a terminal device corresponding to a data transmission destination before starting data transmission to obtain information on the capability of the terminal device such as hardware performance of the terminal device and performance of the application (software) to be executed by the terminal device, and information on the communication environment of the network 1003 such as the usable bandwidth. Then, the distribution server 1002 may select a suited layer based on the obtained information.

Extraction of layers may be executed on the terminal device side. For example, the personal computer 1004 may decode the transmitted scalable coded data (BL+EL) 1011, and display an image of a base layer or an image of an enhancement layer. In addition, for example, the personal computer 1004 may extract the scalable coded data (BL) 1012 of the base layer from the transmitted scalable coded data (BL+EL) 1011, store the extracted scalable coded data (BL) 1012, transfer the scalable coded data (BL) 1012 to another device, or decode the scalable coded data (BL) 1012 to display an image of the base layer.

Needless to say, each of the numbers of the scalable coded data storage unit 1001, the distribution server 1002, the network 1003, and the terminal device may be arbitrarily determined. While discussed herein is the example in which the distribution server 1002 transmits data to terminal devices, use examples are not limited to this example. The data transmission system 1000 is applicable to any types of systems as long as these systems select a suited layer and transmit the selected layer in accordance with the capabilities of respective terminal devices, the communication environment and others at the time of transmission of coded data subjected to scalable coding to the terminal devices.

[Second System]

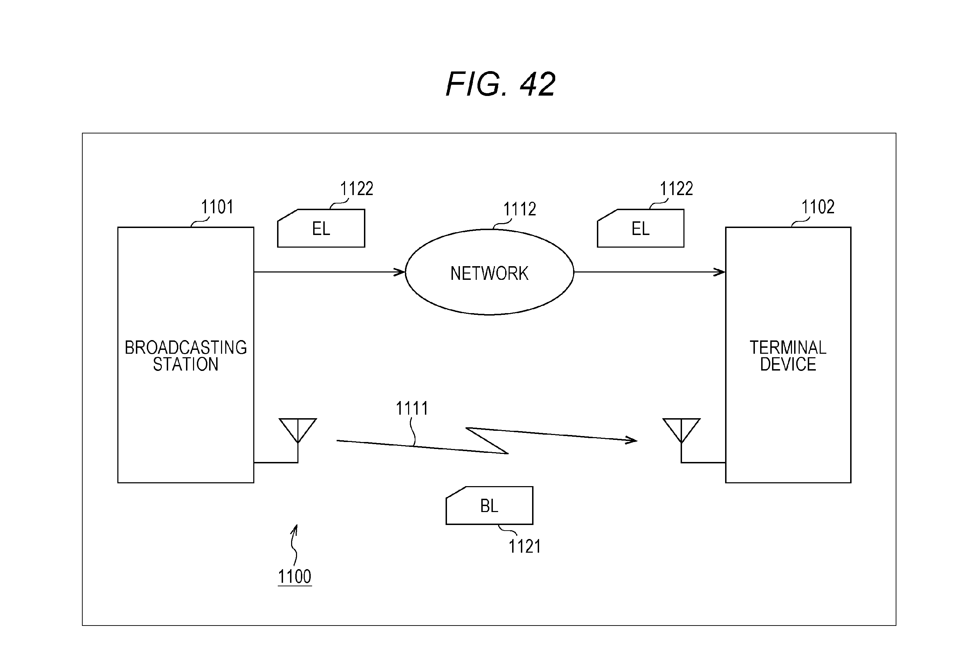

Scalable coding is also utilized for transmission via multiple communication media as illustrated in an example in Fig. 42.

According to a data transmission system 1100 illustrated in Fig. 42, a broadcasting station 1101 transmits scalable coded data (BL) 1121 of a base layer via terrestrial broadcasting 1111. The broadcasting station 1101 also transmits scalable coded data (EL) 1122 of an enhancement layer via an arbitrary network 1112 constituted by a wired or wireless network, or both wired and wireless networks (transmits in the form of packets, for example).

A terminal device 1102 has a reception function for receiving the terrestrial broadcasting 1111 broadcasted by the broadcasting station 1101, and receives the scalable coded data (BL) 1121 of a base layer transmitted via the terrestrial broadcasting 1111. The terminal device 1102 further has a communication function for communication via the network 1112, and receives the scalable coded data (EL) 1122 of an enhancement layer transmitted via the network 1112.

The terminal device 1102 decodes the scalable coded data (BL) 1121 of the base layer obtained via the terrestrial broadcasting 1111 to form an image of the base layer, stores the scalable coded data (BL) 1121, and transmits the scalable coded data (BL) 1121 to another device in accordance with an instruction from a user, for example.

The terminal device 1102 synthesizes the scalable coded data (BL) 1121 of the base layer obtained via the terrestrial broadcasting 1111 and the scalable coded data (EL) 1122 of the enhancement layer obtained via the network 1112 to obtain scalable coded data (BL+EL), decodes the scalable coded data (BL+EL) to form an image of the enhancement layer, stores the scalable coded data (BL+EL), or transmits the scalable coded data (BL+EL) to another device in accordance with an instruction from a user, for example.

As discussed above, the scalable coded data can be transmitted via communication media different for each layer, for example. Accordingly, dispersion of loads is allowed, wherefore delay and overflow are avoidable.

A communication medium to be used for transmission may be selected for each layer in accordance with situations. For example, the scalable coded data (BL) 1121 of the base layer containing a relatively large amount of data may be transmitted via a communication medium having a wide bandwidth, while the scalable coded data (EL) 1122 of the enhancement layer containing a relatively small amount of data may be transmitted via a communication medium having a narrow bandwidth. In addition, for example, the communication medium for transmitting the scalable coded data (EL) 1122 of the enhancement layer may be switched between the network 1112 and the terrestrial broadcasting 1111 in accordance with the usable bandwidth of the network 1112. Needless to say, these alternatives are applicable to data of arbitrary layers.

These controls can further reduce increase in loads for data transmission.

Obviously, the number of layers, and the number of communication medium used for transmission may be arbitrarily determined. In addition, the number of the terminal device 1102 may be arbitrarily determined. While discussed herein is an example of broadcasting from the broadcasting station 1101, use examples are not limited to this example. The data transmission system 1100 is applicable to arbitrary systems as long as these systems can divide coded data subjected to scalable coding into multiple parts in units of layer, and transmit the divided parts via multiple lines.

[Third System]

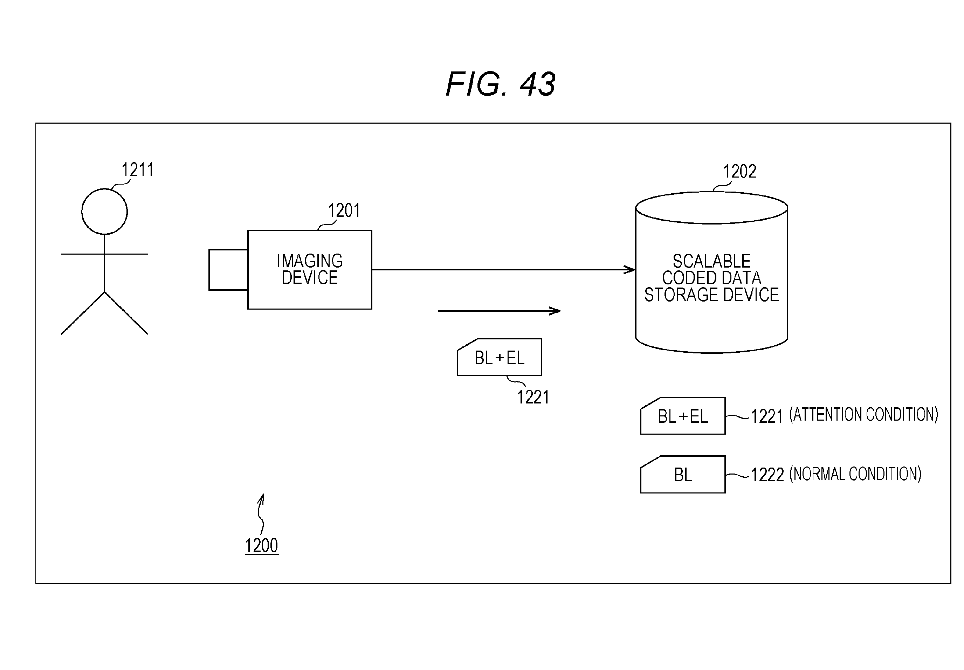

Scalable coding is utilized for storage of coded data as illustrated in an example in Fig. 43, for example.

According to an imaging system 1200 illustrated in Fig. 43, an imaging device 1201 executes scalable coding of image data obtained by imaging a subject 1211, and supplies the coded data to a scalable coded data storage device 1202 as scalable coded data (BL+EL) 1221.

The scalable coded data storage device 1202 stores the scalable coded data (BL+EL) 1221 supplied from the imaging device 1201 in quality suited for the situations. For example, in a normal condition, the scalable coded data storage device 1202 extracts data of a base layer from the scalable coded data (BL+EL) 1221, and stores the extracted data as scalable coded data (BL) 1222 of the base layer having low quality and containing a low amount of data. On the other hand, in an attention condition, for example, the scalable coded data storage device 1202 stores the scalable coded data (BL+EL) 1221 having high quality and containing a large amount of data as it is.

By this method, the scalable coded data storage device 1202 stores images in high image quality only as required. In this case, increase in the data amount is avoidable while achieving reduction of decrease in values of images caused by image quality deterioration. Accordingly, the use efficiency of the memory area improves.

Suppose that the imaging device 1201 is a monitoring camera, for example. When a monitoring target (such as intruder) is not present in a captured image (normal condition), it is highly probable that the contents of the captured image is not important. Accordingly, priority is given to reduction of the data amount, and this image data (scalable coded data) is stored in low quality. On the other hand, when a monitoring target is contained in the captured image as the subject 1211 (attention condition), it is highly probable that the contents of the captured image is important. Accordingly, priority is given to the image quality, and this image data (scalable coded data) is stored in high quality.

Whether the condition is the normal condition or attention condition may be determined based on image analysis by the scalable coded data storage device 1202, for example. Alternatively, the imaging device 1201 may make determination and transmit the determination result to the scalable coded data storage device 1202.

The determination criteria for determining whether the condition is the normal condition or attention condition may be arbitrarily determined. Needless to say, conditions other than the contents of an image may be set as the determination criteria. For example, the condition may be switched in accordance with the level or waveform of recorded voices, or at predetermined time intervals. Alternatively, the condition may be switched in accordance with an instruction from the outside such as an instruction from a user.

While discussed herein is an example which switches two states of the normal and attention conditions, the number of states may be arbitrarily determined. For example, three or more states may be switched, such as normal, relatively high attention, attention, extremely high attention. However, the upper limit of the number of the switchable states is dependent on the number of layers of scalable coded data.

The imaging device 1201 may determine the number of layers for scalable coding in accordance with the conditions. For example, in the normal condition, the imaging device 1201 may create scalable coded data (BL) 1222 of the base layer having low quality and containing a small amount of data, and supply the created scalable coded data (BL) 1222 to the scalable coded data storage device 1202. On the other hand, in the attention condition, for example, the imaging device 1201 may create the scalable coded data (BL+EL) 1221 of the base layer having high quality and containing a large amount of data, and supply the created scalable coded data (BL+EL) 1221 to the scalable coded data storage device 1202.

While discussed herein is an example of the monitoring camera, the imaging system 1200 is not limited to the monitoring camera but may be arbitrarily applied.

The present technology is applicable to HTTP streaming such as MPEG DASH which selects appropriate data in units of segment from multiple coded data having different resolutions and the like prepared beforehand, and uses the selected data. In other words, information on orthogonal transform skip can be shared by multiple coded data of this type as well.

Discussed in the present specification is an example which multiplexes various types of information such as skip enabling information and skip recognition information into a coded stream, and transmits the coded stream from the coding side to the decoding side. However, the method for transmitting the respective information is not limited to this example. For example, the respective information may be transmitted or recorded as independent data associated with a coded bit stream without multiplexing the respective information into the coded bit stream. The term "associated with" in this context refers to a condition where an image (including a part of an image such as a slice and a block) contained in a bit stream is allowed to be linked with information on the image at the time of decoding. In other words, information may be transmitted on a transmission path different from the transmission path of an image (or bit stream). In addition, information may be recorded on a recording medium different from the recording medium of an image (or another recording area of the identical recording medium). Furthermore, information and an image (or bit stream) may be associated with each other in arbitrary units such as multiple frames, one frame, and a part within a frame.

While the preferred embodiments according to the present disclosure have been described in detail with reference to the accompanying drawings, the present disclosure is not limited to these embodiments. It is obvious that various examples of changes and modifications may be presented by those having ordinary knowledge in the technical field of the present disclosure in the light of the present technology within the scope of the technical spirit described in the claims. It is therefore understood that these changes and modifications are also contained in the technical range of the present disclosure as a matter of course.

The present technology may have the following configurations.

(1) An image processing apparatus including:

a receiving unit that receives coded data created by coding an image that contains multiple layers, and information on skip of an orthogonal transform process and shared by the multiple layers; and
a decoding unit that decodes the coded data received by the receiving unit based on the information on skip of the orthogonal transform process received by the receiving unit for each of the multiple layers.

(2) The image processing apparatus according to any one of (1) through (9) described above, wherein the information on skip of the orthogonal transform process contains skip enabling information for designating whether to enable skip of the orthogonal transform process within a picture.

(3) The image processing apparatus according to any one of (1) through (9) described above, wherein the information on the orthogonal transform process contains skip recognition information for designating whether to skip the orthogonal transform process.

(4) The image processing apparatus according to any one of (1) through (9) described above, wherein, in decoding a current block, the decoding unit controls execution of an inverse orthogonal transform process for the current block based on information on skip of the orthogonal transform process for a block contained in a layer different from the layer of the current block and corresponding to the current block.

(5) The image processing apparatus according to any one of (1) through (9) described above, wherein, when one block of a reference layer corresponds to multiple blocks of the current layer, the decoding unit controls execution of the inverse orthogonal transform process based on information on skip of the orthogonal transform process for the one block of the reference layer in decoding all the multiple blocks of the current layer.

(6) The image processing apparatus according to any one of (1) through (9) described above, wherein, when multiple blocks of a reference layer correspond to the current block, the decoding unit obtains information on skip of the orthogonal transform process for the current block based on information on skip of the orthogonal transform process for each of the multiple blocks of the reference layer, and controls execution of the inverse orthogonal transform process based on the obtained information on skip of the orthogonal transform process.

(7) The image processing apparatus according to any one of (1) through (9) described above, wherein, when a current layer refers to a different layer determined by the decoding unit as a layer to be referred to by the current layer, the decoding unit controls execution of an inverse orthogonal transform process for a current block based on information on skip of the orthogonal transform process for a block contained in the different layer and corresponding to the current block in decoding the current block.

(8) The image processing apparatus according to any one of (1) through (9) described above, wherein: the receiving unit further receives information indicating a layer to be referred to by the current layer; and the decoding unit determines a layer to be referred to by the current layer based on the information indicating a layer to be referred to by the current layer and received by the receiving unit.

(9) The image processing apparatus according to any one of (1) through (9) described above, wherein the coded data is scalable data created by scalable coding which exhibits spatial scalability where spatial resolutions are layered, temporal scalability where frame rates are layered, SNR scalability where signal to noise ratios are layered, bit depth scalability where bit depths are layered, chroma scalability where component formats of video signals are layered, or view scalability where views are layered.

(10) An image processing method of an image processing apparatus, wherein:

the image processing apparatus receives coded data created by coding an image that contains multiple layers, and information on skip of an orthogonal transform process and shared by the multiple layers; and
the image processing apparatus decodes the received coded data based on the received information on skip of the orthogonal transform process for each of the multiple layers.

(11) An image processing apparatus including:

a coding unit that codes an image containing multiple layers based on information on skip of an orthogonal transform process and shared by the multiple layers; and
a transmitting unit that transmits coded data coded by the coding unit, and the information on skip of the orthogonal transform process.

(12) The image processing apparatus according to any one of (11) through (19) described above, wherein the information on skip of the orthogonal transform process contains skip enabling information for designating whether to enable skip of the orthogonal transform process within a picture.

(13) The image processing apparatus according to any one of (11) through (19) described above, wherein the information on the orthogonal transform process contains skip recognition information for designating whether to skip the orthogonal transform process.

(14) The image processing apparatus according to any one of (11) through (19) described above, wherein, in coding a current block, the coding unit controls execution of the orthogonal transform process for the current block based on information on skip of the orthogonal transform process for a block contained in a layer different from the layer of the current block and corresponding to the current block.

(15) The image processing apparatus according to any one of (11) through (19) described above, wherein, when one block of a reference layer corresponds to multiple blocks of the current layer, the coding unit controls execution of the orthogonal transform process based on information on skip of the orthogonal transform process for the one block of the reference layer in coding all the multiple blocks of the current layer.

(16) The image processing apparatus according to any one of (11) through (19) described above, wherein, when multiple blocks of a reference layer correspond to the current block, the coding unit obtains information on skip of the orthogonal transform process for the current block based on information on skip of the orthogonal transform process for each of the multiple blocks of the reference layer, and controls execution of the orthogonal transform process based on the obtained information on skip of the orthogonal transform process.

(17) The image processing apparatus according to any one of (11) through (19) described above, wherein, when a current layer refers to a different layer determined by the coding unit as a layer to be referred to by the current layer, the coding unit controls execution of the orthogonal transform process for a current block based on information on skip of the orthogonal transform process for a block contained in the different layer and corresponding to the current block in coding the current block.

(18) The image processing apparatus according to any one of (11) through (19) described above, wherein the transmitting unit further transmits information indicating the different layer determined by the coding unit as a layer to be referred to by the current layer.

(19) The image processing apparatus according to any one of (11) through (19) described above, wherein the coding unit codes the image by scalable-coding which exhibits spatial scalability where spatial resolutions are layered, temporal scalability where frame rates are layered, SNR scalability where signal to noise ratios are layered, bit depth scalability where bit depths are layered, chroma scalability where component formats of video signals are layered, or view scalability where views are layered.

(20) An image processing method of an image processing apparatus, wherein:

the image processing apparatus codes an image containing multiple layers based on information on skip of an orthogonal transform process and shared by the multiple layers; and
the image processing apparatus transmits coded data obtained by coding, and the information on skip of the orthogonal transform process.

REFERENCE SIGNS LIST

| 100 | scalable coding device |
| 101 | base layer image coding unit |
| 102 | base layer orthogonal transform skip buffer |
| 103 | enhancement layer image coding unit |
| 114 | orthogonal transform unit |
| 116 | lossless coding unit |

131    orthogonal transform skip unit
132    orthogonal transform skip unit
141    skip coding unit
142    skip determination unit
151    transform_skip_enable_flag buffer
152    transform_skip_flag buffer
161    transform_skip_enable_flag control unit
162    transform_skip_flag control unit
200    scalable decoding device
201    base layer image decoding unit
202    base layer orthogonal transform skip buffer
203    enhancement layer image decoding unit
212    lossless decoding unit
214    inverse orthogonal transform unit
231    inverse orthogonal transform skip unit
232    inverse orthogonal transform skip unit
241    inverse orthogonal transform skip control unit
251    transform_skip_enable_flag buffer
252    transform_skip_flag buffer
261    transform_skip_enable_flag control unit
262    transform_skip_flag control unit

**Claims**

1.  An image processing apparatus comprising:

    a receiving unit that receives coded data created by coding an image that contains multiple layers, and information on skip of an orthogonal transform process and shared by the multiple layers; and
    a decoding unit that decodes the coded data received by the receiving unit based on the information on skip of the orthogonal transform process received by the receiving unit for each of the multiple layers.

2.  The image processing apparatus according to claim 1, wherein the information on skip of the orthogonal transform process contains skip enabling information for designating whether to enable skip of the orthogonal transform process within a picture.

3.  The image processing apparatus according to claim 1, wherein the information on skip of the orthogonal transform process contains skip recognition information for designating whether to skip the orthogonal transform process.

4.  The image processing apparatus according to claim 1, wherein, in decoding a current block, the decoding unit controls execution of an inverse orthogonal transform process for the current block based on information on skip of the orthogonal transform process for a block contained in a layer different from the layer of the current block and corresponding to the current block.

5.  The image processing apparatus according to claim 4, wherein, when one block of a reference layer corresponds to multiple blocks of the current layer, the decoding unit controls execution of the inverse orthogonal transform process based on information on skip of the orthogonal transform process for the one block of the reference layer in decoding all the multiple blocks of the current layer.

6.  The image processing apparatus according to claim 4, wherein, when multiple blocks of a reference layer correspond to the current block, the decoding unit obtains information on skip of the orthogonal transform process for the current block based on information on skip of the orthogonal transform process for each of the multiple blocks of the reference layer, and controls execution of the inverse orthogonal transform process based on the obtained information on skip of the orthogonal transform process.

7.  The image processing apparatus according to claim 1, wherein, when a current layer refers to a different layer determined by the decoding unit as a layer to be referred to by the current layer, the decoding unit controls execution of an inverse orthogonal transform process for a current block based on information on skip of the orthogonal transform process for a block contained in the different layer and corresponding to the current block in decoding the current block.

8. The image processing apparatus according to claim 7, wherein:

the receiving unit further receives information indicating a layer to be referred to by the current layer; and
the decoding unit determines a layer to be referred to by the current layer based on the information indicating a layer to be referred to by the current layer and received by the receiving unit.

9. The image processing apparatus according to claim 1, wherein the coded data is scalable data created by scalable coding which exhibits spatial scalability where spatial resolutions are layered, temporal scalability where frame rates are layered, SNR scalability where signal to noise ratios are layered, bit depth scalability where bit depths are layered, chroma scalability where component formats of video signals are layered, or view scalability where views are layered.

10. An image processing method of an image processing apparatus, wherein:

the image processing apparatus receives coded data created by coding an image that contains multiple layers, and information on skip of an orthogonal transform process and shared by the multiple layers; and
the image processing apparatus decodes the received coded data based on the received information on skip of the orthogonal transform process for each of the multiple layers.

11. An image processing apparatus comprising:

a coding unit that codes an image containing multiple layers based on information on skip of an orthogonal transform process and shared by the multiple layers; and
a transmitting unit that transmits coded data coded by the coding unit, and the information on skip of the orthogonal transform process.

12. The image processing apparatus according to claim 11, wherein the information on skip of the orthogonal transform process contains skip enabling information for designating whether to enable skip of the orthogonal transform process within a picture.

13. The image processing apparatus according to claim 11, wherein the information on the orthogonal transform process contains skip recognition information for designating whether to skip the orthogonal transform process.

14. The image processing apparatus according to claim 11, wherein, in coding a current block, the coding unit controls execution of the orthogonal transform process for the current block based on information on skip of the orthogonal transform process for a block contained in a layer different from the layer of the current block and corresponding to the current block.

15. The image processing apparatus according to claim 14, wherein, when one block of a reference layer corresponds to multiple blocks of the current layer, the coding unit controls execution of the orthogonal transform process based on information on skip of the orthogonal transform process for the one block of the reference layer in coding all the multiple blocks of the current layer.

16. The image processing apparatus according to claim 14, wherein, when multiple blocks of a reference layer correspond to the current block, the coding unit obtains information on skip of the orthogonal transform process for the current block based on information on skip of the orthogonal transform process for each of the multiple blocks of the reference layer, and controls execution of the orthogonal transform process based on the obtained information on skip of the orthogonal transform process.

17. The image processing apparatus according to claim 11, wherein, when a current layer refers to a different layer determined by the coding unit as a layer to be referred to by the current layer, the coding unit controls execution of the orthogonal transform process for a current block based on information on skip of the orthogonal transform process for a block contained in the different layer and corresponding to the current block in coding the current block.

18. The image processing apparatus according to claim 17, wherein the transmitting unit further transmits information indicating the different layer determined by the coding unit as a layer to be referred to by the current layer.

19. The image processing apparatus according to claim 11, wherein the coding unit codes the image by scalable-coding which exhibits spatial scalability where spatial resolutions are layered, temporal scalability where frame rates are layered, SNR scalability where signal to noise ratios are layered, bit depth scalability where bit depths are layered, chroma scalability where component formats of video signals are layered, or view scalability where views are layered.

20. An image processing method of an image processing apparatus, wherein:

the image processing apparatus codes an image containing multiple layers based on information on skip of an orthogonal transform process and shared by the multiple layers; and
the image processing apparatus transmits coded data obtained by coding, and the information on skip of the orthogonal transform process.

# FIG. 1

Largest Coding Unit     Depth=0, N=64

split flag=0     split flag=1

2N    $CU_0$    | 0 | 1 |
         2N      | 2 | 3 |

Depth=1, N=32

split flag=0     split flag=1

2N    $CU_1$    | 0 | 1 |
         2N      | 2 | 3 |

Smallest Coding Unit     Depth=4, N=4

Last depth: No split flag

2N    $CU_4$    2N

FIG. 2

Enhancement Layer

Base Layer

FIG. 3

30fps
15fps
7.5fps

# FIG. 4

HIGH SNR IMAGE

Enhancement Layer

Base Layer

LOW SNR IMAGE

# FIG. 5

| pic_parameter_set_rbsp( ) { | Descriptor |
|---|---|
| pic_parameter_set_id | ue(v) |
| seq_parameter_set_id | ue(v) |
| sign_data_hiding_flag | u(1) |
| cabac_init_present_flag | u(1) |
| num_ref_idx_l0_default_active_minus1 | ue(v) |
| num_ref_idx_l1_default_active_minus1 | ue(v) |
| pic_init_qp_minus26 | se(v) |
| constrained_intra_pred_flag | u(1) |
| transform_skip_enable_flag | u(1) |
| cu_qp_delta_enabled_flag | u(1) |
| if(cu_qp_delta_enabled_flag) | |
| diff_cu_qp_delta_depth | ue(v) |
| pic_cb_qp_offset | se(v) |
| pic_cr_qp_offset | se(v) |
| pic_slice_level_chroma_qp_offsets_present_flag | u(1) |
| weighted_pred_flag | u(1) |
| weighted_bipred_flag | u(1) |
| output_flag_present_flag | u(1) |
| transquant_bypass_enable_flag | u(1) |
| dependent_slice_enabled_flag | u(1) |
| tiles_enabled_flag | u(1) |
| entropy_coding_sync_enabled_flag | u(1) |
| entropy_slice_enabled_flag | u(1) |
| . . . . . | |

## FIG. 6

| residual_coding(x0, y0, log2TrafoSize, cIdx) { | Descriptor |
|---|---|
| if(transform_skip_enabled_flag && !cu_transquant_bypass _flag &&(log2TrafoSize = = 2)) | |
| **transform_skip_flag[ x0 ][ y0 ][ cIdx ]** | ae(v) |
| **last_significant_coeff_x_prefix** | ae(v) |
| **last_significant_coeff_y_prefix** | ae(v) |
| if(last_significant_coeff_x_prefix > 3) | |
| **last_significant_coeff_x_suffix** | ae(v) |
| if(last_significant_coeff_y_prefix > 3) | |
| **last_significant_coeff_y_suffix** | ae(v) |
| lastScanPos = 16 | |
| lastSubBlock = (1 << ( log2TrafoSize – 2)*(1 << (log2TrafoSize – 2)) – 1 | |
| . . . . . | |

EP 2 903 287 A1

# FIG. 7

| video_parameter_set_rbsp ( ) [ | Descriptor |
|---|---|
| video_parameter_set_id | u (4) |
| vps_temporal_id_nesting_flag | u (1) |
| vps_reserved_zero_2bits | u (2) |
| vps_reserved_zero_6bits | u (6) |
| vps_max_sub_layers_minus1 | u (3) |
| profile_and_level (1, vps_max_sub_layers_minus1) | |
| vps_reserved_zero_12bits | u (12) |
| for (i = 0; i <= vps_max_sub_layers_minus1; i++) [ | |
| vps_max_dec_pic_buffering[i] | ue (v) |
| vps_max_num_reorder_pics[i] | ue (v) |
| vps_max_latency_increase[i] | ue (v) |
| } | |
| vps_num_hrd_parameters | ue (v) |
| for (i = 0; i < vps_num_hrd_parameters; i++) [ | |
| if (i > 0) | |
| op_point (i) | |
| hrd_parameters (i = = 0, vps_max_sub_layers_minus1) | |
| } | |
| vps_extension_flag | u (1) |
| if (vps_extension_flag) | |
| while( more_rbsp_data( )) | |
| vps_extension_data_flag | u (1) |
| } | |
| rbsp_trailing_bits ( ) | |
| } | |

# FIG. 8

=4×4TU

Baselayer

Enhancementlayer

# FIG. 9

□ = 4×4TU

Baselayer

| $B_0$ | $B_1$ |
|-------|-------|
| $B_2$ | $B_3$ |

Enhancementlayer

| $E_0$ | $E_1$ | $E_2$ |
|-------|-------|-------|
| $E_3$ | $E_4$ | $E_5$ |
| $E_6$ | $E_7$ | $E_8$ |

FIG. 10

$= 4 \times 4 \text{TU}$

Baselayer

Enhancementlayer

EP 2 903 287 A1

# FIG. 11

| video_parameter_set_rbsp ( ) { | Descriptor |
|---|---|
| video_parameter_set_id | u(4) |
| vps_temporal_id_nesting_flag | u(1) |
| vps_reserved_zero_2bits | u(2) |
| vps_reserved_zero_6bits | u(6) |
| vps_max_layers_minus1 | |
| vps_max_sub_layers_minus1 | u(3) |
| profile_and_level(1, vps_max_sub_layers_minus1) | |
| vps_reserved_zero_12bits | u(12) |
| for(i = 0; i <= vps_max_sub_layers_minus1; i++) { | |
| vps_max_dec_pic_buffering[i] | ue(v) |
| vps_max_num_reorder_pics[i] | ue(v) |
| vps_max_latency_increase[i] | ue(v) |
| } | |
| diff_ref_layer[0] = 0 | |
| for(i = 1; i <= vps_max_layers_minus1; i++) | |
| diff_ref_layer[i] | |
| vps_num_hrd_parameters | ue(v) |
| for(i = 0; i < vps_num_hrd_parameters; i++) { | |
| if(i > 0) | |
| op_point(i) | |
| hrd_parameters(i = = 0, vps_max_sub_layers_minus1) | |
| } | |
| vps_extension_flag | u(1) |
| if(vps_extension_flag) | |
| while(more_rbsp_data( )) | |
| vps_extension_data_flag | u(1) |
| } | |
| rbsp_trailing_bits( ) | |
| } | |

# FIG. 12

| pic_parameter_set_rbsp( ) { | Descriptor |
|---|---|
| pic_parameter_set_id | ue(v) |
| seq_parameter_set_id | ue(v) |
| sign_data_hiding_flag | u(1) |
| cabac_init_present_flag | u(1) |
| num_ref_idx_l0_default_active_minus1 | ue(v) |
| num_ref_idx_l1_default_active_minus1 | ue(v) |
| pic_init_qp_minus26 | se(v) |
| constrained_intra_pred_flag | u(1) |
| if( diff_ref_layer[i] == 0 ) | |
| transform_skip_enable_flag | u(1) |
| else | |
| transform_skip_enable_flag = transform_skip_enable_flag[ref_layer] | |
| cu_qp_delta_enabled_flag | u(1) |
| if ( cu_qp_delta_enabled_flag ) | |
| diff_cu_qp_delta_depth | ue(v) |
| pic_cb_qp_offset | se(v) |
| pic_cr_qp_offset | se(v) |
| pic_slice_level_chroma_qp_offsets_present_flag | u(1) |
| weighted_pred_flag | u(1) |
| weighted_bipred_flag | u(1) |
| output_flag_present_flag | u(1) |
| transquant_bypass_enable_flag | u(1) |
| dependent_slice_enabled_flag | u(1) |
| tiles_enabled_flag | u(1) |
| entropy_coding_sync_enabled_flag | u(1) |
| entropy_slice_enabled_flag | u(1) |
| . . . . . | |

## FIG. 13

| residual_coding(x0, y0, log2TrafoSize, cIdx) { | Descriptor |
|---|---|
| if(transform_skip_enabled_flag &&!cu_transquant_bypass_flag &&(log2TrafoSize == 2)){ | |
| if(diff_ref_layer[i] == 0) | |
| transform_skip_flag[x0][y0][cIdx] | ae(v) |
| else | |
| transform_skip_flag[x0][y0][cIdx] = transform_skip_flag[x0][y0][cIdx][ref_layer] | |
| } | |
| last_significant_coeff_x_prefix | ae(v) |
| last_significant_coeff_y_prefix | ae(v) |
| if(last_significant_coeff_x_prefix > 3) | |
| last_significant_coeff_x_suffix | ae(v) |
| if(last_significant_coeff_y_prefix > 3) | |
| last_significant_coeff_y_suffix | ae(v) |
| · · · · · | |

## FIG. 14

BASE LAYER
IMAGE INFORMATION → 

**101**

BASE LAYER
IMAGE CODING UNIT → BASE LAYER
CODED DATA

↓ INFORMATION ON
ORTHOGONAL
TRANSFORM SKIP

**102**

BASE LAYER
ORTHOGONAL TRANSFORM
SKIP BUFFER

↓ INFORMATION ON
ORTHOGONAL
TRANSFORM SKIP

**103**

ENHANCEMENT LAYER
IMAGE INFORMATION → 

ENHANCEMENT LAYER
IMAGE CODING UNIT → ENHANCEMENT LAYER
CODED DATA

100

EP 2 903 287 A1

# FIG. 15

EP 2 903 287 A1

*FIG. 16*

- 111 A/D CONVERTER
- 112 SCREEN REARRANGEMENT BUFFER
- 113 (+/−)
- 114 ORTHOGONAL TRANSFORM UNIT
- 115 QUANTIZATION UNIT
- 116 LOSSLESS CODING UNIT
- 117 ACCUMULATION BUFFER
- 118 INVERSE QUANTIZATION UNIT
- 119 INVERSE ORTHOGONAL TRANSFORM UNIT
- 120 (+)
- 121 LOOP FILTER
- 122 FRAME MEMORY
- 123 (switch)
- 124 INTRA PREDICTION UNIT
- 125 MOTION PREDICTION/COMPENSATION UNIT
- 126 PREDICTED IMAGE SELECTION UNIT
- 127 RATE CONTROL UNIT
- 132 ORTHOGONAL TRANSFORM SKIP UNIT
- 103

# FIG. 17

101

BASE LAYER IMAGE CODING UNIT

114
ORTHOGONAL TRANSFORM UNIT

119
INVERSE ORTHOGONAL TRANSFORM UNIT

116
LOSSLESS CODING UNIT

ORTHOGONAL TRANSFORM COEFFICIENT AND DIFFERENCE VALUE PRIOR TO ORTHOGONAL TRANSFORM

CONTROL SIGNAL

CONTROL SIGNAL

transform_skip_enable_flag

transform_skip_flag

141
SKIP CODING UNIT

142
SKIP DETERMINATION UNIT

131 — ORTHOGONAL TRANSFORM SKIP UNIT

transform_skip_enable_flag

transform_skip_flag

transform_skip_enable_flag BUFFER

transform_skip_flag BUFFER

BASE LAYER ORTHOGONAL TRANSFORM SKIP BUFFER

151

152

102

transform_skip_enable_flag

transform_skip_flag

ORTHOGONAL TRANSFORM SKIP UNIT

transform_skip_enable_flag CONTROL UNIT

transform_skip_flag CONTROL UNIT

161

162

132

CONTROL SIGNAL

CONTROL SIGNAL

CONTROL SIGNAL

CONTROL SIGNAL

114 — ORTHOGONAL TRANSFORM UNIT

INVERSE ORTHOGONAL TRANSFORM UNIT — 119

ENHANCEMENT LAYER IMAGE CODING UNIT

103

# FIG. 18

CODING PROCESS START

SET INITIAL LAYER TO PROCESSING TARGET — S101

REFER TO VPS — S102

PROCESSING TARGET LAYER IS BASE LAYER? — S103

NO →

DETERMINE BASE LAYER — S105

DETERMINE CORRELATION OF TU BASED ON PARAMETER OF VPS — S106

EXECUTE ENHANCEMENT LAYER CODING PROCESS — S107

YES

EXECUTE BASE LAYER CODING PROCESS — S104

ALL LAYERS PROCESSED? — S108

NO

SET SUBSEQUENT LAYER TO PROCESSING TARGET — S109

YES

END

# FIG. 19

BASE LAYER CODING
PROCESS START

S121
CREATE transform_skip_enable_flag

S122
STORE transform_skip_enable_flag

S123
EXECUTE A/D CONVERSION

S124
REARRANGE

S125
EXECUTE INTRA
PREDICTION PROCESS

S126
EXECUTE INTER MOTION
PREDICTION PROCESS

S127
SELECT PREDICTED IMAGE

S128
CALCULATE DIFFERENCE
BETWEEN IMAGE AND
PREDICTED IMAGE

S129
EXECUTE BASE LAYER
ORTHOGONAL TRANSFORM
SKIP CONTROL PROCESS

S130
EXECUTE ORTHOGONAL
TRANSFORM PROCESS

S131
QUANTIZE

S132
INVERSELY QUANTIZE

S133
EXECUTE INVERSE ORTHOGONAL
TRANSFORM PROCESS

S134
ADD PREDICTED IMAGE

S135
EXECUTE LOOP FILTERING

S136
STORE

S137
EXECUTE LOSSLESS
CODING PROCESS

S138
ACCUMULATE

S139
CONTROL RATE

RETURN

# FIG. 20

```
┌─────────────────────────────────────────┐
│ BASE LAYER ORTHOGONAL TRANSFORM          │
│ SKIP CONTROL PROCESS START               │
└─────────────────────────────────────────┘
```

S151 ORTHOGONAL TRANSFORM SKIP IS ENABLED?

— NO →

S152 INCORPORATE ORTHOGONAL TRANSFORM SKIP MODE INTO CANDIDATE MODE

S153 REMOVE ORTHOGONAL TRANSFORM SKIP MODE FROM CANDIDATE MODE

YES

S154 SELECT NOT-PROCESSED CANDIDATE MODE

S155 ORTHOGONAL TRANSFORM SKIP IS TO BE EXECUTED?

— NO →

S157 EXECUTE ORTHOGONAL TRANSFORM

YES

S156 CODE USING DIFFERENCE VALUE PRIOR TO ORTHOGONAL TRANSFORM TO CREATE COST FUNCTION

S158 CODE USING ORTHOGONAL TRANSFORM COEFFICIENT TO CREATE COST FUNCTION

NO — S159 ALL CANDIDATE MODES PROCESSED?

YES

S160 DETERMINE OPTIMUM MODE

S161 CREATE transform_skip_flag

S162 STORE transform_skip_flag

RETURN

# FIG. 21

ORTHOGONAL TRANSFORM PROCESS START

SKIP ORTHOGONAL TRANSFORM? S181

NO

YES

OUTPUT DIFFERENCE VALUE PRIOR TO ORTHOGONAL TRANSFORM S182

EXECUTE ORTHOGONAL TRANSFORM S183

OUTPUT ORTHOGONAL TRANSFORM COEFFICIENT S184

RETURN

## FIG. 22

```
┌──────────────────────────┐
│   ENHANCEMENT LAYER      │
│  CODING PROCESS START    │
└──────────────────────────┘
             │
             ▼ S201
┌──────────────────────────┐
│ OBTAIN transform_skip_enable_flag │
└──────────────────────────┘
             │
             ▼ S202
┌──────────────────────────┐
│  EXECUTE A/D CONVERSION   │
└──────────────────────────┘
             │
             ▼ S203
┌──────────────────────────┐
│        REARRANGE          │
└──────────────────────────┘
             │
             ▼ S204
┌──────────────────────────┐
│      EXECUTE INTRA        │
│   PREDICTION PROCESS      │
└──────────────────────────┘
             │
             ▼ S205
┌──────────────────────────┐
│   EXECUTE INTER MOTION    │
│   PREDICTION PROCESS      │
└──────────────────────────┘
             │
             ▼ S206
┌──────────────────────────┐
│  SELECT PREDICTED IMAGE   │
└──────────────────────────┘
             │
             ▼ S207
┌──────────────────────────┐
│  CALCULATE DIFFERENCE     │
│  BETWEEN IMAGE AND        │
│  PREDICTED IMAGE          │
└──────────────────────────┘
             │
             ▼ S208
┌──────────────────────────┐
│ EXECUTE ENHANCEMENT LAYER │
│  ORTHOGONAL TRANSFORM     │
│  SKIP CONTROL PROCESS     │
└──────────────────────────┘
             │
             ▼ S209
┌──────────────────────────┐
│  EXECUTE ORTHOGONAL       │
│   TRANSFORM PROCESS       │
└──────────────────────────┘
```

```
             ▼ S210
┌──────────────────────────┐
│        QUANTIZE           │
└──────────────────────────┘
             │
             ▼ S211
┌──────────────────────────┐
│   INVERSELY QUANTIZE      │
└──────────────────────────┘
             │
             ▼ S212
┌──────────────────────────┐
│ EXECUTE INVERSE ORTHOGONAL │
│   TRANSFORM PROCESS       │
└──────────────────────────┘
             │
             ▼ S213
┌──────────────────────────┐
│   ADD PREDICTED IMAGE     │
└──────────────────────────┘
             │
             ▼ S214
┌──────────────────────────┐
│  EXECUTE LOOP FILTERING   │
└──────────────────────────┘
             │
             ▼ S215
┌──────────────────────────┐
│         STORE             │
└──────────────────────────┘
             │
             ▼ S216
┌──────────────────────────┐
│   EXECUTE LOSSLESS        │
│   CODING PROCESS          │
└──────────────────────────┘
             │
             ▼ S217
┌──────────────────────────┐
│      ACCUMULATE           │
└──────────────────────────┘
             │
             ▼ S218
┌──────────────────────────┐
│     CONTROL RATE          │
└──────────────────────────┘
             │
             ▼
        ┌──────────┐
        │  RETURN  │
        └──────────┘
```

# FIG. 23

```
        ┌─────────────────────────────┐
        │     ENHANCEMENT LAYER       │
        │ ORTHOGONAL TRANSFORM SKIP   │
        │   CONTROL PROCESS START     │
        └─────────────────────────────┘
                      │
                      ▼
        ┌─────────────────────────────┐  S231
        │    ORTHOGONAL TRANSFORM      ├─────
        │     SKIP IS ENABLED?         │  NO
        └─────────────────────────────┘
                      │ YES
                      ▼
        ┌─────────────────────────────┐  S232
        │ OBTAIN transform_skip_flag   │
        │    OF TU OF BASE LAYER       │
        │       CORRESPONDING          │
        │       TO CURRENT TU          │
        └─────────────────────────────┘
                      │
                      ▼
        ┌─────────────────────────────┐  S233
        │    DETERMINE WHETHER         │
        │      TO EXECUTE              │
        │ ORTHOGONAL TRANSFORM         │
        │  SKIP FOR CURRENT TU         │
        └─────────────────────────────┘
                      │
          NO          ▼               S234
        ┌─────────────────────────────┐
        │    ALL TU PROCESSED?         │
        └─────────────────────────────┘
                      │ YES
```

ENHANCEMENT LAYER ORTHOGONAL TRANSFORM SKIP CONTROL PROCESS START

ORTHOGONAL TRANSFORM SKIP IS ENABLED? S231 NO

YES

OBTAIN transform_skip_flag OF TU OF BASE LAYER CORRESPONDING TO CURRENT TU S232

DETERMINE WHETHER TO EXECUTE ORTHOGONAL TRANSFORM SKIP FOR CURRENT TU S233

NO ALL TU PROCESSED? S234

YES

UPDATE CURRENT TU S235

PROHIBIT ORTHOGONAL TRANSFORM SKIP FOR ALL TU OF CURRENT PICTURE S236

RETURN

## FIG. 24

BASE LAYER
CODED DATA $\rightarrow$

201

BASE LAYER
IMAGE DECODING UNIT $\rightarrow$ BASE LAYER
IMAGE INFORMATION

INFORMATION ON
ORTHOGONAL
TRANSFORM SKIP

202

BASE LAYER
ORTHOGONAL TRANSFORM
SKIP BUFFER

INFORMATION ON
ORTHOGONAL
TRANSFORM SKIP

203

ENHANCEMENT LAYER
CODED DATA $\rightarrow$

ENHANCEMENT LAYER
IMAGE DECODING UNIT $\rightarrow$ ENHANCEMENT LAYER
IMAGE INFORMATION

200

EP 2 903 287 A1

## FIG. 25

EP 2 903 287 A1

## FIG. 26

EP 2 903 287 A1

## FIG. 27

201

BASE LAYER IMAGE DECODING UNIT

212
LOSSLESS
DECODING UNIT

214
INVERSE ORTHOGONAL
TRANSFORM UNIT

transform_skip_enable_flag          transform_skip_flag          CONTROL
SIGNAL

INVERSE ORTHOGONAL TRANSFORM
SKIP CONTROL UNIT                                        241

231 — INVERSE ORTHOGONAL
TRANSFORM SKIP UNIT

transform_skip_enable_flag                    transform_skip_flag

BASE LAYER ORTHOGONAL
TRANSFORM SKIP BUFFER

transform_skip_enable_flag
BUFFER
251

transform_skip_flag
BUFFER
252

202

transform_skip_enable_flag          transform_skip_flag

INVERSE
ORTHOGONAL
TRANSFORM
SKIP UNIT

transform_skip_enable_flag
CONTROL UNIT
261

transform_skip_flag
CONTROL UNIT
262

232

CONTROL
SIGNAL

CONTROL
SIGNAL

INVERSE ORTHOGONAL
TRANSFORM UNIT          214

ENHANCEMENT LAYER IMAGE DECODING UNIT

203

# FIG. 28

```
        ( DECODING PROCESS START )
                    │
                    ▼
        ┌──────────────────────┐ S301
        │  SET INITIAL LAYER TO │
        │   PROCESSING TARGET   │
        └──────────────────────┘
                    │
                    ▼
        ┌──────────────────────┐ S302
        │      OBTAIN VPS       │
        └──────────────────────┘
                    │
                    ▼              S303
        ⟨  PROCESSING TARGET  ⟩───────────┐
        ⟨ LAYER IS BASE LAYER? ⟩   NO     │
                    │                      │
                   YES                     │
                    │  S304                ▼            S305
        ┌──────────────────────┐   ┌──────────────────────┐
        │  EXECUTE BASE LAYER   │   │  DETERMINE BASE LAYER │
        │   DECODING PROCESS    │   └──────────────────────┘
        └──────────────────────┘              │
                    │                          ▼            S306
                    │              ┌──────────────────────┐
                    │              │ DETERMINE CORRELATION │
                    │              │    OF TU BASED ON     │
                    │              │   PARAMETER OF VPS    │
                    │              └──────────────────────┘
                    │                          │
                    │                          ▼            S307
                    │              ┌──────────────────────┐
                    │              │  EXECUTE ENHANCEMENT  │
                    │              │ LAYER DECODING PROCESS │
                    │              └──────────────────────┘
                    │                          │
                    ▼◄─────────────────────────┘
          NO  ⟨   ALL LAYERS   ⟩ S308
        ┌──────⟨   PROCESSED?   ⟩
        │           │
        ▼          YES
 ┌──────────────┐   │
 │SET SUBSEQUENT│S309▼
 │   LAYER TO   │ ( END )
 │  PROCESSING  │
 │    TARGET    │
 └──────────────┘
```

## FIG. 29

```
      ( BASE LAYER DECODING )
      (   PROCESS START     )
                │
                ▼
┌──────────────────────────────────┐
│        ACCUMULATE IMAGE          │ S321
└──────────────────────────────────┘
                │
                ▼
┌──────────────────────────────────┐
│  EXECUTE LOSSLESS DECODING PROCESS│ S322
└──────────────────────────────────┘
                │
                ▼
┌──────────────────────────────────┐
│   OBTAIN transform_skip_enable_flag│ S323
└──────────────────────────────────┘
                │
                ▼
┌──────────────────────────────────┐
│   STORE transform_skip_enable_flag│ S324
└──────────────────────────────────┘
                │
                ▼
┌──────────────────────────────────┐
│        INVERSELY QUANTIZE         │ S325
└──────────────────────────────────┘
                │
                ▼
┌──────────────────────────────────┐
│ EXECUTE BASE LAYER INVERSE ORTHOGONAL│ S326
│   TRANSFORM SKIP CONTROL PROCESS  │
└──────────────────────────────────┘
                │
                ▼
┌──────────────────────────────────┐
│   EXECUTE INVERSE ORTHOGONAL      │ S327
│      TRANSFORM PROCESS            │
└──────────────────────────────────┘
                │
                ▼
┌──────────────────────────────────┐
│    EXECUTE PREDICTION PROCESS     │ S328
└──────────────────────────────────┘
                │
                ▼
┌──────────────────────────────────┐
│        ADD PREDICTED IMAGE        │ S329
└──────────────────────────────────┘
                │
                ▼
┌──────────────────────────────────┐
│      EXECUTE LOOP FILTERING       │ S330
└──────────────────────────────────┘
                │
                ▼
┌──────────────────────────────────┐
│           REARRANGE              │ S331
└──────────────────────────────────┘
                │
                ▼
┌──────────────────────────────────┐
│     EXECUTE D/A CONVERSION        │ S332
└──────────────────────────────────┘
                │
                ▼
┌──────────────────────────────────┐
│            STORE                 │ S333
└──────────────────────────────────┘
                │
                ▼
          (    RETURN    )
```

# FIG. 30

BASE LAYER INVERSE
ORTHOGONAL TRANSFORM SKIP
CONTROL PROCESS START

INVERSE ORTHOGONAL
TRANSFORM SKIP IS ENABLED? — S351
NO

YES

OBTAIN transform_skip_flag
OF CURRENT TU — S352

STORE transform_skip_flag — S353

DETERMINE WHETHER TO
EXECUTE INVERSE
ORTHOGONAL TRANSFORM
SKIP FOR CURRENT TU — S354

NO ← ALL TU PROCESSED? — S355

YES

UPDATE
CURRENT TU — S356

PROHIBIT INVERSE
ORTHOGONAL TRANSFORM
SKIP FOR ALL TU OF
CURRENT PICTURE — S357

RETURN

# FIG. 31

```
        ┌──────────────────────────┐
        │   INVERSE ORTHOGONAL      │
        │ TRANSFORM PROCESS START   │
        └──────────────────────────┘
                     │
                     ▼
           ╱──────────────────╲  S371
          ╱    SKIP INVERSE     ╲
          ╲ ORTHOGONAL TRANSFORM? ╱──── NO ──────────┐
           ╲──────────────────╱                      │
                     │                                │
                    YES                               ▼
                     │                    ┌──────────────────────┐ S372
                     │                    │  EXECUTE INVERSE      │
                     │                    │ ORTHOGONAL TRANSFORM  │
                     │                    └──────────────────────┘
                     │                                │
                     ▼◄───────────────────────────────┘
              ┌──────────────┐
              │    RETURN     │
              └──────────────┘
```

# FIG. 32

```
        ┌─────────────────────────────┐
        │   ENHANCEMENT LAYER         │
        │ DECODING PROCESS START      │
        └─────────────────────────────┘
                      │
                      ▼
        ┌─────────────────────────────┐
        │    ACCUMULATE IMAGE         │ S401
        └─────────────────────────────┘
                      │
                      ▼
        ┌─────────────────────────────┐
        │ EXECUTE LOSSLESS DECODING   │ S402
        │         PROCESS             │
        └─────────────────────────────┘
                      │
                      ▼
        ┌─────────────────────────────┐
        │ OBTAIN transform_skip_      │ S403
        │        enable_flag          │
        └─────────────────────────────┘
                      │
                      ▼
        ┌─────────────────────────────┐
        │    INVERSELY QUANTIZE       │ S404
        └─────────────────────────────┘
                      │
                      ▼
        ┌─────────────────────────────┐
        │ EXECUTE ENHANCEMENT LAYER   │ S405
        │ INVERSE ORTHOGONAL          │
        │ TRANSFORM SKIP CONTROL      │
        │ PROCESS                     │
        └─────────────────────────────┘
                      │
                      ▼
        ┌─────────────────────────────┐
        │ EXECUTE INVERSE ORTHOGONAL  │ S406
        │   TRANSFORM PROCESS         │
        └─────────────────────────────┘
                      │
                      ▼
        ┌─────────────────────────────┐
        │ EXECUTE PREDICTION PROCESS  │ S407
        └─────────────────────────────┘
                      │
                      ▼
        ┌─────────────────────────────┐
        │    ADD PREDICTED IMAGE      │ S408
        └─────────────────────────────┘
                      │
                      ▼
        ┌─────────────────────────────┐
        │   EXECUTE LOOP FILTERING    │ S409
        └─────────────────────────────┘
                      │
                      ▼
        ┌─────────────────────────────┐
        │        REARRANGE            │ S410
        └─────────────────────────────┘
                      │
                      ▼
        ┌─────────────────────────────┐
        │   EXECUTE D/A CONVERSION    │ S411
        └─────────────────────────────┘
                      │
                      ▼
        ┌─────────────────────────────┐
        │          STORE              │ S412
        └─────────────────────────────┘
                      │
                      ▼
                 ┌──────────┐
                 │  RETURN  │
                 └──────────┘
```

# FIG. 33

```
           ┌─────────────────────────────────┐
          ( ENHANCEMENT LAYER INVERSE          )
          ( ORTHOGONAL TRANSFORM SKIP          )
          ( CONTROL PROCESS START              )
           └─────────────────────────────────┘
                          │
                          ▼
              ╱─────────────────────╲  S431
             ╱  INVERSE ORTHOGONAL    ╲
             ╲ TRANSFORM SKIP IS ENABLED? ╱────── NO ──────┐
              ╲─────────────────────╱                      │
                      │ YES                                 │
    ┌──────────────►  │                                     │
    │                 ▼                                     │
    │      ┌────────────────────────┐ S432                  │
    │      │ OBTAIN transform_skip_flag                     │
    │      │ OF TU OF BASE LAYER    │                       │
    │      │ CORRESPONDING          │                       │
    │      │ TO CURRENT TU          │                       │
    │      └────────────────────────┘                       │
    │                 │                                     │
    │                 ▼                                     │
    │      ┌────────────────────────┐ S433                  │
    │      │ DETERMINE WHETHER TO   │                       │
    │      │ EXECUTE INVERSE        │                       │
    │      │ ORTHOGONAL TRANSFORM   │                       │
    │      │ SKIP FOR CURRENT TU    │                       │
    │      └────────────────────────┘                       │
    │                 │                                     │
    │                 ▼                                     │
    │        ╱─────────────────╲ S434                       │
    │   NO  ╱                   ╲                           │
    │ ◄────╱  ALL TU PROCESSED?  ╲                          │
    │      ╲───────────────────╱                            │
    │                 │ YES                                 │
    │                 │                                     ▼
    │  ┌──────────┐ S435              ┌───────────────────────┐ S436
    └──│ UPDATE   │                   │ PROHIBIT INVERSE      │
       │ CURRENT TU│                  │ ORTHOGONAL TRANSFORM  │
       └──────────┘                   │ SKIP FOR ALL TU OF    │
                                      │ CURRENT PICTURE       │
                          │           └───────────────────────┘
                          ▼                    │
                          ◄────────────────────┘
                          │
                          ▼
                   ( RETURN )
```

*FIG. 34*

FIG. 35

EP 2 903 287 A1

# FIG. 36

EP 2 903 287 A1

## FIG. 37

# FIG. 38

## FIG. 39

EP 2 903 287 A1

EP 2 903 287 A1

# FIG. 40

FIG. 41

EP 2 903 287 A1

FIG. 42

FIG. 43

1211

1201  IMAGING DEVICE

1202  SCALABLE CODED DATA STORAGE DEVICE

BL+EL

1221

BL+EL  ~1221 (ATTENTION CONDITION)

BL  ~1222 (NORMAL CONDITION)

1200

EP 2 903 287 A1

## INTERNATIONAL SEARCH REPORT

| International application No. |
|---|
| PCT/JP2013/075444 |

A.  CLASSIFICATION OF SUBJECT MATTER
*H04N19/70(2014.01)i, H04N19/30(2014.01)i*

According to International Patent Classification (IPC) or to both national classification and IPC

B.  FIELDS SEARCHED

Minimum documentation searched (classification system followed by classification symbols)
H04N7/24-7/68

Documentation searched other than minimum documentation to the extent that such documents are included in the fields searched
Jitsuyo Shinan Koho        1922–1996     Jitsuyo Shinan Toroku Koho     1996–2013
Kokai Jitsuyo Shinan Koho   1971–2013     Toroku Jitsuyo Shinan Koho     1994–2013

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 6-209468 A  (Sony Corp.), 26 July 1994 (26.07.1994), abstract (Family: none) | 1-20 |
| Y | Cuiling Lan, Jizheng Xu, Gary J. Sullivan, Feng Wu, "Intra transform skipping", Joint Collaborative Team on Video Coding (JCT-VC) of ITU-T SG 16 WP 3 and ISO/IEC JTC 1/SC 29/WG 11 9th Meeting: Geneva, CH, 27 April - 7 May 2012, [JCTVC-I0408] | 1-20 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 December, 2013 (03.12.13) | 17 December, 2013 (17.12.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2013/075444 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-530926 A (Thomson Licensing), 07 August 2008 (07.08.2008), entire text; all drawings & US 2008/0267291 A1 & EP 1694074 A1 & WO 2006/087314 A1 & KR 10-2007-0103459 A & CN 101073265 A | 1-20 |

Form PCT/ISA/210 (continuation of second sheet) (July 2009)

**REFERENCES CITED IN THE DESCRIPTION**

**Non-patent literature cited in the description**

- **BENJAMIN BROSS ; WOO-JIN HAN ; JENS-RAINER OHM ; GARY J. SULLIVAN ; THOMAS WIEGAND.** High efficiency video coding (HEVC) text specification draft 6. *JCTVC-H1003 ver21, Joint Collaborative Team on Video Coding (JCT-VC)of ITU-T SG16 WP3 and ISO/IEC JTC1/SC29/WG117th Meeting,* 21 November 2011

- **CUILING LAN ; JIZHENG XU ; GARY J. SULLIVAN ; FENG WU.** Intra transform skipping. *JCTVC-I0408, Joint Collaborative Team on Video Coding (JCT-VC)of ITU-T SG 16 WP 3 and ISO/IEC JTC 1/SC 29/WG 119th Meeting,* 27 April 2012